# EUROPEAN PATENT SPECIFICATION

(11) **EP 2 007 587 B1**
(45) Date of publication and mention of the grant of the patent: **24.07.2013**
(21) Application number: 07742335.8
(22) Date of filing: 18.04.2007
(51) Int. Cl.: B41M 5/00, B41J 2/01, B41J 2/045, B41J 2/055, B41M 5/50, B41M 5/52, C09D 11/00

(54) **INKJET RECORDING METHOD**
TINTENSTRAHLAUFZEICHNUNGSVERFAHREN
PROCÉDÉ D'IMPRESSION À JET D'ENCRE

(30) Priority: 18.04.2006 JP 2006114709; 09.11.2006 JP 2006303588
(43) Date of publication of application: 31.12.2008
(73) Proprietor: Ricoh Company, Ltd., Tokyo 143-8555 (JP)
(72) Inventor: OHSHIMA, Tohru, Atsugi-shi Kanagawa 243-0816 (JP); MOROHOSHI, Naoya, Numazu-shi Shizuoka 410-0001 (JP); NAGAI, Kiyofumi, Machida-shi Tokyo 194-0044 (JP)
(74) Representative: Barz, Peter
(86) International application number: PCT/JP2007/058900
(87) International publication number: WO 2007/119888

(56) References cited:
- EP-A1- 1 243 625
- EP-A1- 1 437 227
- WO-A1-02/096657
- JP-A- 2000 127 609
- JP-A- 2002 069 346
- JP-A- 2003 020 424
- JP-A- 2003 327 880
- JP-A- 2004 115 649
- JP-A- 2004 115 708
- JP-A- 2004 225 018
- JP-A- 2006 088 387
- US-A1- 2004 261 964

## Description

### TECHNICAL FIELD

The present invention relates to an inkjet recording method, wherein high-quality images comparable to those achieved by commercial printing like offset printing can be realized by inkjet printing.

### BACKGROUND ART

Inkjet recording is known as an excellent recording method capable of application to a relatively wide variety of recording media, with extensive studies and development made on recording apparatus, recording methods and recording materials.

In recent years the widespread use of printers and increase in their resolution and print speed have made it easy to obtain images with quality comparable to that of silver halide prints. This progress is due primarily to advances in printers and as well to various improvements of inks and recording media for increased image quality. In particular, notable advances have been achieved in media technology, allowing development of media designed to offer a gloss with increased ink absorbability and absorption amount. Thus, current media have been developed to a level that outperforms conventional commercial prints in terms of glossiness and quality. These inkjet media can be broadly classified into two types: swelling type and void type. Recently, void type-recording media are used in most cases for their excellent ink-drying speed.

As disclosed in Patent Literatures 1 and 2, among such void type-ink recording media, void type-media are the mainstay in which an ink absorbing layer with voids for receiving ink is provided on a support and a porous glossy layer is further provided thereon as needed. These ink recording media are obtained by applying on a support a coating solution containing dispersed silica or alumina hydrate particles to form one or more layers thereon and where necessary, further providing on top of the layer a glossy layer abundantly containing colloidal silica. This characteristic configuration realizes excellent ink absorbability and fine-line reproduction, and therefore is favored by consumer-directed picture printing. Materials for this type of recording media, however, are extremely expensive and their production process is complicated, making them much more expensive than other coated papers for popular general-purpose commercial printing. Thus, although these recording media can record high-quality images, the current situation is that they are used poorly in areas of commercial printing where inexpensive, large-scale printing is required, such as printing of leaflets, catalogues and brochures, which needs to be carried out as cost-efficiently as possible. Various efforts have been made to minimize paper costs. However, since fillers that constitute the ink-absorption layer (ink-receiving layer) of an inkjet media require materials capable of maintaining the layer's transparency and of offering a large oil absorption (specific surface area), it cannot avoid the need to use a large amount of particular expensive filler such as silica, alumina hydrate or colloidal silica, which makes it difficult to lower the media's price.

Meanwhile, there are inexpensive coated papers like those designed for commercial and publication printing, which the papers use as material for the coated layer a large amount of inexpensive filler with a high opacifying property such as calcium carbonate or kaolin. However, when such paper sheets are used as inkjet media, it results in ink spread on paper due to insufficient ink absorption and in unfavorable covering of the coloring material absorbed in the ink absorbing layer by filler with a high opacifying property like kaolin, resulting in failure to provide sufficient image density. In addition, when dye ink is applied onto such a paper sheet by inkjet printing, density originates only from coloring material present around the surface layer no matter how large the amount of the dye ink applied is, thus resulting in a low-density, low-contrast image overall. For this reason, it has been a general conception that coated paper sheets of this sort are not suitable for inkjet printing.

Meanwhile, in recent years, pigment inks designed for inkjet recording have received attention. Because pigments are insoluble in water, it is common to use pigments that are broken into fine particles that are subsequently dispersed in solvent. For such pigment inks for inkjet recording, pigment inks are mainly used in which pigment is dispersed in water for safety purposes. Water-based pigment inks, however, generally have various shortcomings, e.g., they are more likely undergo aggregation and precipitation than dye inks; various dispersion conditions and additives are required for making their long term-storage stability comparable to that of dye inks; they are difficult to be employed in thermal heads due to the dispersion stabilizer that may lead to cogation; and the coloring ranges of their color materials are often narrower than those of dyes. However, pigment dyes have received remarkable attention in terms of print quality (high black density), storage stability, and post-printing water resistance. Because the coloring materials used in these pigment inks are similar to those of inks for general commercial printing, the feel and texture of printed matter composed of pigment ink can be considered to be as close as those of commercial prints. However, when conventional pigment ink is used for printing on a coated paper sheet designed for commercial and publication printing, it still results in ink spread on paper due to poor ink absorption and/or in pigment fixation failure after dried. Thus, the current situation is that pigment inks can be used only for printing on media with a high ink absorbability such as standard paper and inkjet paper, as is conventional. This is due to the fact the concept of pigment-based inkjet image formation is the same as that of dye-based inkjet image formation, i.e., pigments have been merely considered as dyes that offer high weather resistance; therefore, pigment's properties are not taken into consideration at all.

Extensive studies and developments have been made on pigment ink-applicable media, which however only aim to provide as high a glossiness as possible while maximizing the ink absorbability, as seen in Patent Literature 3. The current situation is that only a method of providing a high gloss while increasing the media's surface porosity has been pursued as a direction extension of the conventional technology using expensive materials.

Patent Literature 4 is directed to provide an inkjet recording sheet that offers, when used in inkjet printers, excellent ink absorbability, has no fuzz on its surface and free from cockling, and discloses an inkjet recording sheet in which at least one ink receiving layer - a synthetic fiber-impregnated sheet in which natural pulp is impregnated with synthetic fiber - is provided on a substrate, wherein the surface of the substrate over which ink receiving layer(s), are to be provided is subjected to filler treatment and wherein the air permeability of the substrate measured in accordance with JIS P8117 is 10-100 sec. The air permeability of substrate is specified so as to avoid infiltration of the coating solution for ink receiving layer into the substrate upon preparation of ink receiving layer.

Patent Literature 5 is directed to provide an inkjet recording sheet that has a high gloss and excels in image definition and inkjet printability, and discloses a cast-type inkjet recording sheet composed of an air-permeable substrate, at least one inkjet recording layer which contains a pigment and an adhesive and which is provided on the substrate, a cast coated layer obtained by applying onto the inkjet recording layer a coating solution containing a pigment and an adhesive, by pressing it against a heated mirror-finished drum while the coating solution is in either wetted condition or re-wetting condition, and by drying the solution, wherein the 20° glossiness of the cast coated surface as measured in accordance with JIS-Z-8741 is 35% or more, the image definition as measured at an angle of 60° in accordance with JIS-K-7105 is 55% or more, and the Oken air permeability is 60-200 sec/100cc.

Patent Literature 6 is directed to achieve high-quality, high-density inkjet printing on general commercially available print sheets rather than inkjet print sheets while avoiding ink smear, and discloses a technology wherein a water-based ink is prepared which is composed of colored resin particles dispersed in an aqueous medium in which pigment particles are covered with coat formable resin, preferably with coat formable resin containing acidic groups at least some of which are neutralized by basic groups, the water-based ink having a viscosity of 25-60 mN/m, and the water-based ink is applied onto a paper sheet that preferably has an air permeability of 1,000 sec and that preferably has a basis weight of 100 g/m² by inkjet recording. As with the present invention, this technology employs the Parker Print-Surf for the measurement of air permeability, but air permeability should be expressed in units of ml/min, not second. Thus, it seems unlikely that values of air permeability in this Patent Literature were obtained by actual measurements. In addition, this Patent Literature discloses an ink in which pigment particles are covered with coat-formable resin, but the ink of the present invention may be one in which pigment particles are not covered with resin.

Patent Literature 7 is directed to provide an inkjet recording sheet that excels in ink absorbability, provides high-quality inkjet images, and offers excellent water resistance and weather resistance even when placed in outdoors, and a method of producing recorded matter using the inkjet recording sheet, discloses an inkjet recording sheet in which one or more ink receiving layers are provided over a substrate and the outermost one is substantially formed of fine particles of thermoplastic organic polymer, wherein the Gurley air permeability of the recording sheet defined in JIS P8117 is 55-5,000 sec/100ml, and describes that the substrate is made of paper consisting primarily of wood pulp or formed of a porous resin film made of fine inorganic particle-containing thermoplastic resin and that the substrate has an air permeability of 50-5,000 sec/100ml. The invention disclosed in this Patent Literature, however, completely differs in purpose from the present invention because the former invention aims to achieve the foregoing purpose (i.e., to impart weather resistance to the inkjet sheet having a specific range of air permeability) by heating, after inkjet printing on the sheet, the layer of the fine particles of thermoplastic organic polymer to make it solid. This technology discloses that it is necessary to prepare a substrate with a high air permeability in order to prevent occurrence of blisters (balloons as seen in a baked rice cake) in the ink receiving layer due to evaporation of moisture in the substrate.
Patent Literature 8 is directed to an ink-jet recording process which conducts recording by imparting ink onto the surface of a recording medium according to recording information, where the recording medium has a base material and a porous ink receiving layer thereon containing inorganic particles having a BET specific surface area of at least 150 m²/g, and the ink contains a polymer emulsion having a water-insoluble or hardly-soluble colorant contained in polymer fine particles and at least one wetting agent, 8-11C polyol or glycol ether, anionic or nonionic surfactant, water-soluble organic solvent, and water; and has a surface tension of 40 mN/m or less at 25°C. This process can provide high-grade images excellent in ink absorbing and fixing properties and satisfactory in color tone, produce images excellent in image fastness such as water resistance and light resistance, and implement ink-jet recording excellent in storage stability and discharge stability and free from head clogging at printing.

The present inventor has already proposed an improved technology relating to a method of recording a water-based pigment ink with a specific surface tension onto a recording media with a low-water absorption capability (see Japanese Patent Application No. 2006-14104).
[Patent Literature 1] Japanese Patent Application Laid-Open (JP-A) No. 2005-212327
[Patent Literature 2] JP-A No. 11-078225
[Patent Literature 3] JP-A No. 2001-347749
[Patent Literature 4] JP-A No. 2004-243603
[Patent Literature 5] JP-A No. 2004-195795
[Patent Literature 6] JP-A No. 2002-69346
[Patent Literature 7] JP-A No. 2000-127609
[Patent Literature 8] EP-A No.1 437 227

### DISCLOSURE OF INVENTION

The present invention has been accomplished in order to solve the problems in prior art. That is, an object of the present invention is to provide an ideal inkjet recording method capable of full-color printing and of inexpensively providing prints that have a texture similar to those of commercial prints and that offer excellent print quality, image density, image fidelity and smear resistance, by combining the recording media and inkjet ink of the present invention.

The foregoing problems in the prior art can be solved by the present invention set forth in the independent claim 1. Further embodiments are set forth in the dependent claims.

According to the present invention, it is possible to provide a low-cost recording method that offers excellent print quality upon inkjet recording. Moreover, commercial print sheets that meet a particular requirement set forth in the present invention can provide satisfactory prints when recorded by inkjet recording that meets a particular requirement set forth in the present invention.

### BRIEF DESCRIPTION OF DRAWINGS

FIG. 1 is a schematic view showing one example of an ink cartridge.
FIG. 2 is a schematic view the ink cartridge in FIG. 1, including a case (outer package).
FIG. 3 is a perspective illustrative view showing an ink cartridge loading section of an inkjet recording apparatus, with the cover for the ink cartridge loading section opened.
FIG. 4 is a schematic configuration diagram illustrating an entire configuration of the inkjet recording apparatus.
FIG. 5 is a schematic enlarged view showing one example of an inkjet head.
FIG. 6 is an element enlarged view showing one example of an inkjet head.
FIG. 7 is a substantial part enlarged sectional view showing one example of an inkjet head.
FIG. 8 a schematic configuration diagram illustrating an entire configuration an inkjet recording apparatus.
FIG. 9 is a block diagram showing a configuration of an inkjet recording apparatus.
FIG. 10 is a flowchart of image processing carried out by the inkjet recording apparatus.
FIG. 11 shows an example of a combination table of inks (Second Table).
FIG. 12 shows another example of a combination table of inks (Second Table).
FIG. 13 shows an example of a combination table of inks (Second Table).
FIG. 14 shows an operation of multi-pass (4-pass) recording.
FIG. 15 is a diagram showing rows of recording elements.
FIG. 16 is another diagram showing rows of recording elements.
FIG. 17 is still another diagram showing rows of recording elements.
FIG. 18 shows an example of combinations of recoding elements.
FIG. 19 shows an example of a combination table of inks (First Table).
FIG. 20 is a plot of glossiness vs. air permeability.

### BEST MODE FOR CARRYING OUT THE INVENTION

Hereinafter, the inkjet recording method of the present invention will be described in detail.

As noted above, current research focuses on realization of a porous, highly transparent ink absorbing layer in current dominating inkjet sheets, but this requires extensive use of highly transparent materials with large specific surfaces. Thus, in the present circumstances, there is no choice but to rely on expensive materials such as silica and alumina hydrate and on elaborate production process, which without question results in high printing costs and makes large-scale printing difficult to achieve.

To overcome this problem the present inventor has conducted extensive studies to provide a more inexpensive inkjet recording method, and has invented a low-cost image forming method based on a novel design concept by combining a pigment ink with a ultrahigh penetration capability and a media with a low ink absorbing rate as opposed to the conventional one. Furthermore, this novel and excellent image forming method can offer more excellent performance when used under a certain printing condition.

More specifically, it has been established that the use of a small amount of ultra-penetrative pigment ink for printing on a recording media with less ink absorbability (permeability) - a recording media designed to prevent penetration of ink pigment as far as possible - causes the ink solvent (i.e., water or organic solvent) to selectively permeate the media's substrate, allowing only the coloring material (pigment) in the ink to remain efficiently over the media surface, whereby even a small amount of ink can establish both sufficient image density and sufficient ink drying speed at the same time. Causing as many coloring material particles of ink to remain on the media surface as possible eliminates the need to necessarily make the layer transparent, a feature required in conventional inkjet media, thereby giving much wider latitude in choosing materials for coated layers. The present inventor has found out that ink absorbability is dependent on media's air permeability, thus completing the present invention. More specifically, a low-cost image forming method that the present invention intends to provide is realized by combining a media which has a specific air permeability range and whose outermost layer is nearly free from silica and/or alumina hydrate - materials with higher absorbability.

The media according to the present invention with less ink absorbability is realized by preparing a substrate, or paper substrate, consisting primarily of cellulose pulp and providing (e.g., by coating method) thereon a pigment penetration preventing layer (barrier layer). By allowing the barrier layer to have the same appearance as print sheets, it is possible to provide printed matter with a texture similar to those of general commercial prints.

The function required by the barrier layer in the present invention is to separate pigment from solvent in ink and to allow only the solvent to permeate the substrate. It is desirable for the barrier layer to have a microscopic structure, e.g., a porous structure in order to achieved this function. The infiltration rate of the ink's solvent component decreases in cases where there are no pores in the barrier layer. Note, however, that too many pores result in degradation in performance of the pigment separation function, which then leads to reduction in image density and/or causes pigment particles on the media surface to migrate inside the media with time after printed, leading to color change.

The porous structure in the coated layer, as typified by pores, is closely related to the liquid absorbability, and coated layers with large pore volumes are known to excel in ink absorbability. Coated layers used in conventional inkjet media and general high-quality papers are known to have large pore volumes, whereas coated layers used in coated papers for general commercial printing and publication printing are known to have relatively small pore volumes. While the conventional inkjet printing scheme requires media with large pore volumes, the barrier layer in the media of the present invention requires relatively small pore volume.

It has been established that, by controlling this pore volume, it is possible to control the rate at which the coloring material and solvent in ink are separated and the distribution of the coloring material in media's thickness, and that an appropriate, simple measure of the pore volume of barrier layer is the media's air permeability measured using Parker Print-Surf.

Air permeability is a measure that indicates that articles with large pore volumes are more permeable to gas with lesser barrier (resistance) and articles with small pore volumes offer great resistance against permeation of gas, and that the small pore volume articles, of course, exhibit low liquid absorbability and low permeability and excels in ink barrier property.

In general, the Parker Print-Surf (PPS) is an instrument to measure the surface roughness of paper under a certain pressure adopted in an printing operation, but by replacing its reading head by one designed for air permeability measurement, measurement of air permeability is made possible, and instruments for air permeability measurement are available from commercial vendors. Although Gurley Method is generally available for the measurement of air permeability of paper, this method requires several thousands of seconds for the measurement of the air permeability of the barrier layer in the present invention. In addition, Gurley Method lacks reliability for low-air permeability paper. For these reasons, it is desirable in the present invention to use the Parker Print-Surf for the measurement of air permeability.

The air permeability of media measured using the Parker Print-Surf is a combination of the air permeability of coated layer and the air permeability of base paper. It is assumed that the media of the present invention uses a substrate made from cellulose pulp. The air permeability of substrate is very large compared to that of coated layer, and the air permeability of the barrier layer (coated layer) in the present invention is very small compared to that of the substrate. Accordingly, the air permeability measured with a Parker Print-Surf may be considered to be equivalent to the air permeability of barrier layer since the air permeability of base paper is negligible.

More specifically, the air permeability of the barrier layer of the media of the present invention is measured using a Parker Print-Surf available from Messmer Instruments Inc., or Lorentzen & Wettre. The backing pressure during the measurement is 1,969 kPa.

As a result of studies to determine the barrier layer's air permeability suitable in the present invention, it has been established that the media's air permeability set to not greater than 100 ml/min resulted in sufficient capability of separating coloring material and solvent from each other and in high-quality images. When a small amount of ink discharged from nozzles is applied onto a surface of media having an air permeability falling within this range, the ink spread over the media surface, immediately separating into a solid component (e.g., coloring material and resin) and a carrier component (e.g., water and ink solvent) followed by rapid permeation of a small amount of carrier component into the media. The solid component remained on the media surface gradually forms a film upon rapid viscosity increase, and when the film is dried, a coloring layer is formed that has a flat glossy surface.

This air permeability can be controlled for instance by changing the pigment-to-resin ratio.

In the case of conventional inkjet media, those with a high air permeability are generally advantageous in terms of ink absorption performance. Even when some conventional inkjet media have a low air permeability as measured in a manner different from that adopted in the present invention, these inkjet media should have a high air permeability when measured in accordance with the procedure used in the present invention. Moreover, such a low air permeability originates from the substrate itself in most cases; the substrate is made less permeable to air in order to (1) ensure that an ink receiving layer is deposited onto the substrate by preventing permeation of the ink receiving layer components into the substrate and (2) to prevent oxidization of coloring material by (oxidative) gas entered from the backside of the media. Thus, this low air permeability is not achieved by using a combination of a specific ink and a specific media, which the combination is disclosed in the present invention.

### <Deposited Ink Amount>

It is preferable in the present invention that the total ink amount be strictly restricted in order to prevent permeation of the coloring material in ink into the media for efficient localization of coloring material around the media surface, and to ensure ink drying speed. Total ink amount is an important parameter for image formation and refers to an amount of ink per unit area used to form a solid image with a maximum density. According to the present invention, it is made possible to print an image of uniform density with less beading and bleeding even on a media with poor ink absorbability by specifying the total ink amount. Meanwhile, when an ink is used in an amount that exceeds the total ink amount specified in the present invention as in conventional inkjet recording, it results in simultaneous permeation of ink pigment and ink solvent into the media because the barrier layer cannot separate pigment from solvent completely, and/or results in slow ink solvent permeation that significantly reduces the ink drying speed. Accordingly, high-quality images may not be obtained.

More specifically, when the ink of the present invention is used, the maximum deposited ink amount (maximum total ink amount) upon image formation is 15 g/m². Image formation at an deposited ink amount of not more than 15 g/m² results in images of significantly high quality, free from beading and bleeding. It was also found out that the desirable range is 12 g/m² or less. The reason for specifying the upper limit is that the combination of the pigment ink and media of the present invention differs from the combination of a conventional dye ink and a conventional inkjet media in that the coloring material deposited onto the media surface in the present invention, and therefore, it is only necessary for the coloring material to be deposited in an amount sufficient to cover the media surface and thus excessive coloring material is needless and, even when the highly penetrative ink of the present invention is used, it results in unfavorable interference of the remaining ink solvent with adjacent dots, thereby causing beading and bleeding.

In a case where a maximum deposited ink amount value is set high as in conventional inkjet recording even when using the ink of the present invention, a large amount of ink is consumed in printing of solid areas and shadow areas, and therefore, the media's pigment separation capability exceeds its limit, resulting ink smear and significant reduction in ink drying speed.

Even when high image density is required in conventional inkjet recording, the total amount of the ink of the present invention required for image formation can be extremely small compared to that of conventional ink required. In addition, in contrast to conventional inkjet media, the lesser the media's ink absorbability, the more likely it is that the coloring material uniformly spreads over the media surface. In other words, the ink forms a light coat over the media surface; therefore, even when the media offers poor ink absorbability, the ink can be readily dried and bleeding and beading are less likely to occur. The amount of carrier that permeated the media can be readily adjusted by controlling the amounts of a penetrating agent (EHD) and fluorine-based surfactant (e.g., FS300) to be added.

By reducing the total amount of the ink required for printing, it is made possible to make the ink cartridge, and therefore the printer to which it is mounted, smaller in size than conventional ones. If the size of the ink cartridge is the same as the conventional one, the frequency of replacement of the ink cartridge can be reduced and low-cost printing is made possible. Basically, the smaller the total amount of the ink is, the greater the barrier layer's pigment separation capability, but, too small an ink amount leads to too small dot diameter in printed matter. Thus it is desirable to determine the total ink amount within this range depending on the type of image to be printed.

Herein the ink total amount is measured by gravimetric method. Specifically, a solid image that measures 5 cm x 20 cm is printed on SuperFine paper (SEIKO EPSON Corp.), a inkjet paper sheet, at a maximum image density. Immediately after printing, the weight of the paper sheet is measured, the weight of the sheet before printing was subtracted from weight of the printed paper sheet, and the resulting value is multiplied by 100. This value is defined as the total ink amount.

### <Ink Fixing Agent>

It is preferable for the pigment ink of the present invention to contain an ink fixing agent. The ink fixing agent serves to maintain the binding force between the pigment material and media surface and among pigment particles to a certain level or more. When no ink fixing agent is added, the pigment particles tend to fall off the media after printed. For this reason, such an ink fixing agent should be added in cases where greater image fidelity is needed. This ink fixing agent may be of low-molecular weight, but is preferably formed of resin emulsion or energy-curable resin such as ultraviolet light curable resin.

### <Surface Tension of Ink>

The ink of the present invention should offer high penetration capability and requires a surface tension of 25 mN/m or less to achieve this. A surface tension of greater than 25 mN/m results in failure to obtain high-quality images because ink slowly permeates the media and causes bleeding. The lower the surface tension, the greater the capability of separation of the pigment from solvent; thus, lower surface tension is more preferable. The surface tension of ink can also be readily adjusted by adjusting the amounts of a penetrating agent (EHD) and fluorine-based surfactant (e.g., FS300) to be added.

The highly penetrative ink of the present invention can also be applied to conventional void-type inkjet media. Note, however, that since the ink penetrates much faster in such conventional media than in the recording media of the present invention, after ink droplets are jetted on the media surface, the ink solvent permeates the media surface before the wet ink dots spread over the media surface, making the dot diameter small and thus image density tends to decrease and the printed media surface tends to be textured. Accordingly, in order to produce high-quality images, inkjet recording that uses a set of a conventional inkjet sheet and the pigment ink of the present invention requires high resolution for printing, as compared with inkjet recording that uses a set of the ink and recording media of the present invention. The use of the former ink-media set results in reduction in the printing speed and increase in the amount of consumed ink. For these reasons, it is preferable to use the recording media of the present invention.

### <Air Permeability>

As noted above, the function required by the barrier layer in the present invention is to separate pigment from solvent in ink and to allow only the solvent to permeate the substrate, and it is desirable for the barrier layer to have a microscopic structure, e.g., a porous structure in order to achieve this function. The infiltration rate of the ink's solvent component decreases in cases where there are no pores in the barrier layer, thus making ink difficult to dry. However, as note above, too many pores result in degradation in performance of the pigment separation function, which then leads to reduction in image density and/or causes pigment particles present in the media surface to migrate inside the media with time after printing, thus resulting in color change. The ink absorbability, or air permeability, of the media of the present invention suitable for the image formation scheme in the present invention needs to be 100 ml/min or less in order to facilitate separation of the coloring pigment from solvent in ink. An air permeability of greater than 100 inl/min results in failure to form a uniform coating of pigment, significantly reducing image density and glossiness. That the air permeability is 100 ml/min means that many pores are present in the barrier layer, which is advantageous in terms of ink penetrating rate, but pigment particles migrate into those pores and are covered with filler particles in the coated layer, and hence image density tends to decrease. When a high-grade image glossiness is required, the air permeability is 30 ml/min or less. In particular, an air permeability of 5 ml/min results in much excellent image glossiness. Since it is necessary in the present invention to retain the ink's coloring material and resin component on the media surface, it is not desirable to employ media with a high permeability, i.e., with many fine pores, because ink's coloring material permeates paper.

It is sufficient for media with a low ink absorbability to have an air permeability that falls within the foregoing range, the media selected from those having a substrate consisting primarily of cellulose pulp, i.e., a paper substrate, and coated layer(s) deposited on the substrate; it is possible to use paper sheets designed for general commercial printing and publication. When printing particularly on such paper sheets, it is possible to obtain a print that has a texture similar to those of general commercial prints.

Where air permeability is too small, it takes much time before completion of solvent permeation even when the ink of the present invent is used, and thus beading and bleeding are more likely to occur, reducing ink dry speed and increasing the likelihood of offset or the like. For these reasons, a value for air permeability is 0.1 ml/min or more.

### <Solid Component in Ink>

The content of solid component in the ink of the present invention is preferably 4 wt% or more. When less than 4 wt% is used, the ink's viscosity shows a moderate increased when dried, causing image smear to more easily to occur. Although a higher solid content is preferable, too many solids result in severe nozzle clogging and print defects (voids) are more likely to occur in the printed image. Thus, a preferable solid content range is 5 wt% to 15 wt%.

### <Amount of Silica>

The barrier layer of the media of the present invention is not specifically restricted in thickness as long as its air permeability falls within the range set forth in the present invention; however, the barrier layer's thickness is preferably 30 µm or less in view of manufacturing costs. Moreover, the barrier layer can be made very thin, but in that case it is preferable to add a large amount of inorganic pigment with high opacifying property, as opposed to conventional inkjet media, in order for instance to prevent occurrence of show-through, a phenomenon where the color of the deposited coloring material becomes visible from the reverse side of media. To achieve this it is preferable to use a smaller amount of silica or alumina hydrate - materials with low opacifying property generally used in conventional inkjet media - as inorganic pigment in the barrier layer, preferably in a level of 15 wt% or less, minimizing the occurrence of show-through even when the barrier layer is made thin and further reducing the manufacturing costs

When materials that offer high oil absorption, such as alumina hydrate, are contained in large amounts, it becomes difficult for the ink solvent to move from the barrier layer to the substrate. Alumina hydrate that has absorbed a large amount of solvent causes image color change and image smear due to pigment migration during long time storage; therefore, alumina hydrate is not preferable in the present invention.

Inorganic pigments used in the present invention for barrier layer include magnesium carbonate, talc, kaolin, illite, clay, calcium carbonate, calcium sulfite, titanium white, and titanium dioxide. Among these pigments, those having higher refraction indices can reduce the thickness of the resulting barrier layer. Among them, it is preferable to use calcium carbonate or kaolin in terms of cost. These pigments can also be used in combination or can be used together with other pigments not listed herein unless the effect of the present invention is impaired..

Kaolins are preferable because they excel in glossiness development property and a texture similar to those of sheets for offset printing can be provided. There are many types of kaolins: delaminated kaolin, burned kaolin, and engineered kaolin, a surface-modified kaolin. Considering the glossiness development property, it is preferable that a kaolin having a particle size distribution in which the proportion of kaolin particles with a particle diameter of 2µm or less is 80% by mass or more be 50% by mass or more relative to the total kaolin population. The content of kaolin to be added is preferably 50% by mass or more. A content of less than 50% by mass result in poor glossiness. The upper limit of kaolin content is not particularly limited, but considering the fluidity, particularly thickening property under high shearing power, of kaolin, a content of less than 90% by mass is more preferable in terms of coating suitability.

These inorganic pigments having high refraction indices may be combined with silica and organic pigments having low refraction indices. Examples of the organic pigments include water-soluble dispersions of styrene-acryl copolymer particles, styrene-butadiene copolymer particles, polystyrene particles, and polyethylene particles. These organic pigments may be used in mixture of two or more. It is preferable that the amount of the organic pigment to be added is 2 parts by mass to 5 parts by mass per 100 parts by mass of the inorganic pigment. Since organic pigments are excellent in glossiness development property and since their specific gravity is smaller than those of inorganic pigments, it is possible to obtain a coated layer which is highly bulky, highly glossy and excels in surface coating property. However, when its amount is less than 2 parts by mass, no effect is obtained whereas when it exceeds 5 parts by mass, the show through easily occurs and it is not economical in terms of cost. The organic pigments are classified into a solid type, a hollow type, and a doughnut type according to their shape. In light of the balance among the glossiness development property, surface coating property, and fluidity of a coating solution containing organic pigment, the average particle diameter of organic pigment is preferably in the range of 0.2µm to 3.0µm, and hollow type organic pigments with a porosity of 40% or more are more preferable.

### <Thickness of Deposited Coloring Material>

As a condition used in the image formation in the present invention, it is desirable to form over the media surface a coat of the ink's solid component, such as coloring material and resin, as thinly as possible. In the recording method of the present invention, the coloring material is deposited onto the media surface, and the printed image has a coloring material component deposited to a thickness of 4µm or less. The reason for this is that when the coloring material particles localize microscopically even if the average deposited ink amount is small, fine pores in the barrier layer clogged, leading to poor carrier permeation and poor ink dry performance. Another reason for the foregoing is that, after the deposited coloring material has been dried, coloring material particles deposited onto the media surface in the form of projections fall off when the media surface is rubbed, and impair resistance to smear and resistance to smudge. To meet this image formation condition it is required to appropriately optimize the size and arrangement of dots of each individual color ink by calculation on the basis of the digital data of image to be printed. The method of image formation is not specifically restricted, but the index method to be described later is effective in forming an image by using respective ink patterns in which the upper ink amount is set. The thickness of the deposited coloring material can be measured with a known method. In the present invention the thickness of the deposited coloring material was measured using VK-9500, a laser microscope available from KEYENCE, by measuring the distance between the background area and the top of the coating of coloring material.

### <Materials Constituting Barrier Layer>

Binders used in the present invention for barrier layer are not particularly limited as long as they strongly adhere to the pigment and base paper which constitute the barrier layer and they are water-based resin or emulsion which causes no blocking.

Examples of the water-based resin includes polyvinyl alcohol; starches such as oxidized starch, esterified starch, enzyme-modified starch and cationized starch; casein, soy bean proteins; cellulose derivatives such as carboxymethylcellulose and hydroxyethylcellulose; styrene-acryl copolymer resins, isobutylene-maleic acid anhydrate copolymer resins, acryl emulsions, vinyl acetate emulsions, vinylidene chloride emulsions, polyester emulsions, styrene-butadiene copolymer latex, and acrylonitrile-butadiene copolymer latex. Among them, it is preferable to use starch or styrene-butadiene copolymer latex in terms of cost. The styrene-butadiene copolymer latex may be copolymer latex generally used for paper coating, in which styrene and butadiene are contained as monomers, if necessary other monomers are copolymerized and the copolymer is modified by chemical reaction. As the other monomers, acrylic acid, methacrylic acid, alkyl ester of acrylic acid or methacrylic acid, acrylonitrile, maleic acid, fumaric acid, and vinyl-based monomer such as vinyl acetate are often used. A crosslinking agent such as methylolized melamine, methylolized urea, methylolized hydroxypropyleneurea, and isocyanate may also be contained, and the copolymer containing a unit such as N-methylol acrylamide and having self-crosslinking property may be used. These may be used singly or in combination.

The proportion of the water-based resin (binder) added in the barrier layer used in the present invention is preferably 50% by mass to 70% by mass, more preferably 55% by mass to 60% by mass based on the total solid component of barrier layer. Too small a content results in insufficient adhesion force, and concerns rise that powder fall occurs due to reduction in the strength of the barrier layer and reduction in the strength of internal bonds.

Additional ingredients can be added to the barrier layer as needed to a level that does not impair the object and effect of the present invention. As additional ingredients, various auxiliary agents such as dispersants, thickeners, water holding agents, anti-foaming agents and water resistant additives combined with usual pigments for coated papers, and additionally additives such as pH adjusters, anti-septic/anti-fungus agents, anti-oxidants and cationic organic compounds may be used.

Surfactants used for barrier layer are not particularly limited and can be optionally selected depending on the intended purpose; any of anionic surfactants, cationic surfactants, ampholytic surfactants and nonionic surfactants can be used. Among them, nonionic surfactants are particularly preferable.

Examples of the nonionic surfactants include higher alcohol ethylene oxide adducts, alkyl phenol ethylene oxide adducts, fatty acid ethylene oxide adducts, polyvalent alcohol ester ethylene oxide adducts, higher aliphatic amine ethylene oxide adducts, fatty acid amide ethylene oxide adducts, ethylene oxide adducts of fats and oils, polypropylene glycol ethylene oxide adducts, fatty acid esters of glycerol, fatty acid esters of pentaerythritol, fatty acid esters of sorbitol and sorbitan, fatty acid esters of sucrose, alkyl ethers of polyvalent alcohols, and fatty acid amides of alkanolamines. These may be used singly or in combination.

The polyvalent alcohols are not particularly limited and can be optionally selected depending on the intended purpose, and examples include glycerine, trimethylolpropane, pentaerythritol, sorbitol and sucrose. For the ethylene oxide adducts, those obtained by substituting a part of ethylene oxide with alkylene oxide such as propylene oxide or butylene oxide in a range in which their water solubility can be ensured are also effective. The substitution ratio is preferably 50% or less. The HLB (hydrophilicity-to-lipophilicity ratio) of the nonionic surfactants is preferably 4 to 15, more preferably 7 to 13.

There is not necessarily a need to add cationic organic compounds; they are optionally added depending on the intended purpose.

Examples of the cationic organic compounds include dimethylamine epichlorohydrin polycondensates, dimethylamine ammonia epichlorohydrin condensates poly(methacrylic acid trimethylaminoethyl methyl sulfate salts), diallylamine hydrochloride salts, acrylamide copolymers, poly(diallylamine hydrochloride salt sulfur dioxide), polyallylamine hydrochloride salts, poly(allylamine hydrochloride salt diallylamine hydrochloride salt), acrylamide diallylamine copolymers, polyvinylamine copolymers, dicyandiamide, dicyandiamide ammonium chloride urea formaldehyde condensates, polyalkylenepolyamine dicyandiamide ammonium salt condensates, dimethyldiallylammonium chloride, polydiallylmethylamine hydrochloride salts, poly(diallyldimethylammonium chloride), poly(diallyldimethylammonium chloride sulfur dioxide), poly(diallyldimethylammonium chloride diallylamine hydrochloride salt derivative), acrylamide diallyldimethylammonium chloride copolymers, acrylate salts, acrylamide diallylamine hydrochloride copolymers, polyethyleneimine, ethyleneimine derivatives of acrylamine polymers, and polyethyleneimine alkylene oxide modificates. These may be used singly or in combination.

As the substrate used in the present invention, an article obtaining by mixing chemical pulp, mechanical pulp and pulp of collected paper in desired proportions is used. Those obtained by papermaking raw materials in which an internally-added sizing agent, a process yield improver and a paper strength augmenting agent have been added as needed using a fourdrinier former, a twin wire former of a gap type, or a hybrid former in which a last half of a fourdrinier portion is composed of the twin wire are used.

The pulps used for the substrate in the present invention may contain: virgin chemical pulps (CP) made by chemical treatment of wood material such as tree bleached craft pulps, needle leaved tree bleached craft pulps, broadleaf tree unbleached craft pulps, needle leaved tree unbleached craft pulps, broadleaf tree bleached sulfite pulps, needle leaved tree bleached sulfite pulps, broadleaf tree unbleached sulfite pulps or needle leaved tree unbleached sulfite pulps with fiber materials; and/or virgin mechanical pulps (MP) made by mechanical treatment of wood materials such as ground pulps, chemiground pulps, chemimechanical pulps or semi-chemical pulps with other fiber materials.

Furthermore, used papers may be employed, and raw materials of the used paper pulps include super white, white with rule marks, cream white, cards, particular white, medium white, simili paper, color white, Kent paper, special high cut, another high cut, newspapers and journals shown in used paper standard quality specification table in Paper Recycling Promotion Center. Specifically, non-coated computer sheets, printer sheets such as thermal papers and pressure-sensitive papers which are information-related sheets; used OA sheets such as PPC sheets; used papers of papers or plate papers of coated papers such as art papers, coated papers, finely coated papers and mat papers; and non-coated papers such as quality papers, color high quality papers, notepapers, letter papers, packing papers, facsimile papers, medium quality papers, newspapers, fancy-figured papers, super ceremony papers, structure papers, pure white rolling papers and milk cartons are included, and chemical pulp papers and high process yield pulp-containing papers are included. These may be used singly or in combination.

The used paper pulp is generally produced by combining the following 4 steps:
(1) a dissociation step in which used paper is crumbed into fibers by treatment with a mechanical force and chemicals, and printed inks are removed from the fibers;
(2) a cleaning step in which foreign matters (plastics and the like) and dusts contained in the used paper are removed using a screen or a cleaner;
(3) a deinking step in which the printed inks removed from the fibers using the surfactant are eliminated with a floatation method or a washing method; and
(4) a bleaching step in which the white degree of the fibers is enhanced using an oxidation action or a reduction action.

When the used paper pulp is mixed, its the proportion in the total pulp is preferably 40% or less so as to prevent curling of the printed sheet.

For fillers for the substrate used in the present invention, calcium carbonate is effective, and inorganic fillers such as kaolin; burned clay; pyrophylite; sericite; silicates such as talc; satin white; barium sulfate; calcium sulfate; zinc sulfide; plastic pigments; and organic pigments such as urea resins can also be used in combination. The internally-added sizing agent used in the substrate used in the present invention is not particularly limited, and can be optionally selected from publicly known internally-added sizing agents used for inkjet sheets. Preferred internally-added sizing agents are, for example, rosin emulsion-based sizing agents. Examples of internally-added sizing agent used upon fabrication of substrate are neutral rosin-based sizing agents used for neutral papermaking, alkenyl succinic acid anhydrate (ASA), alkyl ketene dimers (AKD) and petroleum resin-based sizing agents. Among them, neutral rosin sizing agents and alkenyl succinic acid anhydrate are particularly preferable. It is sufficient for the alkyl ketene dimer to be added in a small amount because its sizing effect is high, but when added it becomes likely that the friction coefficient recording sheet (media) surface decreases to a level that makes the surface too smooth. For this reason, alkyl ketene dimer may not be preferable in terms of feeding property during inkjet recording.

The amount of the internally-added sizing agent to be used is preferably 0.1 parts by mass to 0.7 parts by mass per 100 parts by mass of absolute dry pulp.

For an internally added filler used for the substrate, for example, a conventionally and publicly known pigment is used as a white pigment. Examples of white pigment include white inorganic pigments such as light calcium carbonate, heavy calcium carbonate, kaolin, clay, talc, calcium sulfate, barium sulfate, titanium dioxide, zinc dioxide, zinc sulfide, zinc carbonate, satin white, aluminium silicate, diatomaceous earth, calcium silicate, magnesium silicate, synthetic silica, aluminium hydroxide, alumina, lithopone, zeolite, magnesium carbonate and magnesium hydroxide; and organic pigments such as styrene-based plastic pigments, acrylic plastic pigments, polyethylene, microcapsules, urea resins and melamine resins. These may be used singly or in combination.

### <Production Method of Barrier Layer>

The method of providing a barrier layer by coating method on a substrate is not particularly limited, can be optionally selected depending on the intended purpose, and for example, the method of directly applying, the method of transferring one once applied on the other substrate onto the base paper, and the method of spraying by a spray can be utilized. Examples of the method of direct application are film transfer systems such as a roll coater, an air knife coater, a gate roll coater, a size press, a simsizer and a rod metalling size press coater; and blade coater systems by fountain or roll application.

A drying treatment of the barrier layer can be performed using, for example, a hot wind drying furnace or a heating drum. Furthermore, in order to smoothen the surface or increase the surface strength, surface finish may be given using a calendar apparatus (super calendar, soft calendar, gloss calendar).

### <Inks>

The pigment ink that is essential in the present invention contains at least a pigment, colored fine particles and a water-soluble organic solvent, and contains a wetting agent and a surfactant and where necessary, further contains additional ingredient(s) such as a fixing agent for coloring agent.

### -Coloring Agent-

As the coloring agent, it is preferable to use at least one of a pigment and colored fine particles. As the colored fine particles, an aqueous dispersion of fine polymer particles is suitably used in which color material of at least one of a pigment and a dye has been contained.

Here, the phrase "color material has been contained" means either a state where color material has been included in fine polymer particles or a state where color material has been adsorbed on the surface of fine polymer particles. The color material is not particularly limited as long as it is water-insoluble or poor water-soluble and can be absorbed by the polymer, and can be optionally selected depending on the intended purpose. Here, the phrase "water-insoluble or poor water-soluble" means that 10 parts by mass or more of the color material is not dissolved in 100 parts by mass of water at 20°C. Here, the term "dissolve(d)" means that neither separation nor precipitation of color material is visually observed in a surface or lower phase of the aqueous solution. The volume average-particle diameter of the fine polymer particles in which the color material has been contained is preferably 0.01µm to 0.16µm. A diameter of less than 0.01µm is close to that of dye particles, and therefore, optical resistance decreases and feathering becomes likely to occur. Moreover, it becomes highly likely that the fine particles readily pass through the barrier layer and causes density reduction. A diameter of greater than 0.30µm results in clogging at discharging openings and filters in the printer, resulting in failure to obtain ink-discharging stability.

Examples of other coloring agents than those described above include pigments, which are not particularly limited and can be optionally selected depending on the intended purpose, and may be of either inorganic or organic. Examples of inorganic pigments include titanium oxide, iron oxide, calcium carbonate, barium sulfate, aluminium hydroxide, barium yellow, cadmium red, chromium yellow, carbon black, Prussian blue and metal powders. Among them, carbon black and the like are preferable. Examples of carbon black includes those produced by such publicly known methods as a contact method, a furnace method or a thermal method.

Examples of the organic pigments include azo pigments, polycyclic pigments, dye chelates, nitro pigments, nitroso pigments and aniline black. Among them, the azo pigments and the polycyclic pigments are preferable. The azo pigments include, for example, azo lakes, insoluble azo pigments, condensed azo pigments and chelated azo pigments. The polycyclic pigments include, for example, phthalocyanine pigments, perylene pigments, perinone pigments, anthraquinone pigments, quinacridone pigments, dioxadine pigments, indigo pigments, thioindigo pigments, isoindolinone pigments, quinophlalone pigments, azomethine pigments and rhodamine B lake pigments. The dye chelates include, for example, basic dye type chelates and acidic dye type chelates.

The colors of the pigments are not particularly limited and can be optionally selected depending on the intended purpose; for example, black pigments and color pigments are exemplified. These may be used singly or in combination.

Examples of pigments for black include carbon black (C.I. pigment black 7) such as furnace black, lamp black, acetylene black and channel black, metals such as copper, iron (C.I. pigment black 11) and titanium oxide, and organic pigments such as aniline black (C.I. pigment black 1). As the carbon blacks used for the black pigment ink, those produced by the furnace method or the channel method and having a primary particle diameter of 15nm to 40nm, a specific surface area of 50 m²/g to 300 m²/g as measured by BET method, a DBP oil absorption of 40 mL/100g to 150 mL/100g, a volatile content of 0.5% to 10% and pH of 2 to 9 are preferable.

Examples of commercially available products of such carbon blacks include, but not limited to, No. 2300, No. 900, MCF-88, No. 33, No. 40, No. 45, No. 52, MA7, MA8, MA100, No. 2200B (supplied from Mitsubishi Chemical Corporation); Raven 700, Raven 5750, Raven 5250, Raven 5000, Raven 3500 and Raven 1255 (supplied from Colombia); Regal 400R, Regal 330R, Regal 660R, MogulL, Monarch 700, Monarch 800, Monarch 880, Monarch 900, Monarch 1000, Monarch 1100, Monarch 1300 and Monarch 1400 (supplied from Cabot); Color Black FW1, Color Black FW2, Color Black FW2V, Color Black FW18, Color Black FW200, Color Black S150, Color Black S 160, Color Black S170, Printex 35, Printex U, Printex V, Printex 140U, Printex 140V, Special Black 6, Special Black 5, Special Black 4A and Special Black 4 (supplied from Degussa).

For the pigments for color printing, examples of pigments for yellow inks include, but not limited to, C.I. pigment yellow 1 (fast yellow G), 2, 3, 12 (disazo yellow AAA), 13, 14, 16, 17, 23, 24, 34, 35, 37, 42 (yellow iron oxide), 53, 55, 73, 74, 75, 81, 83 (disazo yellow HR), 93, 95, 97, 98,100,101, 104, 108, 109, 110, 114, 117, 120, 128, 129, 138, 150, 151, 153 and 154.

Examples of pigments for magenta inks include, but not limited to, C.I. pigment red 1, 2, 3, 5, 7, 12, 17, 22 (brilliant fast scarlet), 23, 31, 48:2 (permanent red 2B (Ba)), 48:2 (permanent red 2B (Ca)), 48:3 (permanent red 2B (Sr)), 48:4 (permanent red 2B (Mn)), 49:1, 52:2, 53:1, 57:1 (brilliant carmine 6B), 60:1, 63:1, 63:2, 64:1, 81 (rhodamine 6G lake), 83, 88, 92, 101 (colcothar), 104, 105, 106, 108 (cadmium red), 112, 114, 122 (dimethyl quinacridone), 123, 146, 149, 166, 168, 170, 172, 177, 178, 179, 184, 185, 190, 193, 202, 209 and 219.

Examples of pigments for cyan inks include, but not limited to, C.I. pigment blue 1, 2, 3, 15 (copper phthalocyanine blue R), 15:1, 15:2, 15:3 (phthalocyanine blue G), 15:4, 15:6 (phthalocyanine blue E), 15:34, 16, 17,:1, 22, 56, 60, 63, C.I. bat blue 4 and C.I. bat blue 60.

Moreover, examples of pigments for intermediate colors for red, green and blue include, but not limited to, C.I. pigment red 177, 194, 224, C.I. pigment orange 43, C.I. pigment violet 3, 19, 23, 37, C.I. pigment green 7 and 36.

As the pigments, self-dispersible pigments are suitable used which can be stably dispersed without using a dispersant in which at least one hydrophilic group is bonded to the pigment surface directly or though another atomic group. As a result, the use of a dispersant for dispersing pigment, as required by the conventional ink, is avoided. The self-dispersible pigment preferably has an ionicity, and suitably has an anionic or cationic charge.

The volume-average particle diameter of the self-dispersible pigment is preferably 0.01µm to 0.30, more preferably 0.01µm to 0.16µm in ink.

Examples of the anionic hydrophilic group includes -COOM, - SO₃M, -PO₃HM, -PO₃M₂, -SO₂NH₂, -SO₂NHCOR (where M represents a hydrogen atom, an alkali metal, ammonium or organic ammonium. R represents an alkyl group having 1 to 12 carbon atoms, a phenyl group which may have substituents, or a naphthyl group which may have substituents). Among them, it is preferable to use ones in which - COOM or -SO₃M is bound to the color pigment particle surface.

The "M" in the hydrophilic group represents for instance lithium, sodium or potassium as an alkali metal. Examples of the organic ammoniums include monomethyl ammonium, dimethyl ammonium, trimethyl ammonium, monoethyl ammonium, diethyl ammonium, triethyl ammonium, monomethanol ammonium, dimethanol ammonium and trimethanol ammonium. One of the method of obtaining a color pigment having an anionic charge is the method of introducing -COONa onto the color pigment particle surface, examples of which include a method of oxidization of color pigment by treatment with sodium hypochlorite, a method of sulfonation of color pigment, and a method of reacting a diazonium salt with color pigment.

For the cationic hydrophilic group, for example, a quaternary ammonium group is preferable, the quaternary ammonium groups shown in the following are more preferable, and the color material in which any of these has been bound to the pigment surface is suitable.

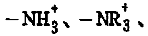

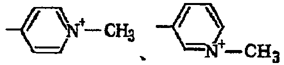

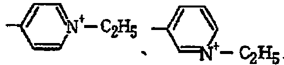

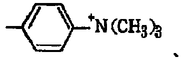

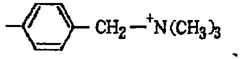

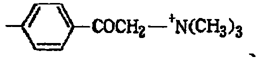

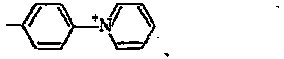

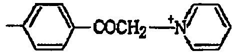

For the method of producing the self-dispersible cationic carbon black to which hydrophilic groups are bonded, a method of binding N-ethylpyridyl group represented by the following structural formula to a carbon black is used; an example of this method is a method that includes a step of treating carbon black with 3-amino-N-ethylpyridium bromide. The present invention is not specifically limited to this method.

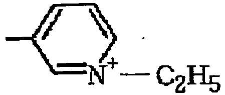

In the present invention, the hydrophilic group may be bound to the surface of the carbon black via another atomic group. Examples of the atomic group include alkyl groups having 1 to 12 carbon atoms, phenyl groups which may have substituents and naphthyl groups which may have substituents. Specific examples thereof when the hydrophilic group is bound to the surface of the carbon black through the other atomic group include, for example, -C₂H₄COOM (where "M" is an alkali metal or quaternary ammonium), -PhSO₃M (where "Ph" is a phenyl group and "M" is an alkali metal or quaternary ammonium), and - C₅H₁₀NH₃⁺.

In the present invention, pigment dispersions prepared by using pigment dispersants can also be used.

For such pigment dispersants, hydrophilic polymer compounds can be used; examples include plant polymers such as gum acacia, tragacanth gum, guar gum, karaya gum, locust bean gum, arabinogalactan, pectin and quince seed starch; sea weed polymers such as alginic acid, carrageenan and agar; animal polymers such as gelatin, casein, albumin and collagen; microbial polymers such as xantene gum and dextran in natural system. In semi-synthetic system, cellulose polymers such as methylcellulose, ethylcellulose, hydroxyethylcellulose, hydroxypropylcellulose and carboxymethylcellulose; starch polymers such as sodium starch glycolate and sodium starch phosphate ester; and sea weed polymers such as sodium alginate and alginate propylene glycol ester are included. In pure synthetic system, vinyl polymers such as polyvinyl alcohol, polyvinyl pyrrolidone, and polyvinyl methyl ether; acrylic resins such as non-crosslinked polyacrylamide, polyacrylic acid or alkali metal salts thereof and water-soluble styrene-acryl copolymer resins; polymer compounds having the salt of the cationic functional group in the side chain, such as water-soluble styrene-maleic acid copolymer resins, water-soluble vinyl naphthalene-acryl copolymer resins, water-soluble vinyl naphthalene maleic acid copolymer resins, polyvinyl pyrrolidone, polyvinyl alcohol, alkali metal salts of β-naphthalene sulfonate formalin condensate and quaternary ammonium and amino groups; and natural polymers such as shellac are included. Among them, acrylic resins obtained by polymerizing acrylic acid, methacrylic acid or ester thereof; and copolymers having carboxyl group obtained by copolymerizing acrylic acid, methacrylic acid or styrene with a monomer having other hydrophilic groups are particularly preferable.

The weight-average molecular weight of the copolymer is preferably 3,000 to 50,000, more preferably 5,000 to 30,000 and still more preferably 7,000 to 15,000. The mixing ratio of the pigment to the dispersant is preferably 1:0.06 to 1:3 on a mass basis and more preferably 1:0.125 to 1:3 on a mass basis.

It is preferable to use the polymer dispersant and the self-dispersible pigment simultaneously for obtaining a suitable dot diameter. The reason for this is not clear, but may be as follows: While permeation of ink into a recording sheet is inhibited by the presence a polymer dispersant, self-dispersible pigment particles can be spread over the sheet smoothly because their aggregation is inhibited by the presence of the polymer dispersant, leading to formation of ideal dots i.e., dots that are widely spread with small thickness.

It is also possible to impart dispersibility to ink by coating pigment with hydrophilic group-containing resin for microcapsulation.

As the method of microcapsulation of the water-insoluble pigment by coating with organic polymers, it is possible to use all methods known in the art, and examples thereof include chemical production methods, physical production methods, physicochemical methods and mechanical production methods.

Specific examples are:
(1) Interface polymerization method (method in which two different monomers or two different reactants are dissolved separately in a dispersion phase and a continuous phase, and a wall membrane is formed by reacting them at their interface);
(2) In situ polymerization method (method in which a wall membrane is formed by supplying liquid or gaseous monomers and a catalyst, or two reactive substances from any one side of a continuous phase nuclear particle side to cause a reaction);
(3) In-liquid cured coating method (method in which a wall membrane is formed by insolubilizing drops of a polymer solution containing a core substance particles by a curing agent in liquid);
(4) Coacervation (phase separation) method (method in which a wall membrane is formed by separating a polymer dispersion in which core substance particles have been dispersed into a coacervate (thick phase) in which a polymer concentration is high and a thin phase);
(5) In-liquid drying method (method in which a wall membrane is formed by preparing a liquid obtained by dispersing the core substance in the solution of a wall membrane substance, adding the dispersion into a liquid in which the continuous phase in this dispersion is not mixed to make a complex emulsion and gradually removing a medium which has dissolved the wall membrane substance);
(6) Melting dispersion cooling method (method in which a wall membrane is formed by utilizing a wall membrane substance which dissolves into a liquid form by heating and solidifies at ambient temperature, heating/liquefying this substance, dispersing core substance particles therein, making them fine particles and cooling);
(7) In-air suspension coating method (method in which a wall membrane is formed by suspending core substance particles of powder in air by fluid bed, and spraying/mixing a coating solution of the wall membrane substance with suspending in air flow);
(8) Spray drying method (method in which a wall membrane is formed by spraying a capsulated neat solution, contacting this with hot wind and evaporating/drying a volatile portion);
(9) Acid out method (method in which the solubility in water is imparted by neutralizing at least a part of an anionic group of an organic polymer compound containing the anionic group with a basic compound, the resulting compound is kneaded together with the color material in an aqueous solvent, subsequently the mixture is made neutral or acid with an acidic compound to precipitate the organic compound, which is then fixed to the color material, and then the solution is neutralized and dispersed); and
(10) Phase inversion emulsification method (method in which a mixture containing an anionic organic polymer having a dispersibility in water and the color material are made an organic solvent phase, water is placed in the organic solvent phase or the organic solvent phase is placed in water).

The organic polymers (resins) used as the material which constitutes the wall membrane substance of the microcapsule include, for example, polyamide, polyurethane, polyester, polyurea, epoxy resins, polycarbonate, urea resins, melamine resins, phenol resins, polysaccharides, gelatin, gum acacia, dextran, casein, proteins, natural gums, carboxypolymethylene, polyvinyl alcohol, polyvinyl pyrrolidone, polyvinyl acetate, polyvinyl chloride, polyvinylidene chloride, cellulose, ethylcellulose, methylcellulose, nitrocellulose, hydroxyethylcellulose, acetate cellulose, polyethylene, polystyrene, polymers or copolymers of (meth)acrylic acid, polymers or copolymers of (meth)acrylate ester, (meth)acrylic acid-(meth)acrylate ester copolymers, styrene-(meth)acrylic acid copolymers, styrene-maleic acid copolymers, sodium alginate, fatty acid, paraffin, bee wax, water wax, cured beef tallow, carnauba wax and albumin.

Among them, it is possible to use the organic polymers bearing anionic groups such as carboxylic group and sulfo group. Examples of nonionic organic polymers include polyvinyl alcohol, polyethylene glycol monomethacrylate, polypropylene glycol monomethacrylate, methoxy polyethylene glycol monomethacrylate or (co)polymers thereof, and cation ring opening polymers of 2-oxazoline. Among them, completely saponified polyvinyl alcohol is particularly preferable because its water-solubility is low and is easily dissolved in hot water whereas poorly dissolved in cold water.

The content of the organic polymer which constitutes the wall membrane substance of microcapsule is preferably 1% by mass or more and 20% by mass or less relative to the water-insoluble color material such as organic pigments and carbon black. By making the content of organic polymer fall within the above range, it is possible to prevent impairment of color development property of pigment, which is caused by coating of the pigment surface with the organic polymer, because the content of organic polymer is relatively low in the capsule. An organic polymer content of less than 1% by mass results in difficulty in obtaining the effect of capsulation, whereas a content of greater than 20% by mass results in remarkable impairment of the color development property of pigment. Considering other properties, it is more preferable that the content of organic polymer be in the range of 5% by mass to 10% by mass based on the amount of the water-insoluble color material.

Since some particles of the color material are covered and thus are exposed, it becomes possible to inhibit reduction of color development property. Since some of the color material are substantially covered rather than exposed, it becomes possible to simultaneously provide the effect brought about by these covered or coated particles. The number-average molecular weight of organic polymers used in the present invention is preferably 2,000 or more in view of production in the form of capsule. Here, the phrase "substantially exposed" means a state where particles are exposed intentionally, not a state where particles are partially exposed as a result of defects such as pinholes and cracks.

If an organic pigment which is a self-dispersible pigment or self-dispersible carbon black is used as color material, the dispersibility of pigment increases even when the content of the organic polymers is relatively low in the capsule. Thus, it is more preferable in the present invention to adopt such organic pigment because sufficient ink storage stability can be ensured.

It is preferable to select a suitable organic polymer depending on the method of microcapsulation adopted. For example, in the case of interface polymerization, polyesters, polyamides, polyurethane, polyvinyl pyrrolidone and epoxy resins are suitable. In the case by in situ polymerization, polymers or copolymers of (meth)acrylic acid, (meth)acrylic acid-(meth)acrylate ester copolymers, styrene-(meth)acrylic acid copolymers, polyvinyl chloride, polyvinylidene chloride and polyamide are suitable. In the case of in-liquid curing, sodium alginate, polyvinyl alcohol, gelatin, albumin and epoxy resins are suitable. In the case of the coacervation method, gelatin, celluloses and casein are suitable. In order to obtain the fine and uniform microcapsulated pigment, it is possible, of course, to utilize all of the methods of microcapsulation that are known conventionally and publicly in addition to the above.

When the phase invasion method or acid out method is selected as the method for microcapsulation, the anionic organic polymers are used as the organic polymers which constitute the wall membrane substance of the microcapsule. In the phase inversion method, a complex or a complex body of the anionic organic polymers having the self-dispersibility or solubility in water and the color material such as self-dispersible pigment or self-dispersible carbon black, or a mixture of the color material such as self-dispersible pigment or self-dispersible carbon black, the curing agent and the anionic organic polymers is made the organic solvent phase, the water is placed in the organic solvent phase or the organic solvent phase is placed in the water to make microcapsules with self-dispersing (phase inversion emulsification). In the above phase inversion method, there is no problem to add in the organic solvent phase a vehicle and/or additive designed for the recording solution. Particularly, in view of the fact that it is capable of direct production of the dispersion for recording solution, it is more preferable to add a liquid solvent designed for recording solution.

Meanwhile, in the acid out method, a hydrous cake is obtained by the production method including a step of neutralizing some or all of the anionic groups in the anionic group-containing organic polymer with a basic compound and kneading it with a color material such as a self-dispersible pigment or self-dispersible carbon black in an aqueous solvent; and a step of making pH neutral or acidic with an acidic compound to precipitate the anionic group-containing organic polymers, which are then fixed onto the pigment, and the hydrous cake is microcapsulated by neutralizing some or all of the anionic groups using a basic compound. In this way, it is possible to produce the water-based dispersion containing the fine anionic microcapsulated pigment that contains pigment abundantly.

Examples of solvents applicable for the above-noted microcapsulation include alkyl alcohols such as methanol, ethanol, propanol and butanol; aromatic hydrocarbons such as benzole, toluol and xylol; esters such as methyl acetate, ethyl acetate and butyl acetate; chlorinated hydrocarbons such as chloroform and ethylene dichloride; ketones such as acetone and methyl isobutyl ketone; ethers such as tetrahydrofuran and dioxane; cellsolves such as methyl cellsolve and butyl cellsolve. The microcapsule prepared by the above method is once separated from these solvents by centrifugation or filtration, and this is stirred with water and the required solvent and the redispersion is performed to yield an ink of interest. The average particle diameter of the capsulated pigments obtained by the above method is preferably 50nm to 180nm.

The content of the coloring agent to be added in ink is preferably 6% by mass to 15% by mass and more preferably 8% by mass to 12% by mass. When the content is less than 6% by mass, the image density decreases due to reduced coloring power, and feathering and bleeding may be more likely to occur due to decreased viscosity. When it exceeds 15% by mass, nozzles are easily dried when the recording apparatus is left stand, leading to a phenomenon where no ink drops are discharged from nozzles; penetration capability of ink decreases due to excessively high viscosity; image density decrease due to poorly-spread dots; and resultant images become rough.

### -Water-Soluble Organic Solvent-

As the water-soluble organic solvent, either polyol compounds having 8 or more carbon atoms or glycol ether compounds are used.

When a polyol compound having less than 8 carbon atoms is used, it results in insufficient ink permeability, the recording media is stained upon double-side printing, and the letter quality and image density decrease because ink fails to sufficiently spread over the recording media, resulting in failure to sufficiently fill up pixels.

As the polyol compounds having 8 or more carbon atoms, for example, 2-ethyl-1,3-hexanediol (solubility: 4.2% at 25°C), 2,2,4-trimethyl-1,3-pentanediol (solubility: 2.0% at 25°C) are suitable.

The content of the water-soluble organic solvent is preferably 0.1% by mass to 20% by mass, more preferably 0.5% by mass to 10% by mass.

### -Wetting Agent-

The wetting agent is not particularly limited and can be optionally selected depending on the intended purpose; for example, at least one wetting agent selected from polyol compounds, lactam compounds, urea compounds and saccharides is suitable.

Examples of the polyol compounds include polyvalent alcohols such as ethylene glycol, diethylene glycol, triethylene glycol, polyethylene glycol, polypropylene glycol, 1,3-propanediol, 1,3-butanediol, 1,4-butanediol, 3-methyl-1,3-butanediol, 1,5-pentanediol, 1,6-hexanediol, glycerine, 1,2,6-hexanetriol, 1,2,4-butanetriol, 1,2,3-butanetriol and petriol; polyvalent alcohol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether and propylene glycol monoethyl ether; polyvalent alcohol aryl ethers such as ethylene glycol monophenyl ether and ethylene glycol monobenzyl ether. These may be used singly or in combination.

Among them, glycerine, ethylene glycol, diethylene glycol, triethylene glycol, tetraethylene glycol, polyethylene glycol, propylene glycol, dipropylene glycol, tripropylene glycol, 1,3-butanediol, 2,3-butanediol, 1,4-butanediol, 3-methyl-1,3-butanediol, 1,3-propanediol, 1,5-pentanediol, 1,6-hexanediol, 2-methyl-2,4-pentanediol, 1,2,4-butanetriol, 1,2,6-hexanetriol, thiodiglycol, pentaerythritol, trimethylolethane and trimethylolpropane are particularly preferable in view of their dissolving capacity and the fact that it is possible to obtain excellent effect on the prevention of poor ink-spraying property caused due to water evaporation.

Examples of the lactam compounds include 2-pyrrolidone, N-methyl-2-pyrrolidone, N-hydroxyethyl-2-pyrrolidone and ε-caprolactam.

Examples of the urea compounds include urea, thiourea, ethylene urea and 1,3-dimethyl-2-imidazolidinone. The amount of urea compound to be added in the ink is generally preferably 0.5% by mass to 50% by mass, more preferably 1% by mass to 20% by mass.

Examples of the saccharides include monosaccharides, disaccharides, oligosaccharides (including trisaccharides and tetrasaccharides), polysaccharides or derivatives thereof. Among them, glucose, mannose, fructose, ribose, xylose, arabinose, galactose, maltose, cellobiose, lactose, sucrose, trehalose and maltotriose are suitable, and maltitose, sorbitose, gluconolactone and maltose are particularly preferable.

Polysaccharides mean sugars in a broad sense and can be used to encompass a wide range of naturally occurring sugars such as α-cyclodextrins and celluloses.

The derivatives of the saccharides include reducing sugars of the saccharides (e.g., sugar alcohols (represented by the general formula: HOCH₂(CHOH)ₙCH₂OH, where "n" is an integer of 2 to 5), oxidized sugars (e.g., aldonic acid, uronic acid), amino acids, and thioacid. Among them, sugar alcohols are particularly preferable. Examples of sugar alcohols maltitol and sorbit.

The content of the wetting agent in the ink is preferably 10% by mass to 50% by mass, more preferably 15% by mass to 35% by mass. When the content is too small, nozzles are easily dried and it may result in poor ink drop discharge. When the content is too large, ink viscosity increases and sometimes exceeds a proper viscosity range.

### -Surfactant-

The surfactants are not particularly limited and can be optionally selected depending on the intended purpose; examples includes anionic surfactants, nonionic surfactants, ampholytic surfactants, acetylene glycol-based surfactants and fluorine-based surfactants. In particular, at least one surfactant selected from compounds having the following general formulae (I), (II), (III), (IV), (V) and (VI) is preferable.

R¹-O-(CH₂CH₂O)hCH₂COOM General Formula (I)

where R¹ is an alkyl group; "h" is an integer of 3 to 12; and "M" is any one selected from an alkali metal ion, a quaternary ammonium, a quaternary phosphonium and an alkanolamine. 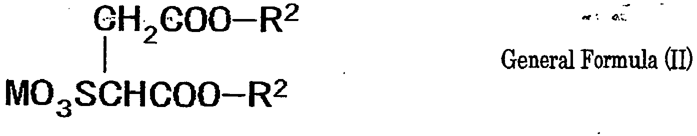 where R² is an alkyl group, and "M" is any one selected from an alkali metal ion, a quaternary ammonium, a quaternary phosphonium and an alkanolamine. 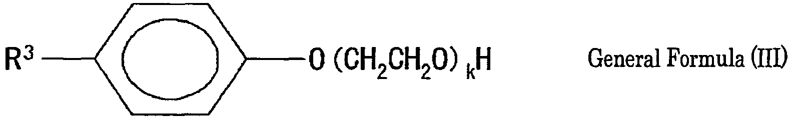 where R³ is a hydrocarbon group and "k" is an integer of 5 to 20.

R⁴ - (OCH₂CH₂) jOH General Formula (IV)

where R⁴ is a hydrocarbon group and "j" is an integer of 5 to 20. 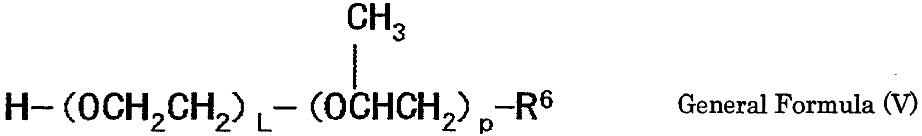 where R⁶ is a hydrocarbon group, and "L" and "p" are an integer of 1 to 20. 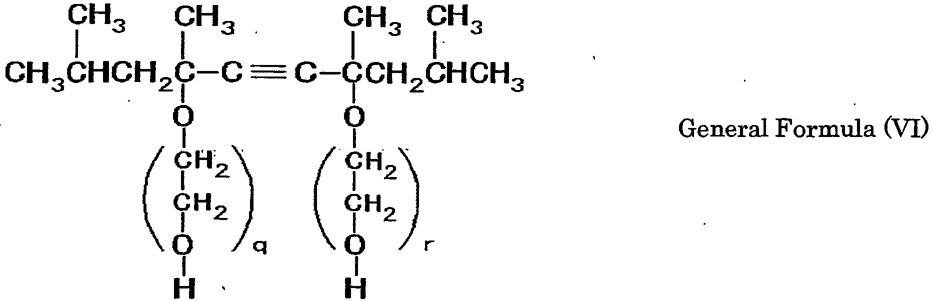 where "q" and "r" are an integer of 0 to 40.

The surfactants represented by the above structural formulae (I) and (II) are shown specifically in free acid forms below.
(I-1): CH₃(CH₂)₁₂O(CH₂CH₂O)₃CH₂COOH
(I-2): CH₃(CH₂)₁₂O(CH₂CH₂O)₄CH₂COOH
(I-3): CH₃(CH₂)₁₂O(CH₂CH₂O)₅CH₂COOH
(I-4): CH₃(CH₂)₁₂O(CH₂CH₂O)₆CH₂COOH 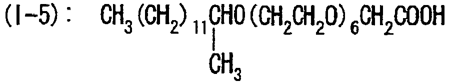 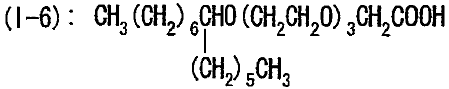 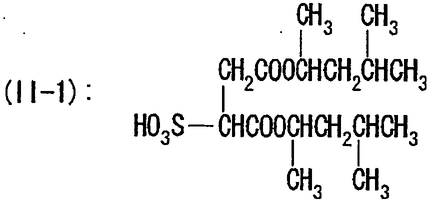 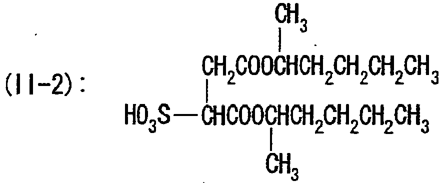 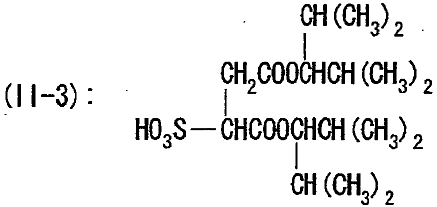 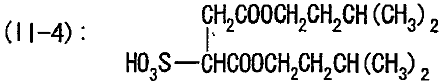
   Examples of the anionic surfactants include polyoxyethylene alkyl ether acetate salts, dodecyl benzene sulfonate salts, laurate salts and polyoxyethylene alkyl ether sulfate salts.
   Examples of the nonionic surfactants include polyoxyethylene alkyl ether, polyoxypropylene polyoxyethylene alkyl ether, polyoxyethylene alkyl ester, polyoxyethylene sorbitan fatty acid ester, polyoxyethylene alkyl phenyl ether, polyoxyethylene alkyl amine and polyoxyethylene alkyl amide.
   Examples of the ampholytic surfactants include laurylamino propionate salts, lauryldimethylbetaine, stearyldimethylbetaine and lauryldihydroxyethylbetaine. Specifically, lauryldimethylamine oxide, myristyldimethylamine oxide, stearyldimethylamine oxide, dihydroxyethyllaurylamine oxide, polyoxyethylene palm oil alkyldimethylamine oxide, dimethylalkyl(palm)betaine and dimethyllaurylbetaine.
   For the acetylene glycol-based surfactants, for example, acetylene glycol-based ones such as 2,4,7,9-tetramethyl-5-decine-4,7-diol, 3,6-dimethyl-4-octine-3,6-diol, 3,5-dimethyl-2-hexine-3-ol (e.g., Surfynols 104, 82, 465, 485 or TG supplied from Air Products (USA)) can be used. Among these, Surfynols 465 and 104 and TG offer excellent print quality.
   For the fluorine-based surfactants, those represented by the following general formula (II-5) are suitable.
(II-5): CF₃CF₂(CF₂CF₂)ₘ-CH₂CH₂O(CH₂CH₂O)ₙH
   where "m" is an integer of 0 to 10 and "n" is an integer of 1 to 40.

Examples of the fluorine-based surfactants include perfluoroalkyl sulfonate salts, perfluoroalkyl, carboxylate salts, perfluoroalkyl phosphate ester, perfluoroalkyl ethylene oxide adducts, perfluoroalkyl betaine and perfluoroalkyl amine oxide compounds.

Examples of the commercially available fluorine-based surfactants include Surflon S-111, S-112, S-113, S121, S131, S132, S-141, S-145 (supplied from Asahi Glass Co., Ltd.); Fullard FC-93, FC-95, FC-98, FC-129, FC-135, FC-170C, FC-430, FC-431, FC-4430 (supplied from Sumitomo 3M Ltd.); Megafac F-470, F-140, F-474 (supplied from Dainippon Ink And Chemicals, Incorporated); Zonil FS-300, FSN, FSN-100, FSO (supplied from DuPont); and F-Top EF-351, 352, 801, 802 (supplied from JECOM). Among them, Zonil FS-300, FSN, FSN-100, FSO (supplied from DuPont), which are particularly excellent in reliability and offer enhanced color development, can be suitably used. The surface tension is preferably 25 mN/m or less at 25°C, more preferably 25 mN/m or less at 25°C.

For the fixing agent for pigment, any resin emulsion can be adopted.

### -Resin Emulsion-

The resin emulsion is one obtained by dispersing fine resin particles in water as a continuous phase, and may contain a dispersant such as a surfactant if necessary.

The content (i.e., content of fine resin particles in the resin emulsion) of the fine resin particles as a dispersion phase ingredient is generally preferably 10% by mass to 70% by mass. The average particle diameter of the fine resin particles is preferably 10nm to 1,000nm and more preferably 20nm to 300nm, particularly in light of use in an inkjet recording apparatus.

The fine resin particle ingredient in the dispersion phase is not particularly limited and can be optionally selected depending on the intended purpose; examples includes acrylic resins, vinyl acetate-based resins, styrene-based resins, butadiene-based resins, styrene-butadiene-based resins, vinyl chloride-based resins, acrylstyrene-based resins and acryl silicone-based resins. Among them, acryl silicone-based resins are particularly preferable.

The resin emulsion may be appropriately prepared, or commercially available resin emulsions may be used.

Examples of commercially available resin emulsions include Microgel E-1002, E-5002 (styrene-acrylic resin emulsions, supplied from Nippon Paint Co., Ltd.); Boncoat 4001 (acrylic resin emulsion, supplied from Dainippon Ink And Chemicals, Incorporated); Boncoat 5454 (styrene-acrylic resin emulsions, supplied from Dainippon Ink And Chemicals, Incorporated); SAE-1014 (styrene-acrylic resin emulsions, supplied from Zeon Corporation); Saibinol SK-200 (acrylic resin emulsion, supplied from Saiden Chemical Industry Co., Ltd.); Primal AC-22, AC-61 (acrylic resin emulsion, supplied from Rohm and Haas); Nanocril SBCX-2821, 3689 (acryl silicone-based emulsion, supplied from Toyo Ink MFG Co., Ltd.); and #3070 (methyl methacrylate polymer resin emulsion, supplied from Mikuni Color Ltd.).

The content of the fine resin particles added in the resin emulsion is preferably 0.1% by mass to 50% by mass, more preferably 0.5% by mass to 20% by mass and still more preferably 1% by mass to 10% by mass in the ink. A fine resin particle content of less than 0.1% by mass may result in poor effect of improving anti-clogging property and poor ink discharging stability, whereas a content of greater than 50% may result in reduced ink storage stability.

Moreover, ultraviolet-curable resin may be used in combination where necessary. Specific examples of ultraviolet curable resins include those obtained by polymerization of known acrylic photopolymerizable monomers and/or known acrylic photopolymerizable oligomers.

For the acrylic photopolymerizable monomers, unsaturated carboxylic acids such as acrylic acid and methacrylic acid and esters thereof include, for example, alkyl acrylate, cycloalkyl acrylate, halogenated alkyl (meth)acrylate, alkoxyalkyl (meth)acrylate, hydroxyalkyl (meth)acrylate, aminoalkyl (meth)acrylate, tetrahydrofrufryl (meth)acrylate, allyl (meth)acrylate, glycidyl (meth)acrylate, benzyl (meth)acrylate, phenoxy (meth)acrylate, mono- or di- (meth)acrylate of alkylene glycol, polyoxyalkylene glycol, trimethylolpropane tri(meth)acrylate and pentaerythrit tetra(meth)acrylate. Examples of acrylamide, methacrylamide and derivatives thereof include (meth)acrylamide, diacetone (meth)acrylamide, and N,N'-alkylene bis-(meth)acrylamide monosubstituted or disubstituted with alkyl or hydroxyalkyl group. Examples of the allyl compounds include allyl alcohol, allyl isocyanate, diallyl phthalate and triallyl isocyanurate.

Also, isobornyl (meth)acrylate, norbornyl (meth)acrylate, dicyclopentenoxyethyl (meth)acrylate and dicylopentenoxwypropyl (meth)acrylate are included. (Meth)acrylate ester of diethylene glycol dicyclopentenyl monoether and (meth)acrylate ester of polyoxyethylene or polypropylene glycol dicyclopentenyl monoether are also included. Dicyclopentenyl cinnamate, dicyclopentenoxyethyl cinnamate, dicyclopentenoxyethyl monofumarate or difumarate are also included. Also, mono(meth)acrylate or di(meth)acrylate of 3,9-bis(1,1-bismethyl-2-oxyethyl)-spiro[5,5]undecane, 3,9-bis(1,1-bismethyl-2-oxyethyl)-2,4,8,10-tetraoxaspiro[5,5]undecane and 3,9-bis(2-oxyethyl)-spiro[5,5]undecane, or mono(meth)acrylate of ethylene oxide or propylene oxide addition polymers of spiro glycol thereof, or methyl ether of mono(meth)acrylate, 1-azabicyclo[2,2,2]-3-octenyl (meth)acrylate and bicyclo[2,2,1]-5-heptene-2,2-dicarboxymonoallyl ester are included. Also, dichloropentadienyl (meth)acrylate, dicyclopentadienyloxyethyl (meth)acrylate and dihydrodicyclopentadienyl (meth)acrylate are included. These photopolymerizable monomers may be used singly or in combination.

As the acrylic photopolymerizable oligomers, acrylate esters of epoxy resins include, for example, diglycidyl diether diacrylate of bisphenol A, reaction products of epoxy resin, acrylic acid and methyltetrahydrophthalic acid anhydrate, reaction products of epoxy resin and 2-hydroxyethyl acrylate and ring opening copolymer esters of glycidyl diacrylate and phthalic acid anhydrate. Also, unsaturated polyester-based prepolymers such as esters of methacrylic acid dimer and polyol, polyesters obtained from propylene oxide of acrylic acid and phthalic acid anhydrate, reaction products of polyvinyl alcohol and N-methylol acrylamide, reaction products of polyethylene glycol, maleic acid anhydrate and glycidyl methacrylate are included. Also, polyvinyl alcohol-based prepolymers such as those obtained by esterifying polyvinyl alcohol with succinic acid anhydrate and subsequently adding glycidyl methacrylate, polyacrylic acid or maleic acid copolymer-based prepolymers such as reaction products of methylvinyl ether-maleic acid anhydrate copolymer and 2-hydroxyethyl acrylate or those obtained by further reacting glycidyl methacrylate therewith are included. Additionally, urethane-based prepolymers linking a polyoxyalkylene segment or a saturated polyester segment or both thereof through urethane bond and having acryloyl group or methacryloyl group at both ends can be included.

### -Additional Ingredient-

The additional ingredients are not particularly limited and can be optionally selected as needed; examples include pH adjusters, antiseptic/anti-fungus agents, antirust agents, antioxidants, ultraviolet light absorbers, oxygen absorbers and light stabilizers.

Examples of the anti-septic/anti-fungus agents include 1,2-benzisothiazoline-3-one, sodium dehydroacetate, sodium sorbate, sodium 2-pyridinethiol-1-oxide, sodium benzoate and sodium pentachlorophenol.

The pH adjusters are not particularly limited as long as pH can be adjusted to 7 or more without adversely affecting the prepared ink, and can be optionally selected depending on the intended purpose. Examples of the pH adjusters include amines such as diethanolamine and triethanolamine, hydroxides of alkali metals such as lithium hydroxide, sodium hydroxide and potassium hydroxide, hydroxides of quaternary ammonium, hydroxides of quaternary phosphonium, and carbonate salts of alkali metals such as lithium carbonate, sodium carbonate and potassium carbonate.

Examples of the antirust agents include acidic sulfite salts, sodium thiosulfate, ammonium thioglycolate, diisopropylammonium nitrate, pentaerythritol tetranitrate and cyclohexylammonium nitrate.

Examples of the antioxidants include phenol-based antioxidants (including hindered phenol-based ones), amine-based antioxidants, sulfur-based antioxidants and phosphorous-based antioxidants.

Examples of the phenol-based antioxidants (including hindered phenol-based antioxidants) include butylated hydroxyanisole, 2,6-di-tert-butyl-4-ethylphenol, stearyl-β-(3,5-di-tert-butyl-4-hydroxyohenyl)propionate, 2,2'-methylenebis(4-methyl-6-tert-butylphenol), 2,2'-methylenebis(4-ethyl-6-tert-butylphenol), 4,4'-butylidenebis(3-methyl-6-tert-butylphenol), 3.9-bis[1,1-dimethyl-2-[β-(3-tert-butyl-4-hydroxy-5-methylphenyl)propionyloxylethyl]2,4,8,10-tetraixaspiro[5,5]undecane, 1,1,3-tris(2-methyl-4-hydroxy-5-tert-butylphenyl(butane, 1,3,5-trimethyl-2,4,6-tris(3,5-di-tert-butyl-4-hydroxybenzyl)benzene and tetraxis[methylene-3-(3',5'-di-tert-butyl-4'-hydroxyphenyl)propionate]methane.

Examples of the amine-based antioxidants include phenyl-β-naphthylamine, α-naphthylamine, N,N'-di-sec-butyl-p-phenylenediamine, phenothiazine, N,N'-diphenyl-p-phenylenediamine, 2,6-di-tert-butyl-p-cresol, 2,6-di-tert-butylphenol, 2,4-dimethyl-6-tert-butyl-phenol, butylhydroxyanisole, 2,2'-methylenebis(4-methyl-6-tert-butylphenol), 4,4'-butylidenebis(3-methyl-6-tert-butylphenol), 4,4'-thiobis(3-methyl-6-tert-butylphenol), tetraxis[methylene-3(3,5-di-tert-butyl-4-dihydrophenyl)propionate]methane and 1,1,3-tris(2-methyl-4-hydroxy-5-tert-butylphenyl)butane.

Examples of the sulfur-based antioxidants include dilauryl-3,3'-thiodipropionate, distearyl thiodipropionate, lauryl stearyl thiodipropionate, dimyristyl-3,3'-thiodipropionate, distearyl β,β'-thiodipropionate, 2-mercaptobemzimidazole and dilauryl sulfide.

Examples of the phosphorous-based antioxidants include triphenyl phosphite, octadecyl phosphite, triisodecyl phosphite, trilauryl trithiophosphite and trinonylphenyl phosphite.

Examples of the ultraviolet light absorbers include benzophenone-based ultraviolet light absorbers, benzotriazole-based ultraviolet light absorbers, salicylate-based ultraviolet light absorbers, cyanoacrylate-based ultraviolet light absorbers and nickel complex salt-based ultraviolet light absorbers.

Examples of the benzophenone-based ultraviolet light absorbers include 2-hydroxy-4-n-octoxybenzophenone, 2-hydroxy-4-n-dodecyloxybenzophenone, 2,4-dihydroxybenzophenone, 2-hydroxy-4-methoxybenzophenone and 2,2',4,4'-tetrahydroxybenzophenone.

Examples of the benzotriazole-based ultraviolet light absorbers include 2-(2'-hydroxy-5-tert-octylphenyl)benzotriazole, 2-(2'-hydroxy-5'-methylphenyl)benzotriazole, 2-(2'-hydroxy-5'-octoxyphenyl)benzotriazole and 2-(2'-hydroxy-3-tert-butyl-5'-methylphenyl)-5-chlorobenzotriazole.

Examples of the salicylate-based ultraviolet light absorbers include phenyl salicylate, p-tert-butylphenyl salicylate and p-octylphenyl salicylate.

Examples of the cyanoacrylate-based ultraviolet light absorbers include ethyl-2-cyano-3,3'-diphenyl acrylate, methyl-2-cyano-3-methyl-3-(p-methoxyphenyl) acrylate and butyl-2-cyano-3-methyl-3-methoxyphenyl) acrylate.

Examples of the nickel complex salt-based ultraviolet light absorbers include, for example, nickel bis(octylphenyl)sulfide, 2,2'-thiobis(4-tert-octylphelate)-n-butylamine nickel (II), 2,2'-thiobis(4-tert-octylphelate)-2-ethylhexylamine nickel (II) and 2,2'-thiobis(4-tert-octylphelate)triethanolamine nickel (II).

The ink of the ink-media set of the present invention is produced by dispersing or dissolving at least water, a coloring agent a water-soluble organic solvent, a wetting agent and a surfactant, and where necessary additional ingredient(s), in an aqueous solvent, and by stirring and mixing as needed. The dispersing treatment can be carried out for instance using a sand mill, a homogenizer, a ball mill, a paint shaker, or an ultrasonic dispersing machine. Stirring/mixing can also be carried out using a usual stirring machine equipped with a stirring blade, a magnetic stirrer, a high-speed dispersing machine, or the like.

With respect to the physical properties of the ink, for example, it is preferable that its viscosity, surface tension, and pH be in the following ranges.

The viscosity is preferably 5 cps or more, more preferably 8 to 20 cps at 25°C. A viscosity of greater than 20 cps may make it difficult to ensure ink discharging stability.

The surface tension needs to be 25mN/m or less and is preferably 20 mN/m to 25mN/m. A surface tension of less than 20 mN/m results in remarkable ink bleeding over a recording media, which may result in failure to obtain stable ink discharging, whereas a surface tension of greater than 26 mN/m may result in poor ink permeation into the recording media, which may lead to beading and prolong ink drying time. The pH value is preferably 7 to 10, for example.

Ink color is not particularly limited and can be optionally selected depending on the intended purpose. Ink color includes yellow, magenta, cyan and black. The use of an ink set combining two or more of these colors for recording can produce multi-color images, and the use of an ink set combining all of these colors for recording can produce full-color images.

### <Additives and Physical Properties of Ink>

In order to impart desired physical properties to the recording solution (ink) of the present invention or to prevent clogging of inkjet head nozzles caused by dried ink, it is preferable to employ a water-soluble organic solvent, which contains a wetting agent and a penetrating agent. The wetting agent is added for the purpose of preventing clogging of inkjet head nozzles caused by dried ink. Specific examples of water-soluble organic solvents include polyalcohols such as ethylene glycol, diethylene glygol, triethylene glycol, tetraethylene glycol, polyethylene glycol, propylene glycol, 1,3-butanediol, 1,3-propanediol, 2-methyl-1,3-propanediol, 1,4-butanediol, 1,5-pentanediol, 1,6-hexanediol, glycerine, 1,26-hexanetriol, 2-ethyl-1,3-hexanediol, 1,2,4-butanetriol, 1,2,3-butanetriol, and petriol; polyalcohol alkyl ethers such as ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monomethyl ether, and propylene glycol monoethyl ether; polyalcohol aryl ethers such as ethylene glycol monophenyl ether, and ethylene glycol monobenzyl ether; nitrogen-containing heterocyclic compounds such as N-methyl-2-pyrrolidone, N-hydroxyethyl-2-pyrrolidone, 2-pyrrolidone, 1,3-dimethylimidazolidinone, and ε-caprolactam; amides such as formamide, N-methylformamide, and N,N-dimethylformamide; amines such as monoethanolamine, diethanolamine, triethanolamine, monoethylamine, diethylamine, and triethylamine; sulfur-containing compounds such as dimethylsulfoxide, sulfolane, and thiodiethanol; propylene carbonate; ethylene carbonate, and γ⁻butyrolactone. These solvents are used singly or in combination in admixture with water.

The penetrating agent is added in order to adjust the infiltration rate of the recording solution by improving its wetting capability with respect to an article to be printed. Preferred examples of the penetrating agent are those having the formulae (I)-(IV) shown below. Polyoxyethylene alkylphenyl ether-based surfactants having the formula (I), acetylene glycol-based surfactants having the formula (II), polyoxyethylene alkyl ether-based sufactants having the formula (III), and polyoxylethylene polyoxypropylenealkyl ether-based surfactants having the formula (IV) are capable of reducing the liquid surface tension, thus increasing its wetting capability and infiltration rate. 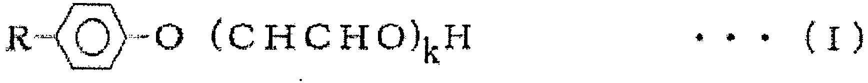 where R is a linear or branched C6-C14 hydrocarbon chain, and "k" is an integer of 5 to 20 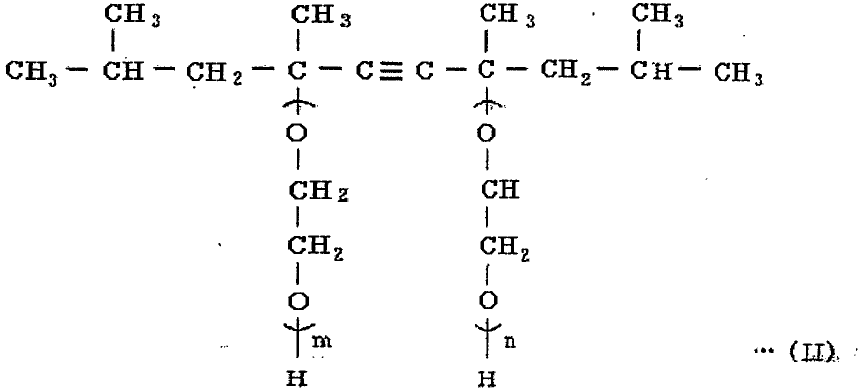 where "m" and "n" each represents an integer of 0 to 40

R-(OCH₂CH₂)nH (III)

where R is a linear or branched C6-C14 hydrocarbon chain, and "n" is an integer of 5 to 20 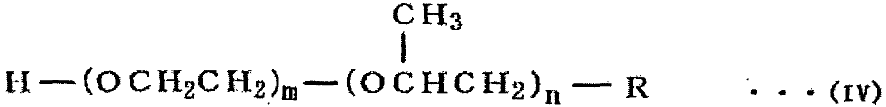 where R is a linear or branched C6-C14 hydrocarbon chain, and "m" and "n" are an integer of 20 or less

Examples of usable penetrating agents other than those represented by the foregoing formulae (I)-(IV) include polyalcohol alkyl and aryl ethers such as diethylene glycol monophenyl ether, ethylene glycol monophenyl ether, ethylene glycol monoallyl ether, diethylene glycol monophenyl ether, diethylene glycol monobutyl ether, propylene glycol monobutyl ether, and tetraethylene glycol chlorophenyl ether; nonionic surfactants such as polyoxyethylene/polyoxypropylene block copolymers; fluorine-based surfactants; and lower alcohols such as ethanol and 2-propanol. Among them, diethylene glycol monobutyl ether is most preferable.

The surface tension of the recording solution of the present invention is preferably 25 dyne/cm or less and, more preferably, 23 dyne/cm or less for the purpose of improving its wetting capability with respect to an article to be applied while making droplets fine. The viscosity of the recording solution of the present invention is preferably 1.0 cP to 20.0 cP and, more preferably, 3.0 cP to 10.0 cP for the purpose of stabilizing ink discharge. The pH of the recording solution of the present invention is preferably 3 to 11 and, more preferably, 6 to 10 for the purpose of preventing corrosion of metallic members that come contact with the recording solution.

The recording solution of the present invention can contain therein an anti-septic/anti-fungus agent. When an anti-septic/anti-fungus agent is contained it is possible to suppress proliferation of bacteria and thus to increase storage stability and image stability. Examples of usable anti-septic/anti-fungus agents include benzotriazole, sodium dehydroacetate, sodium sorbate, sodium 2-pyridinethiol-1-oxide, isothiazolin-based compounds, sodium benzoate and sodium pentachlorophenol.

The recording solution of the present invention can contain therein an antirust agent. When an antirust agent is added, a coat is formed over metallic surfaces of components (e.g., inkjet head) that come in contact with recording solution, thereby protecting them from corrosion. Examples of antirust agents include acidic subsulfates, sodium thiosolfate, ammonium thiodiglycolate, diisopylammonium nitrate, and pentaerythrithol tetranitrate, and dicyclohexylammonium nitrate.

The recording solution of the present invention can contain therein an antioxidant. Thus it is possible to prevent metal corrosion even when corrosion-causing radical species are generated, because the antioxidant scavenges them. Representative antioxidants are phenol-based compounds and amine-based compounds. Examples of phenol-based compounds include hydroquinones, gallates, and hindered phenol compounds such as 2,6-di-tert-butyl-p-cresol, stearyl-β-(3,5-di-tert-butyl-4-hydroxyphenyl) propionate, 2,2'-methylenebis(4-methyl-6-tert-butylphenol), 4,4'-thiobis(3-methyl-6-tert-butylphenol), 1,1,3-tris(2-methyl-4-hydroxy-5-tert-butylphenyl)butane, 1,3,5-trimethyl-2,4,6-tris(3,5-di-tert-hydroxybenzyl)benzene, tris(3,5-di-tert-butyl-4-hydroxybenzyl)isocyanurate, and tetrakis[methylene-3(3',5'-di-tert-butyl-4-hydroxyphenyl)propionate]methane.

Examples of amine-based compounds include N,N'-diphenyl-p-phenylenediamine, phenyl-β-naphthylamine, phenyl-α-naphthylamine, N,N'-β-naphthyl-p-phenylenediamine, N,N'-diphenylethylenediamine, phenothiazine, N,N'-di-sec-butyl-p-phenylenediamine, and 4,4'-tetramethyl-diaminodiphenylmethane. Moreover, representative amine-based compounds are sulfur-based compounds and phosphorous-based compounds; examples of the former include dilaurylthiodipropionate, distearylthiodipropionate, laurylstearylthiodipropionate, dimyristylthiodipropionate, distearyl β,β'-thiodibutylate, 2-mercaptobenzoimidazole, and dilaurylsulfide; and examples of the latter include triphenylphosphite, trioctadecylphosphite, tridecylphosphite, trilauryltrithiophosphite, diphenylisodecylphosphite, trinonylphenylphosphite, distearylisodecylphosphite, trinonylphenylphosphite, and distearylpentaerythritolphosphite.

The recording solution of the present invention can contain therein a pH adjuster. Examples thereof include alkali metal hydroxides such as lithium hydroxide, sodium hydroxide, and potassium hydroxide; quaternary ammonium hydroxides; quaternary phosphonium hydroxides; alkali metal carbonates such as lithium carbonate, sodium carbonate, and potassium carbonate; amines such as diethanolamine, and triethanolamine; boric acid; hydrochloric acid; nitric acid; sulfuric acid; and acetic acid.

Existing coated papers designed for printing are coated papers such as so-called art papers (A0, A), A2 coated papers, A3 coated papers, B2 coated papers, light coated papers and fine coated papers used for the commercial printing, and is used for the offset printing and the gravure printing.

Examples of specific commercial products of cast coated paper are Mirror Coat Platinum (supplied from Oji Paper Co., Ltd.) and Esprit Coat C (supplied from Nippon Paper Industries Co., Ltd.).

Examples of specific commercial products of art paper include OK Kanefuji N, OK Kanefuji-R40N, SA Kanefuji N, Satin Kanefuji N, Satin Kanefuji-R40N, Ultrasatin Kanefuji N, Ultra OK Kanefuji N and Kanefuji one side (supplied from Oji Paper Co., Ltd.); NPi Special Art, NPi Super Art, NPi Super Dull and NPi Dull Art (supplied from Nippon Paper Industries Co., Ltd.); Utrillo Super Art, Utrillo Supper Dull and Utrillo Super Premium (supplied from Daio Paper Corporation); high quality Art A, Tokuhishi Art, Super Mat Art A, High-Quality Dull Art A (supplied from Mitsubishi Paper Mills Limited); Raicho Super Art N, Raicho Super Art MN, Raicho special Art and Raicho Dull Art N (supplied from Chuetsu Pulp & Paper Co., Ltd.).

Examples of the A2 coated papers include OK Top Coat + (Plus), OK Top Coat S, OK Casablanca, OK Casablanca V, OK Trinity, OK Trinity NaVi, New Age, New Age W, OK TOP Coat Mat N, OK Royal Coat, OK Top Coat Dull, Z Coat, OK Kasahime, OK Kasao, OK Ksao Satin, OK Top Coat +, OK Non-wrinkle, OK Coat V, OK Coat N Green, OK Mat Coat Green 100, New Age Green 100 and Z Coat Green 100 (supplied from Oji Paper Co., Ltd.); Aurora Coat, Shiraoi mat, Imperial Mat, Silver Diamond, Recycle Coat 100 and Cycle Mat 100 (supplied from Nippon Paper Industries Co., Ltd.); Mu Coat, Mu White, Mu Mat, White Mu Mat (supplied from Hokuetsu Paper Mills, Ltd.); Raicho Coat, Regina Raicho Coat 100, Raicho Mat Coat N, Regina Raicho Mat 100 (supplied from Chuetsu Pulp & Paper Co., Ltd.); Pearl Coat, White Pearl Coat, New V Mat, White New V Mat, Pearl Coat REW, White Pearl Coat NREW, New V Mat REW and White New V Mat REW (supplied from Mitsubishi Paper Mills Limited).

Examples of the A3 coated (light coated) papers include OK Coat L, Royal Coat L, OK coat LR, OK White L, OK Royal Coat LR, OK Coat L Green, OK Mat Coat L100, Aurora L, Recycle Mat L100, <SSS> Energy White (supplied from Nippon Paper Industries Co., Ltd.); Utrillo Coat L, Matthies Coat (supplied from Daio Paper Corporation); Hi Alpha, Alpha Mat, (N) Kinmari L, Kinmari HiL (supplied from Hokuetsu Paper Mills, Ltd.); N Pearl Coat, N Pearl Coat LREW, Swing Mat REW (supplied from Mitsubishi Paper Mills Limited); Super Emine, Emine, Chaton (supplied from Chuetsu Pulp & Paper Co., Ltd.).

Examples of the B2 coated papers (medium quality papers) include OK medium quality Coat, (F)MCOP, OK Astro Gloss, OK Astro Dull and OK Astro Mat (supplied from Oji Paper Co., Ltd.); and King 0 (supplied from Nippon Paper Industries Co., Ltd.).

Examples of the fine coated papers include OK Royal Light S Green, OK Ever Light Coat, OK ever light R, OK Ever Green, Clean Hit MG, OK fine coating Super Eco G, Eco Green Dull, OK fine coating mat Eco G100, OK Star Light Coat, OK Soft Royal, OK Bright, Green Hit G, Yamayuri Bright, Yamayuri Bright G, OK Aqua Light Coat, OK Royal Light S Green 100, OK Bright (rough, gloss), Snow Mat, Snow mat DX, OK Kasahime, OK Kasayuri (supplied from Oji Paper Co., Ltd.); Pyrene DX, Pegasus Hyper 8, Aurora S, Andes DX, Super Andes DX, Space DX, Seine DX, special Gravure DX, Pegasus , Silver Pegasus, Pegasus Harmony, Greenland DX 100, Super Greenland DX100, <SSS> Energy Soft, <SSS> Energy Light, EE Henry (supplied from Nippon Paper Industries Co., Ltd.); Kant Excel, Excel Super B, Excel Super C, Kant Excelbal, Utrillo Excel, Heyne Excel, Dante Excel (supplied from Daio Paper Corporation); Cosmo Ace (supplied from Nippon Daishowa Paperboard Co., Ltd.); Semi-Jo L, Hi Beta, Hi Gamma, Shiromari L, Hamming, White Hamming, Semi-Jo HiL, Shiromari HiL (supplied from Hokuetsu Paper Mills, Ltd.); Ruby light HREW, Pearl Soft, Ruby Light H (supplied from Mitsubishi Paper Mills Limited); Chaton, Ariso, Smash (supplied from Chuetsu Pulp & Paper Co., Ltd.); and Star Cherry, Super Cherry (supplied from Marusumi Paper Co., Ltd.)

As special coated paper, those that meet the requirement of the present invention can be used as the media of the present invention. Particularly, those having a high air permeability of the coating layer itself can be utilized. Those having the high air permeability include coated papers for some electrographs and coated papers for the gravure printing. Specifically POD Gloss Coat (Oji Paper Co., Ltd.), FL Gravure (Nippon Paper Industries Co., Ltd.) and Ace (Nippon Paper Industries Co., Ltd.) are included. These have an appropriately porosity in their coated layer, and can be applicable as the media of the present invention.

### <Printer>

The ink for the ink-media set can be suitably used for printers equipped with any types of inkjet head - a so-called piezoelectric type inkjet head where the volume of an ink flow path is changed for discharging of an ink drop by deforming a vibration plate that constitutes a wall of the ink flow path by using a piezoelectric element as a pressure generating means for applying pressure to the ink contained in the ink flow path (see JP-A No. 02-51734); a so-called thermal inkjet head where bubbles are generated by heating ink in an ink flow path by using an exothermic resistive element (see JP-A No. 61-59911); an electrostatic inkjet head where an electrode and a vibration plate which consitittues the wall of an ink flow path are disposed in opposed positions, and the volume of the ink flow path is changed to discharge ink by means of electrostatic power generated between the electrode and the vibration plate (see JP-A No. 06-71882); and so forth.

As described above, the recording media for the foregoing ink-media set is used in combination with the foregoing ink. The combined use of the recording media with ink is suitable in various fields and can be suitably used for image recording apparatus (e.g., printers) using the inkjet recording system, particularly for the following ink cartridge, ink recorded matter, inkjet recording apparatus and inkjet recording method of the present invention.

### <Ink Cartridge>

The ink cartridge includes a container which houses the ink of the ink media set therein, and further includes other members optionally selected as needed.

The container is not particularly limited, and its shape, structure, size and constituent materials can be optionally determined depending on the intended purpose; examples of such a container include those having at least an ink bag formed of an aluminum laminate film or a resin film.

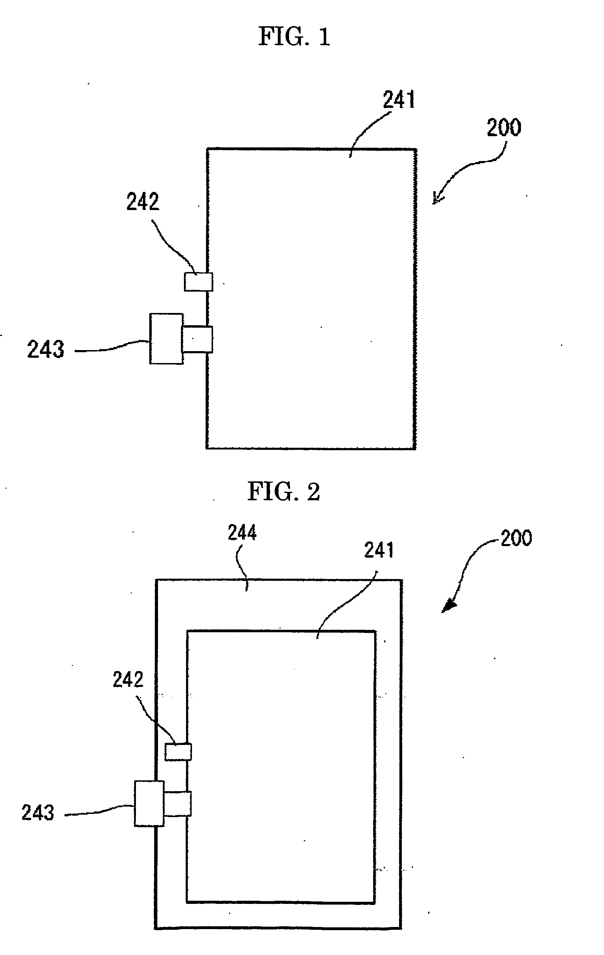

The ink cartridge will be described with reference to FIGS. 1 and 2. FIG. 1 shows an example of an ink cartridge, and FIG. 2 shows the ink cartridge, including a case (outer package) for the ink cartridge.

As shown in FIG. 1, in the ink cartridge 200, ink is loaded in an ink bag 241 ink from an ink inlet 242, and after evacuation of air, the ink inlet 242 is closed by fusion bonding. In actual use, a needle attached to the main body of the image recording apparatus is inserted into an ink outlet 243 composed of a rubber member for ink supply.

The ink bag 241 is formed of a packing member such as aluminum laminate film having no air permeability. As shown in FIG. 2, this ink bag 241 is typically housed in a cartridge case 244 made of plastic, designed for detachable mounting to a variety of inkjet recording apparatus for use.

The ink cartridge houses the ink of the ink-media set and can be mounted to various inkjet recording apparatus for use. It is particularly preferable to mount it to the inkjet recording apparatus to be described below.

### <Inkjet Recording Apparatus and Inkjet Recording Method>

The inkjet recording apparatus includes at least an jetting unit, and where necessary, further includes additional unit(s) optionally selected, such as a stimulation generating unit and/or a controlling unit.

The inkjet recording method of the present invention includes at least an inkjet step, and where necessary, further includes additional step(s) optionally selected, such as a stimulation generating step and/or a controlling step.

The inkjet recording method of the present invention can be suitably carried out by the inkjet recording apparatus, and the inkjet step can be suitably performed by the jetting unit. The additional steps can be suitably performed by the additional units.

### -Inkjet Step and Jetting Unit-

The inkjet step is a step for recording an image on a recording media by applying stimulation to an ink for jetting drops of the ink onto the media.

The jetting unit is a unit configured to record an image on a recording media by applying stimulation to an ink to jet ink droplets onto the media. The jetting unit is not limited to specific one, and examples thereof include various nozzles used for ink discharge.

In the present invention, it is preferable that at least portions of a liquid chamber section, a fluid resistance section, a vibration plate and a nozzle member of the inkjet head be formed from materials containing at least one of silicon and nickel. The nozzle diameter of the inkjet head is preferably 30µm or less and more preferably 1µm to 20µm. It is preferable to provide an ink-supplying sub-tank on the inkjet head so that ink is reloaded in the sub-tank from the ink cartridge via a supply tube. Moreover, it is preferable in the present invention that a maximum deposited-ink amount range from 8 g/m² to 20 g/m² for printing of an image with resolution of 300 dpi.

Stimulation can be generated using the stimulation generating unit. The stimulation is not particularly limited, can be optionally selected heat, pressure, vibration. light, etc., depending on the intended purpose. These stimulations may be used singly or in combination. Among them, heat and pressure are suitably used.

Examples of the stimulation generating unit include heating apparatus, pressurizing apparatus, piezoelectric elements, vibration generating apparatus, ultrasound oscillators and light. Specifically, for example, piezoelectric actuators such as piezoelectric elements, thermal actuators utilizing phase change achieved by using the membrane boiling of a liquid using an electro-thermal exchange element such as an exothermic resistance, shape-memory alloy actuators using metallic phase change by thermal change, and electrostatic actuators using electrostatic power are used.

The method of ink jet is not particularly limited and differs depending on the types of stimulation adopted. For example, in the case of "heat" an example of such a such method is one where thermal energy corresponding to a recording signal is imparted to the ink in the recording head using a thermal head or the like, generating air bubbles in the ink by the thermal energy and discharging or jetting the ink in the form of droplets from nozzles of the recording head by the pressure of the air bubbles. In addition, in the case of "pressure", for example, a method is adopted where voltage is applied to a piezoelectric element attached at a portion called a pressure chamber in the ink flow path of the recording head, whereby the piezoelectric element is bent and the volume of the pressure chamber is reduced, discharging or jetting ink in the form of droplets from nozzles of the recording head.

The volume of the droplet of the discharged ink is preferably 1 pl to 40 pl, the discharging speed is preferably 5 m/s to 20 m/s, the driving frequency is preferably 1 kHz or higher, and the resolution of the resultant image is preferably 300 dpi or more. The controlling unit is not particularly limited as long as it is capable of control of the operation of each of the foregoing units, and can be optionally selected depending on the intended purpose; examples include such devices as sequencers and computers.

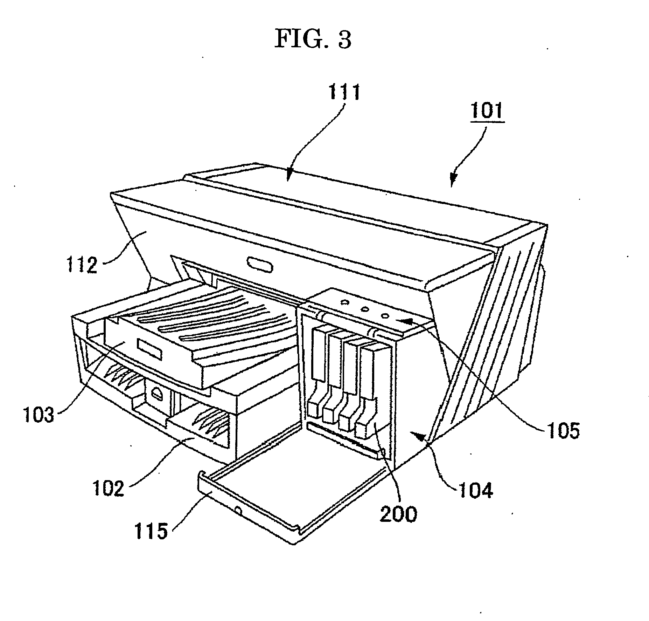

One embodiment for carrying out the inkjet recording method of the present invention using the inkjet recording apparatus will be described with reference to the drawings. The inkjet recording apparatus shown in FIG. 3 includes a main body 101, a feed tray 102 for feeding paper sheets loaded onto the main body 101, an output tray 103 which receives image-recorded paper sheets and which is mounted to the main body 101, and an ink cartridge loading section 104. An operation section 105 provided with operation keys, a display, etc., is disposed on the top of the ink cartridge loading section 104. The ink cartridge loading section 104 includes an openable front cover 115, a cover that is opened for attachment or detachment of an ink cartridge 200.

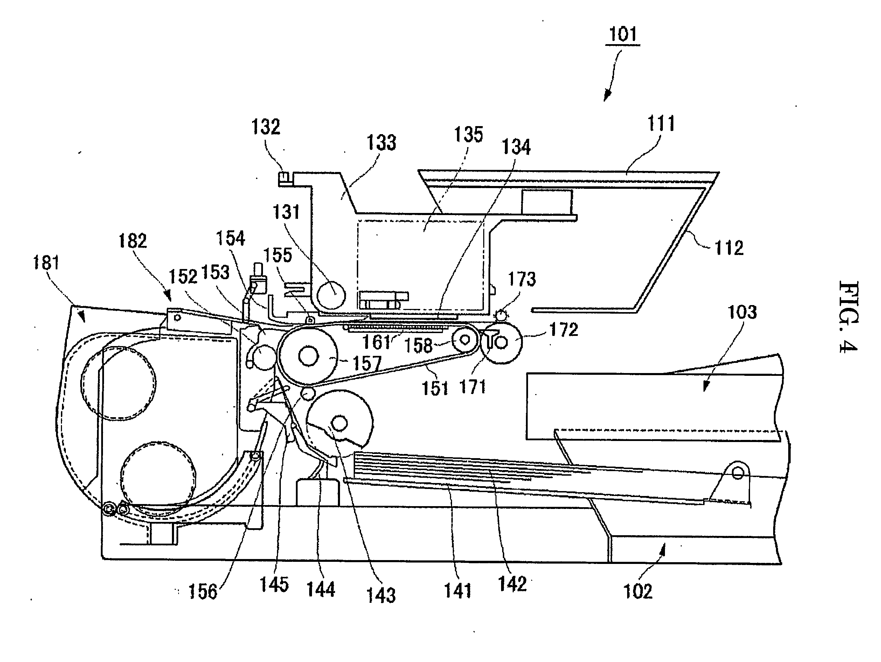

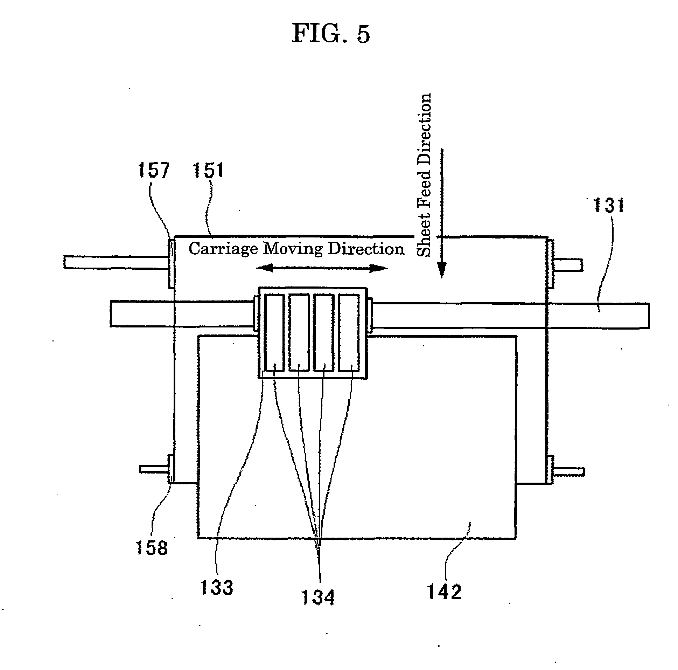

As shown in FIGS 4 and 5, a carriage 133 is retained by both a guide rod 131, a guide member bridged between unillustrated right and left side plates, and a stay 132 so as to be slidable in a main scanning direction (horizontal direction), and is moved by a main scanning motor (not shown) in the arrow direction in FIG. 5.

A recording head (134), which is composed of four inkjet recording heads that respectively discharge droplets of yellow (Y), cyan (C), magenta (M) and black (B) inks, is mounted to the carriage 133 in such a way that multiple ink discharge openings are arranged in a direction vertical to the main scanning direction, with the openings oriented to face a paper sheet 142.

For the inkjet recording heads constituting the recording head 134, it is possible to adopt those equipped with a piezoelectric actuator such as piezoelectric element, a thermal actuator that utilizes phase change by membrane boiling of the liquid using an electric thermal conversion element like an exothermal resistive element, a shape memory alloy actuator that utilizes metallic phase change by thermal change, or an electrostatic actuator that utilizes electrostatic power, as an energy generation unit for discharging ink droplets for recording.

The carriage 133 carries a sub-tank 135 for each of the inks of different colors to supply each color ink to the recording head 134. The ink in the ink media set is supplied from the ink cartridge (201), which is loaded in the ink cartridge loading section 104, to the sub-tank 135 through an ink supply tube (not shown).

Meanwhile, a feed section for feeding paper sheets 142 stacked on a paper stack sectioin (pressure plate) 141 of the feed tray 103 includes a half moon-shaped roller (feed roller 143) for feeding the paper sheets on a one-by-one basis from the paper stack section 141, and a separation pad 144 which is positioned to face the feed roller 143 and made of material with a large friction coefficient. The separation pad 144 is biased toward the feed roller 143.

A transferring section for transferring a paper sheet 142 supplied from the feed section at a position beneath the recording head 134 includes a transfer belt 151 for transferring the paper sheet 142 by electrostatically attaching it to the belt, a counter roller 152 for transferring the paper sheet 142 that has been sent via a guide 145 from the feed section by sandwiching it with the feed belt 151, a transfer guide 153 for allowing the paper sheet 142 that is running in a substantially vertical direction to be placed on the feeding belt 151 by changing its running direction by about 90°, and a tip pressurizing roller 155 biased toward the transfer belt 151 side by means of a push member 154. An electrical charged roller 156, an electrical charging means to charge a surface of the transfer belt 151, is also provided.

The transfer belt is an endless belt, is disposed between a transfer roller 157 and a tension roller 158, and is capable of rotating in a belt transfer direction. This transfer belt 151 includes (1) a surface layer that constitutes a sheet attachment surface made of resin material of about 40µm thickness that has undergone no resistance control, e.g., a , copolymer of tetrafluoroethylene and ethylene, or ETFE, and (2) a back layer (medium resistant layer, an earth layer) that is made of the same material as the surface layer and that has undergone resistance control using carbon. A guide member 161 is disposed on the backside of the feeding belt 151 in a region corresponding to the printing region by means of the recording head 134. An output section for outputting the paper sheet 142 having an image recorded by the recording head 134 comprises a separation claw 171 for separating the paper sheet 142 from the feeding belt 151, an output roller 172, and an output roller 173. An output tray 103 is disposed under the output roller 172.

A double-sided printing feed unit 181 is detachably mounted to the backside of the main body 101. The double-sided printing feed unit 181 receives a paper sheet 142 returned by backward rotation of the feeding belt 151, inverting the paper 142 and transferring it between the counter roller 152 and the feeding belt 151 again. A manual feed section 182 is provided on the upper surface of the double-sided printing feed unit 181.

In this inkjet recording apparatus, the paper sheets 142 are separated from one another and supplied one by one from the feed section, the paper sheet 142 supplied in a substantially vertical direction is guided by the guide 145, and transferred by being sandwiched between the transfer belt 151 and the counter roller 152. The tip of the paper sheet is further guided by the transfer guide 153 and pressed against the transfer belt 151 by the tip pressurizing roller 155, whereby its transfer direction is changed by about 90°.

At this point, the transfer belt 151 is charged by the electrical charging roller 156, and the paper sheet 142 is attached thereto electrostatically for transferr. Ink droplets are discharged onto the stopped paper sheet 142 for one-line recording by driving the recording head 134 according to the image signals while moving the carriage 133, and recording for the next line is carried out after feeding the paper sheet 142 by a given distance. The recording operation is terminated upon receipt of either a recording termination signal or a signal that is output when the rear end of the paper sheet 142 has reached the recording region, discharging the paper sheet onto the output tray 103.

When it is determined that the ink level in the sub-tank 135 has reached near-end, a given amount of ink is supplied from the ink cartridge 201 to the sub-tank 135.

In this inkjet recording apparatus, when the ink in the ink cartridge 201 is finished up, the housing case in the ink cartridge 201 can be disassembled and only the inside ink bag can be replaced by a new one. Even when the ink cartridge is mounted upright to the front side of an image recording apparatus, stable ink supply can be achieved. Thus, even when the image recording apparatus is placed in a place where no space can be ensured above the main body 101 - for example, when it is housed in a rack or when an object is placed over the main body 101 - it is possible to readily replace the ink cartridge 200.

Although description has been provided with an example in which the ink cartridge is applied to a serial type (shuttle type) inkjet recording apparatus having a carriage that moves across the apparatus, the ink cartridge can be also applied to a line type inkjet recording apparatus having a line type head.

The inkjet recording apparatus and inkjet recording method of the present invention can be applied to various inkjet recording schemes, and can be suitably applied for instance to inkjet printers, facsimile machines, copying machines, and multi-use machines equipped with a printer, a facsimile and a copier.

Hereinafter, an inkjet head to which the present invention has been applied will be described.

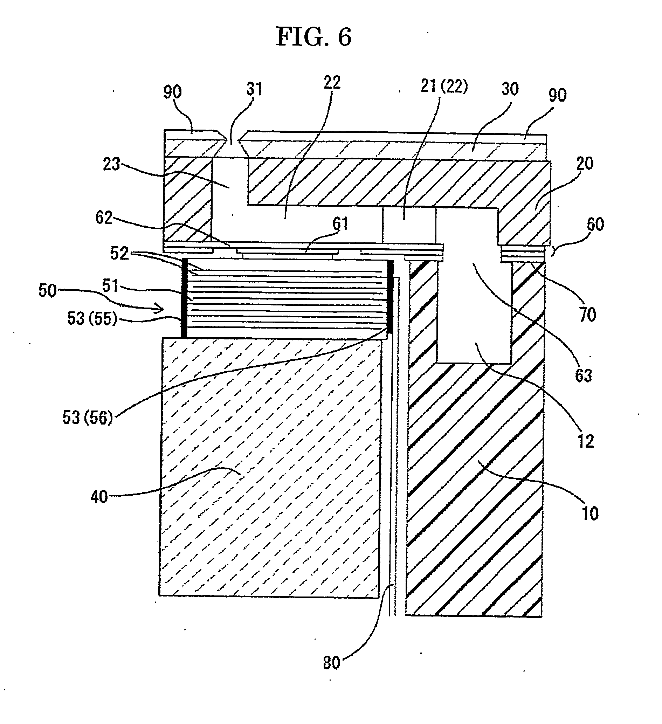

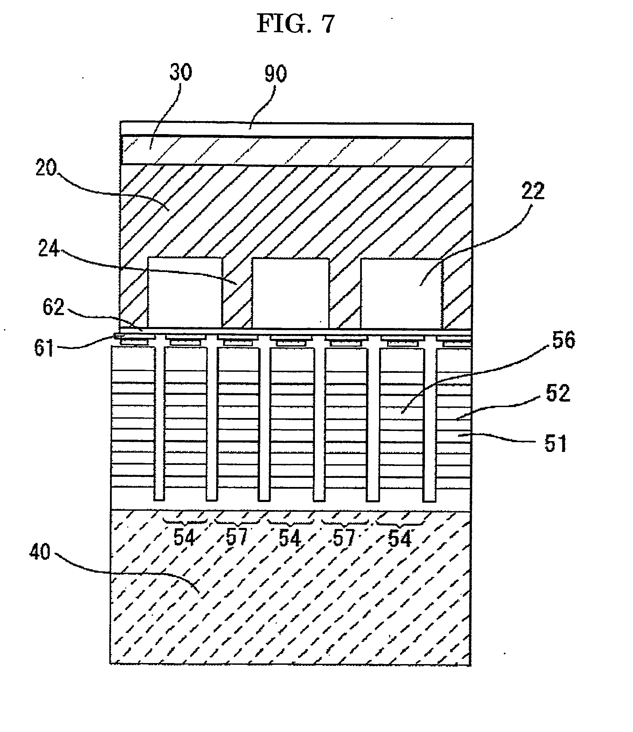

FIG. 6 is an element enlarged view of the inkjet head, and FIG. 7 is a substantial part enlarged sectional view of the same head, cut along a direction such that all channels are exposed.

As shown in FIG. 6, this inkjet head includes an engraved frame 10 that defines a common liquid chamber 12 and unillustrated ink feed ports through which ink is supplied in a direction from the viewer to the backside of the drawing; fluid resistance sections 21; a flow path plate 20 that has engraved portions defining pressurized liquid chambers 22 and has communication openings 23 that communicate with nozzles 31; a nozzle plate 30 that defines the nozzles 31; a vibration plate 60 that includes a convex 61, a diaphragm 62 and an ink inlets 63; laminated piezoelectric elements 50 bonded to the vibration plate 60 with an adhesion layer 70; and a base 40 having the laminated piezoelectric element 50 fixed thereto. The base 40 is composed of barium titanate-based ceramic, and fixes the laminated piezoelectric elements 50 by arranging them in two lines.

The laminated piezoelectric element 50 is composed alternating piezoelectric layers made of titanic acid zirconic acid plumbum (PZT) with a thickness of 10-50 µm/per layer and internal electrode layers made of silver/palladium (AgPd) with a thickness of several µm/per layer. Each of the internal electrode layer is connected at both ends to an external electrode 53.

The laminated piezoelectric element 50 is subjected to half cut-dicing processing to form a comb shape, and the resultant teeth are alternately used as driving parts 56 and supporting parts 57 (non-driving parts) as shown in FIG. 7. The outside of one of the two external electrodes 53 (either one coming out of the drawing or one behind the drawing), which the outside is connected to one end of the alternating internal electrode layers 52, is limited in length by such processing as cutting so as to be divided into sections by the subsequent half cut-dicing processing, which the sections in turn constitute multiple individual electrodes. The other external electrode 53 is not subjected to any cut dicing processing and is thus entirely conductive, thereby serving as a common electrode 55.

A FPC 80 is bonded with solder to the individual electrode 54 of each driving part 53. The common electrode 55 is connected to the Gnd electrode of the FPC80 via an electrode layer provided at an end of the laminated piezoelectric element 50. An unillustrated driver IC is mounted on the FPC80, which controls application of driving voltage to the driving parts 56.

The vibration plate 60 includes the diaphragm part 62 formed of a thin film; a convex (island-shaped part) bonded to the laminated piezoelectric element 50 which includes the driving parts 56 and which is arranged at the center of this diaphragm 62; a beam-containing thick film part (not shown) bonded to the supporting parts, and openings that constitutes the ink inlets 63 by stacking two Ni-plated films by electrotyping. The diaphragm 62 is 3µm in thickness and 35 µm in width (one side).

Bonding between the convex 61 of this vibration plate 60 and the driving parts 56 of the laminated piezoelectric element 50, and bonding between the vibration plate 60 and the frame 10 are established by patterning an adhesion layer 70 containing a gap material.

A silicon monocrystal plate is prepared for the flow path plate 20, and portions defining the fluid resistance sections 21 and pressurized liquid chambers 22 are patterned by etching, as well as through holes that constitute the communication openings 23 at positions corresponding to the nozzles 31.

Portions of the flow path plate 20 that have not been subjected to etching constitute partition walls 24 of the pressurized liquid chambers 22. Note in this inkjet head that etching width was made small for some portions of the flow path plate 20 to form the fluid resistance sections 21.

A nozzle plate 30 is made of metallic material, e.g., formed of a Ni-plated film by electrotyping and has many nozzles 31- small openings through which ink droplets are discharged. Each nozzle 31 is so configured as to have a horn shape (may be of substantially circular shape or substantially circular cone shape). Each nozzle 31 is about 20µm to 35µm in diameter as measured at its ink discharge side. The nozzle pitch in each nozzle row is set in such a way such that resolution becomes 150 dpi. The frame 10 in which engraved portions that define the ink feed ports and common liquid chamber 12 are to be formed is fabricated by resin molding.

In the inkjet head configured in this way, applying a driving wave pattern (pulse voltage of 10-50V) to the driving parts 56 in accordance with recording signals cause deformation of the driving parts 56 in the direction in which they are stacked, pressing the pressurized liquid chamber 22 via the vibration plate 60 to cause pressure increase in the chamber 22, whereby ink droplets are discharged from the nozzles 31.

After discharge of ink drops stopped, the pressure of ink in the pressurized liquid chambers 22 is reduced, and the negative pressure occurs therein as a result of the ink flow inertia and electric discharge process of driving pulse. In this way the process proceeds to the ink loading step, where ink is supplied from the ink tank, flows into the common liquid chamber 12, passes through the ink inlets 63 and fluid resistance sections 21, and flows into the pressurized liquid chambers 22.

While the fluid resistance section 21 has an effect of attenuating the residual vibration after ink discharge, it inhibits ink refilling that is achieved by means of surface tension. A balance can be struck between attenuation of the residual pressure and refilling time by selecting appropriate fluid resistance sections to be operated, whereby it is possible to shorten the time (or driving cycle) it takes before the next inkjet operation.

The nozzle surfaces of an inkjet head that can be used may be coated with water-repellent material. A coat of water-repellent material repels smudge-causing liquid, preventing the liquid from contacting the nozzle surfaces and thus avoiding clogging of the orifices or discharge outlets by the solidified smudge particles. Given that such smudge particles have been attached, their bonding force is weak.

Meanwhile, when a low-surface tension ink is used in normal nozzle surface the ink migrates to the vicinity of the opening, resulting in failure to form a normal meniscus in some cases. In such a situation, curved ink discharge and/or ink discharge failure occur. When the nozzle surface is covered with water-repellent material, however, the ink stays inside the nozzles without migrating to the vicinity of the openings, thus enabling normal ink discharge.

A coat of water-repellent material may be formed either by vacuum deposition or application of a water-repellent material dissolved in suitable solvent. In the former method a water-repellent film can be formed on the orifice surfaces by evaculating a vacuum vessel to a certain degree of vacuum using a vacuum pump, vaporizing the water-repellent material by heating it to 400°C, introducing the vaporized water-repellent material into the vessel, supplying power to discharge electrodes from a radio frequency source while adjusting the vacuum condition to thereby form a RF glow discharge, and exposing the orifice surfaces of the inkjet heat to the resultant plasma. Note that it is also possible to form such a water-repellent film at low temperatures ranging above from room temperature to about 200°C depending on the water-repellent material and the degree of vacuum in the vacuum vessel. In the latter method a water-repellent film can be formed by dissolving a water-repellent material in organic solvent and by applying the resultant solution onto the orifice surface by doctor blade coating, wire bar coating, spin coating on a spin coater, spray coating, or dipping coating that involves dipping of the inkjet head in a container filled with the solution.

Usable water-repellent materials are fluorine-containing organic compounds, particularly fluoroalkyl group-containing organic compounds and dimethylsiloxane skeleton-containing organic silicon compounds.

Preferred examples of fluorine-containing organic compounds are fluoroalkylsilanes, fluoroalkyl group-containing alkanes, fluoroalkyl group-containing carboxylic acids, fluoroalkyl group-containing alcohols, and fluoroalkyl group-containing amines. Specific examples of fluoroalkylsilanes include heptadecafluoro-1,1,2,2-tetrahydrodecyltrimethoxysilane and heptadecaffuoro-1,1,2,2-tetrahydrotrichlorosilane; specific examples of fluoroalkyl group-containing alkanes include octafluorocyclobutane, perfluoromethylcyclohexane, perfluoro-n-hexane, perfluoro-n-heptane, tetradecafluoro-2-methylpentane, perfluorododecane and perfluoroicosane; specific examples of fluoroalkyl group-containing carboxylic acids include perfluorodecanoic acid and perfluoro octanoic acid; examples of fluoroalkyl group-containing alcohols include 3,3,4,4,5,5,5-heptafluoro-2-pentanol; specific examples of fluoroalkyl group-containing amines include heptadecafluoro-1,1,2,2-tetrahydrodecylamine; and specific examples of dimethylsiloxane skeleton-containing organic silicon compounds include α,w-bis(3-aminopropyl)polydimethylsiloxane, α,w-bis(3-glycidoxypropyl)polydimethylsiloxane and α,w-bis(vinyl)polydimethylsiloxane.

As other water-repellent materials, silicon-containing organic compounds, particularly alkylsiloxane group-containing organic compounds can be used.

Examples of alkylsiloxane group-containing organic compounds include alkylsiloxane-containing epoxy resins in which an alkylsiloxane group and two or more cyclic aliphatic epoxy groups are contained in a molecule constituting its resin composition. Examples of alkylsiloxane-containing epoxy resins are polymer compounds (A) having moieties represented by the following General Formulae (a) and (b). 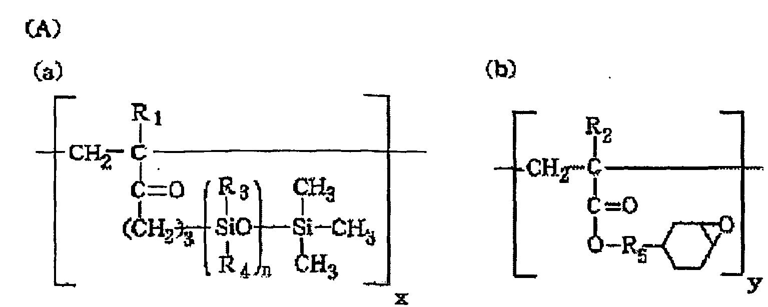 where x is an integer of 1 to 50, y is an integer of 2 to100, and n is an integer of 2 to10
R¹ and R² independently represent -H or -CH3
R³ and R⁴ independently represent -CH3 or benzene ring

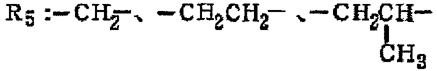

Compounds having the above structure also serve as binder when used in combination with other water-repellent compounds. That is, they impart a function of increasing the suitability of the ink-repellent composition for coating and improving workability as an ink drying film for facilitating ink drying after solvent has been evaporated.

The thickness of the water-repellent film is preferably 5µm or less, more preferably 2µm or less. A thickness of greater than 5µm may result in poor productivity due to slow film drying time and/or in reduction in its mechanical durability that increases the likelihood of film separation upon wiping.

### <Image Formation Scheme>

The image processing method used in the present invention is not specifically limited, but it is desirable to transfer a high-definition original image at high rates and to print it without reducing the resolution of the original image.
The image data is compressed by the control unit of a computer or the like and transferred to the printer at a high rate, where an image is simply reconstructed. With this scheme it is possible to ensure both high-rate data transfer and image resolution. This image formation scheme will be described in detail below.

When an image to be printed has a high resolution or many levels of gray scale, the amount of image data to be input increases and thus it takes time to transfer it to the storage device and, furthermore, it takes time for the storage device to process the image and for a host who manages image recoding to print it. To avoid this, in the present invention, a set of 4 pixels (2 x 2) is considered to be a single pixel, whereby the amount of image information is reduced by a factor of 4 and the recording time is shortened consequently. This reduces the image resolution, however, there is a preventive measure for this which will be described later.

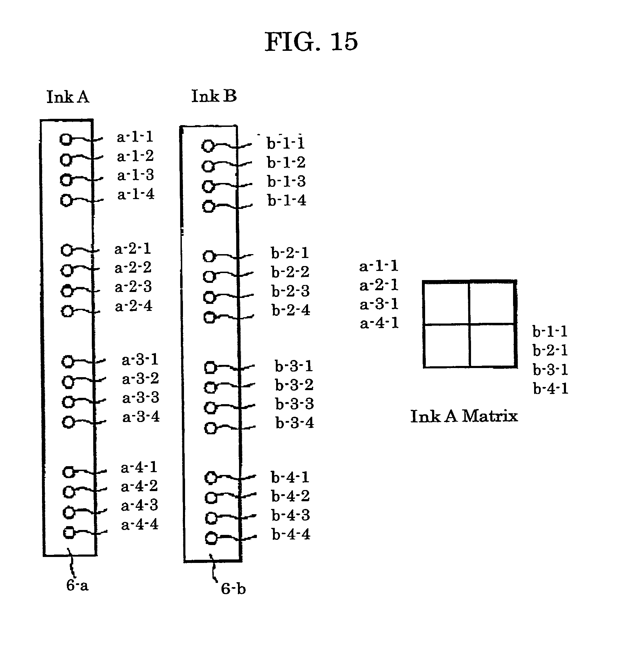

Assuming that a set of recording element rows each consisting of multiple recording elements is used and that multi-pass (4-pass) recording is carried out using for instance inkjet element rows shown in FIG. 15, each of which consisting of 16 recording elements arranged in a main scanning direction, recording elements capable of formation of a pixel on a recording media can be selected from 4 recording elements - a⁻ 1-1, a-2-1, a-3-1 and a-4-1- when specifically referring to the element row "6-a" among those shown in FIG. 15.

When applying two ink dots for a pixel in this method of using multiple more ink dots for a pixel, there are six possible combinations of recording elements (₄C₂ = 6) for each row of the recording elements shown in FIG. 15,

Moreover, in cases where multiple deep and light inks are used, where rows of recording elements that discharge multiple inks of the same concentration are used, or where ink droplets with different volumes are discharged for the formation of large or small dots, the number of possible combinations of the recording elements increases. For example, when a combination of deep and light inks is to be used that is configured such that the optical density of dark ink on the recording media is substantially twice that of light ink and/or when a combination of inks is to be used that is configured such that the ink droplet for large dot is approximately twice that for small dot, the following strategy is taken.

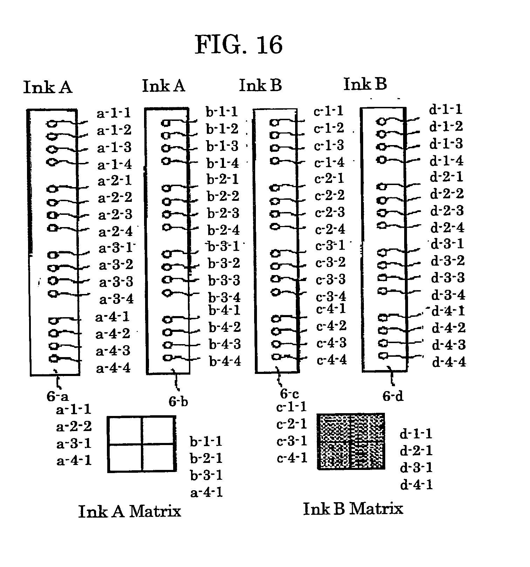

FIG. 16 shows rows of inkjet elements, consisting of a set of two recording element rows (6-a, 6-b) capable of recording unequally sized dots of light ink (Ink A) and a set of two recording element rows (6-c, 6-d) capable of recording unequally sized dots of deep ink (Ink B). A number of gray scale levels can be provided when limiting the maximum number of ink droplets to be applied to substantially the same pixel to 2 (for large dots) and 2 (for small dots).

Assuming that rows of recording elements pass above a given point of recording media 4 times for reproducing a certain level of gray scale, there are a number of combinations of which ink dot is adopted and which pass that the ink dot is recorded when considering the number of possible combinations of recording element(s) used for printing on that point. In the present invention, combinations of which nozzles are operated are stored as a table (combination table: Second Table), and appropriate combinations are selected according to the input image.

Herein a series of combinations of recording elements that are actually used are selected by managing at the same time the number of dots for dark and light inks and the recording elements used to record those dots.

Note in the combination table that the number of possible combinations of recording elements significantly increases with increasing number of levels of ink density, increasing number of available ink droplet sizes, increasing number of recording elements, and increasing number of passes during the multi-pass recording. - For this reason, it is desirable to store a limited number of combinations in actual use, and by doing so, it contributes to speedup in image recording. At this point it is also possible to control the combination such that the total ink amount meets the requirement set forth in the present invention.

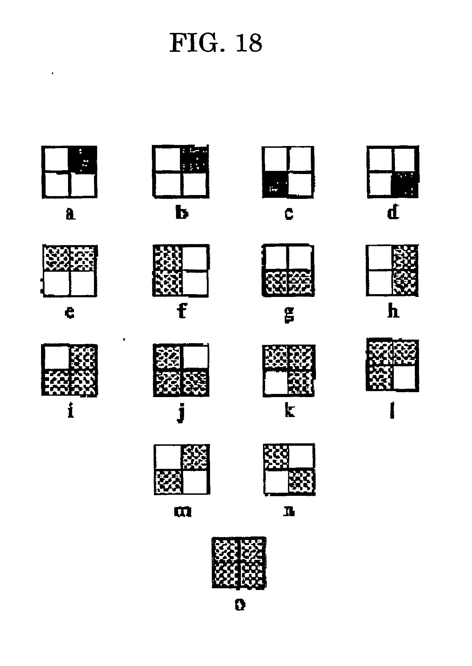

FIG. 18 shows an example of combinations of recording elements stored. As shown in (a)-(o) of this drawing, even when the same gray scale level are to be provided in each set of 2 x 2 pixels, some pixels have different levels of gray scale than others and some are not. The variations in gray scale level in each pixel set is referred to as a "density distribution (patterns of density distribution in the recorded pixel)."

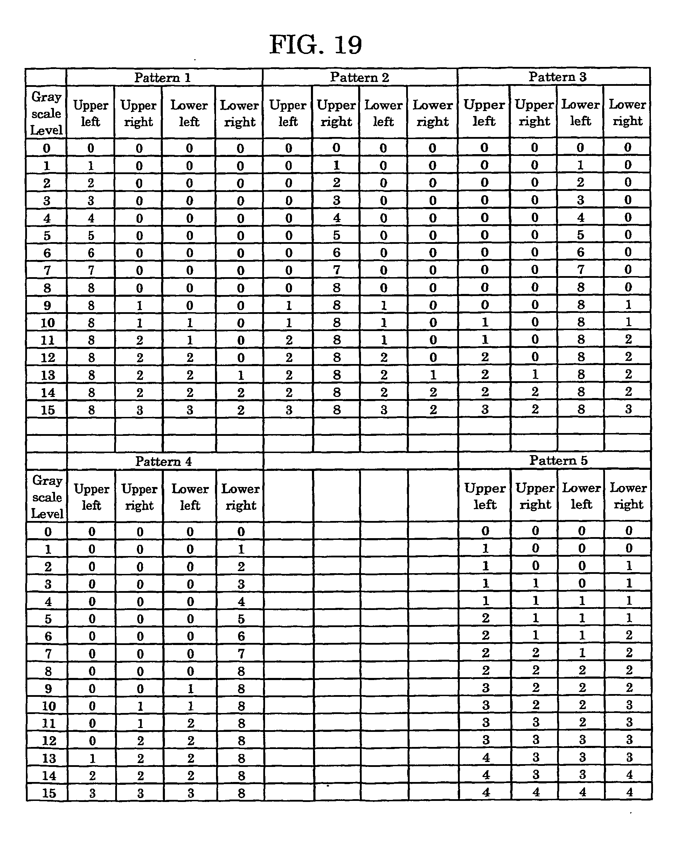

The patterns of density distribution in the pixel sets are stored together with the ink combination table (First Table) in the ink combination table under the categories (a)-(o) shown in FIG. 18, for example. FIG. 19 is an example of the ink combination table (First Table) prepared in this way, where only 5 patterns (patterns 1-5) are shown for simplicity purpose. Each number in the columns of pattern represents the number of ink droplets applied to a single pixel of a set of 2 x 2 pixels where up to 16 ink droplets are applied in the pixel set, the ink droplets constituting the density distribution pattern.

There is an occasion where the gray scale level of a certain pixel of the input image fails to match the gray scale level of the corresponding pixel in the image to be printed with a combination selected from the table based on the pixel count of the input image. Even when there is a slight different in the gray scale level between them, it is possible to develop image data by reducing the information amount of the input image and to print it without reducing the resolution of the printed image.

The method of selecting a certain pattern from the combination table on the basis of the gray scale level of the corresponding pixel of the input image is not specifically limited; for example, the following method can be used: When the gray scale level of a unit pixel (e.g., the left top pixel of a 2 x 2 pixel set) is separated from the total and average values of the gray scale level of the 2 x 2 pixels by a given amount or more, a pattern according to the characteristics of the 4 pixels is selected; on the other hand, when the gray scale level of a unit pixel of interest is not separated from the average of the gray scale levels of 4 the pixels by a given amount, it is assumed that the of gray scale levels of the other three unit pixels are not also separated from the average by that amount.

It ends up selecting from different combinations selected in that way a gray scale level and a combination of recording elements for each pixel, based on the input image. In a case where there are multiple possible combinations of gray scale levels, patterns and recording elements, which the combinations provide substantially the same gray scale level, more specifically in a case where there are three combinations (A, B and C) that provide substantially the same gray scale level, these combinations are used sequentially, i.e., ABCABCABC ... for recording of pixels with the gray scale level. Alternatively, the three combinations may be used randomly e.g., in the order of ACBCBABBCAA...., but the method of randomization is not specifically limited.

Hereinafter, the configuration and operation of the inkjet recording apparatus will be described. Description will be given using as an example printing of a high-definition medical X-ray image with a resolution of 600 dpi and 256 levels of gray scale using black ink, wherein a print pixel is composed of 4 (2 x 2) unit pixels, where the maximum number of ink droplets applicable to each unit pixel is set to 4, and where the total number of ink droplets applicable within the print pixel is set to 8.

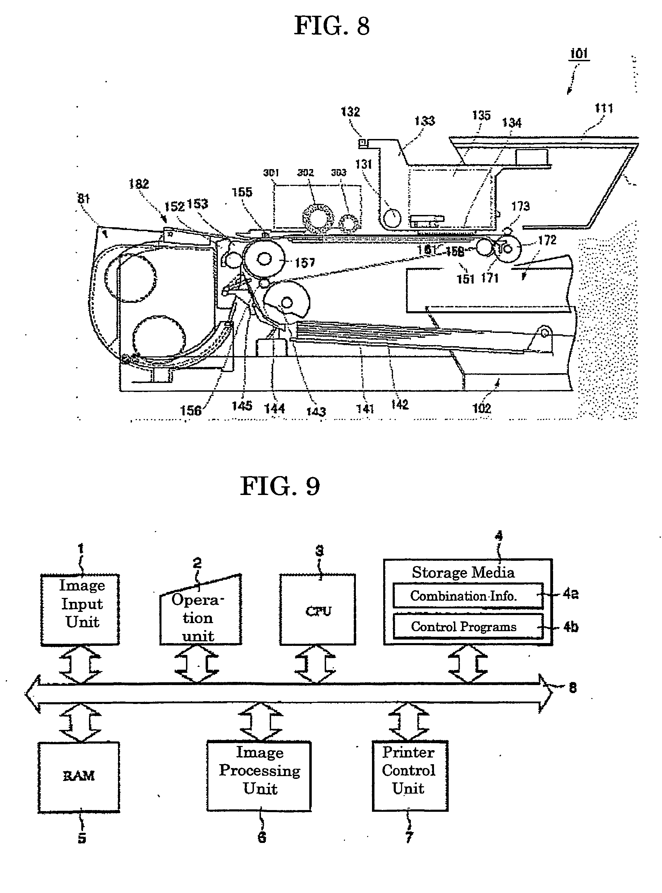

FIG. 9 is a block diagram showing the configuration of the inkjet recording apparatus according to the present embodiment. In the drawing reference numeral (1) denotes an image input unit; (2), an operation unit; (3), a central processing unit (CPU) performing various types of processing; (4), a storage media for storing various types of data, wherein recording element combination information (4a) presented in a table form and various control programs (4b) are stored; (5), a RAM; (6), an image processing unit; (7), a printer control unit for controlling image output; and (8), a bus unit (bus line) through which various data are transmitted.

The image input unit (1) is composed for instance of a scanner or digital camera. The operation unit (2) includes various keys that allow users to set various parameters and to start printing. The CPU (3) controls the entire operation of the inkjet recording apparatus in accordance with various programs stored in the storage medium (4).

The storage medium (4) stores programs such as control programs and error correction programs by which the inkjet recording apparatus is operated. The operation of the inkjet recording apparatus is entirely controlled by these programs. Examples of such a storage medium (4) for storing the programs are ROMs, FDs, CD-ROMs, HDs, memory cards, and magneto optical discs.

The RAM (5) is used as a work area for the programs stored in the storage medium (4), as a temporal refuge area for error processing, and as a work area for image processing. The RAM (5) can also copy various tables stored in the storage medium (4), changes the content of the table, and advances predetermined image processing while referring to the changed table.

The image processing unit (6) generates ink discharge patterns that enable many levels of gray scale by inkjet printing, based on the input image. The printer unit (7) creates a dot image based on the discharge pattern created in the image processing unit (6) during image recording. The bus line (8) transmits the address signals, data, control signals, etc., in the inkjet recording apparatus.

The recording element combination information (4a) described above further has data regarding the ink(s) to be used. Although one type of ink is adopted here, both light and deep ink may be prepared for each ink for the purpose of forming ink dots that have the same color but differ in density, as described later. This is effective in reproducing many levels of gray scale in the original.

When a unit pixel is to be composed of up to 4 ink dots of the inks, there are a number of possible combinations of inks that are capable of presenting a record pixel consisting of 4 (2 x 2) unit pixels. In the present embodiment a total of 144 plus 1 combinations is used for a set of 4 pixels: For each of 8 level of gray scale, a total of 5 patterns are prepared (4 different patterns in which the density of the left top or right top of the 4 unit pixels is increased plus a pattern in which the density is uniform over the 4 unit pixels).

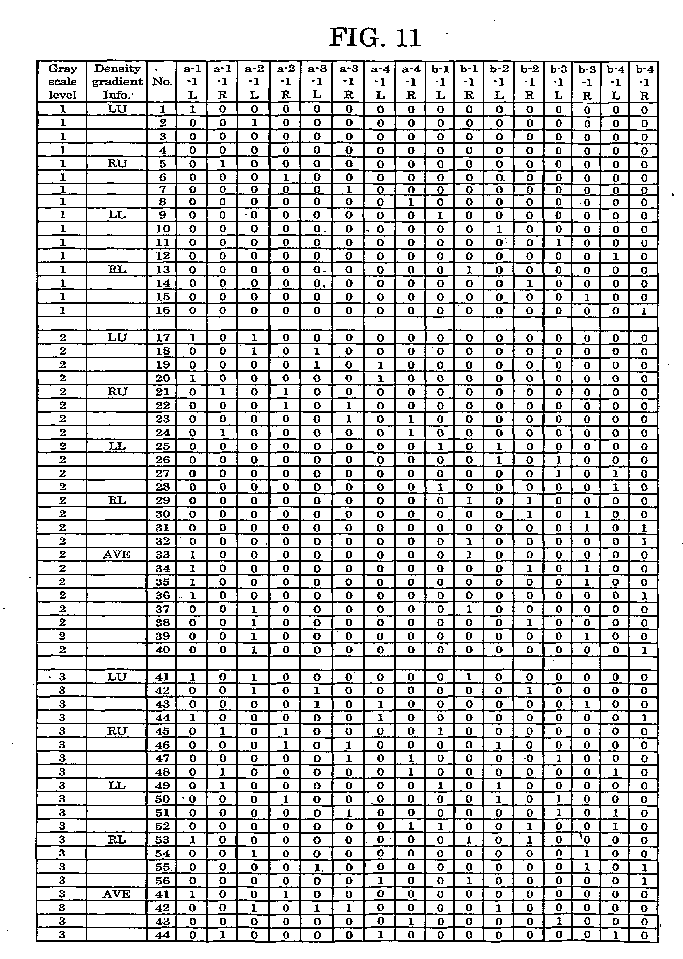

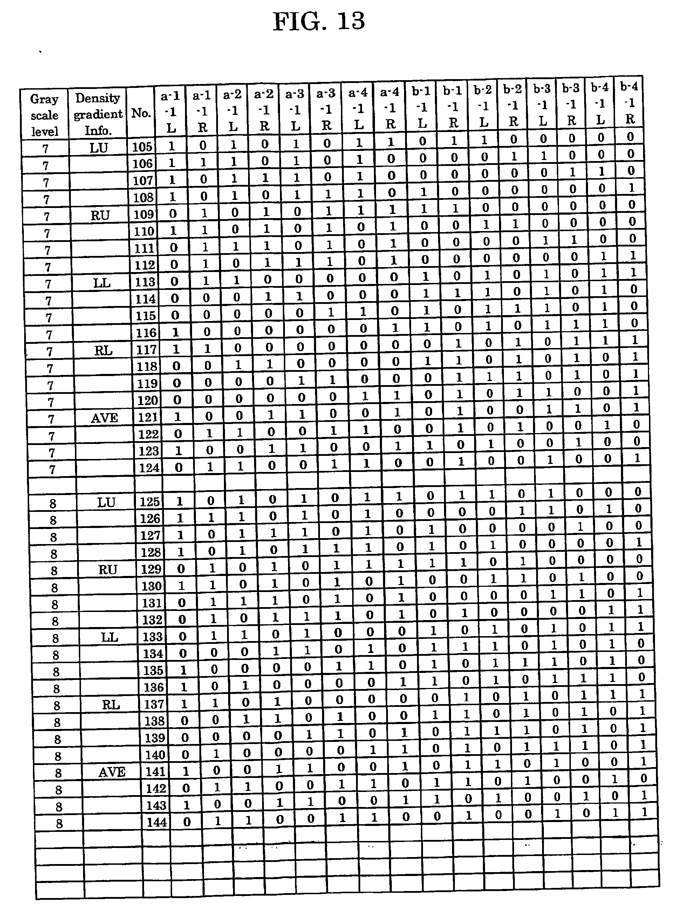

FIGS. 11 and 13 show an ink combination table (Second Table) according to the present embodiment.

The numeral "1" in the table indicates discharge of ink droplet. For convenience purposes, the upper left pixel, upper right pixel, lower left pixel and lower right pixel in the 2 x 2 matrix is assigned LU, RU, LL and RL, respectively. A group of LU, RU, LL and RL in which one member is higher in density than the other members is shown as a density pattern.

The density level is not completely proportional to the number of ink droplets discharged for one pixel and to the total content of pigment in the ink; generally, there is no practical problems particularly in reflective and transparent recording media.

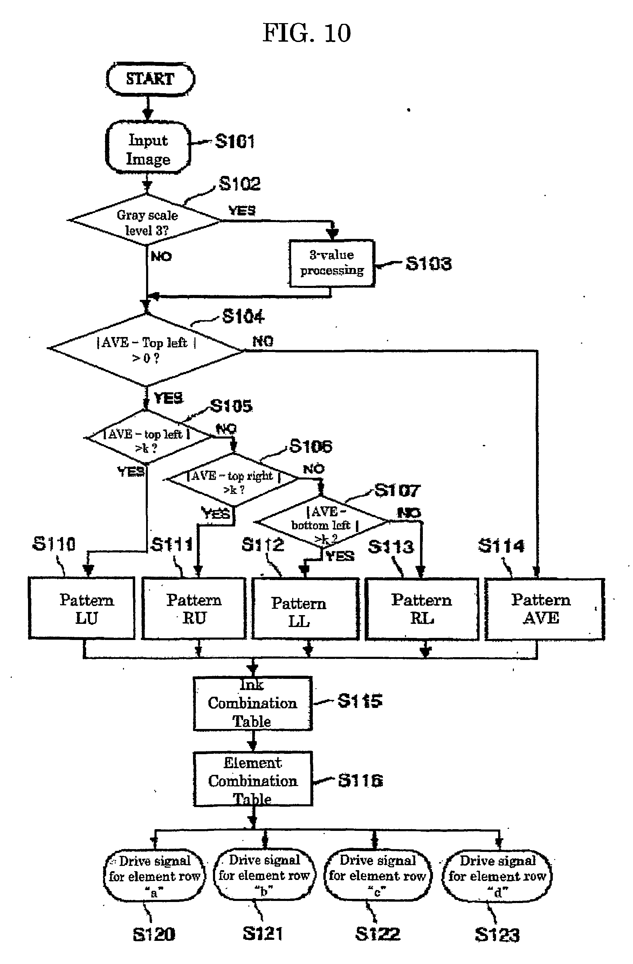

FIG. 10 is a flowchart of image processing in the inkjet recording apparatus according to the present embodiment. Hereinafter, image processing specific to the present embodiment will be described with reference to FIGS. 10 to 13.

When using the combination table shown in FIGS. 11 to 13, the gray scale level of a 256-level gray scale image input in Step 101 shown in FIG. 10 needs to be converted into a 2+1 value (/600 dpi). To achieve this the input image is processed in the image processing unit (6) shown in FIG. 9 using multi-level error diffusion (Steps 102 and 103). Note that the method used in this processing is not specifically limited to multi-level error diffusion; any halftone processing method is used, such as average density preservation method or dither matrix method.

Multi-level error diffusion method significantly differs from normal error diffusion methods in that there are multiple (2 in the present embodiment) thresholds used for binarization. In general, an intermediate level of gray scale may be considered as the threshold.

The binarized data are allocated with drive signals for discharge/non-discharge for each print pixel in the image processing unit (6) while referring to the element combination information (4a) stored in the storage medium (4), more specifically in accordance with ink combinations shown in FIGS. 11 to 13. Herein since the original image data has a resolution of 600 dpi, the binarized data has three (2 +1) values - 0, 1, and 2 (Step 103 in FIG. 13).

It is determined in Step 104 whether or not there is a difference in gray scale level between a set of pixels of interest and its upper left unit pixel. For example, description is given using a set of 2 x 2 pixels (represented by (I1, J1)), where the upper left unit pixel (i1, j1) has a gray scale level of 2, the upper right unit pixel (i1+1, j1) has a gray scale level of 1, the lower left unit pixel (i1, j1+1) has a gray scale level of 1, and the lower right unit pixel (i1+1, j1+1) has a gray scale level of 0. In this case the density gradient information selects the density pattern "LU" corresponding to the gray scale "a" shown in FIG. 18 since the upper left pixel has a higher density (Steps 105 and 110).

In addition, since this 2 x 2 pixel set has a gray scale level of 4 (4/8), it is determined that the density gradient information allocates data using the pattern information of "LU" (i.e., combinations from No. 45 to 48) among combinations of elements shown in FIG. 11 that provide a density (gray scale level) of 4. In actual use, these 4 combinations are sequentially or randomly selected (Steps 115 and 116).

In this way, image processing of one focused pixel set ends. Subsequently, similar image processing is carried out for another set of 2 x 2 pixels (I2, J2).

To be more specific, when the upper left unit pixel (i2, j2), upper right unit pixel (i2+1, j2), lower left unit pixel (i2, j2+1) and lower right unit pixel (i2+1, j2+1) of a focused pixel set have a gray scale level of 2, 2, 2 and 1, respectively, the density gradient information corresponds to the gray scale level of "1" shown in FIG. 18. Because it is often difficult to determine which category (LU, RU, LL or RL) this pattern belongs, "AVE" is selected (Step 114) for convenience purposes.

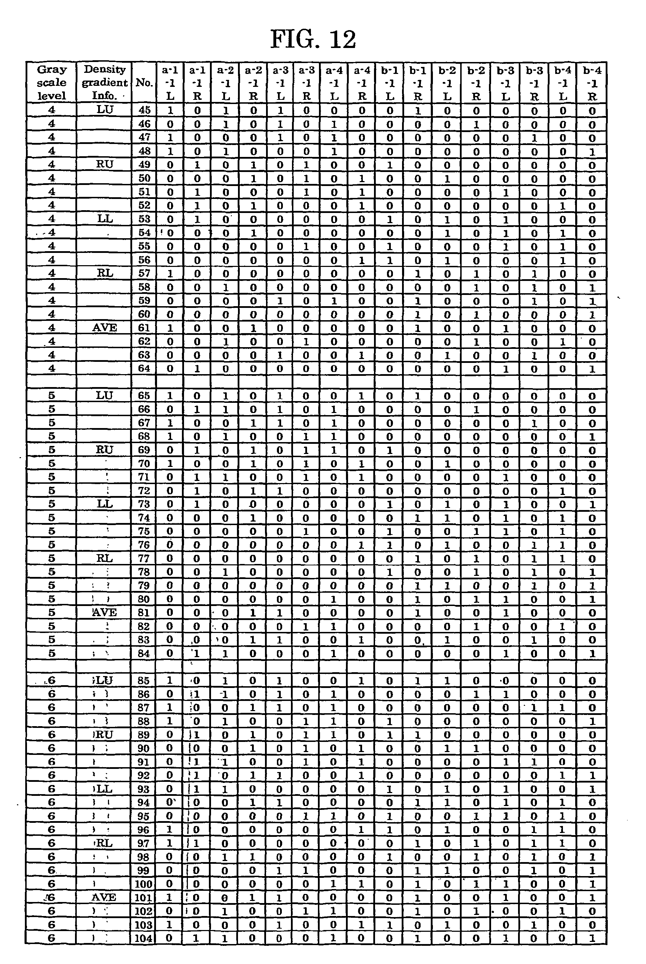

Moreover, since this pattern has a gray scale level of 8 (8/8) it is determined that the density gradient information allocates data using the pattern information of "AVE" (i.e., combinations from No. 141 to 144) among combinations of elements shown in FIG. 12 that provide a density (gray scale level) of 8 (Steps 115 and 116).

The foregoing image processing is repeatedly carried out for other remaining pixel sets based on the density data of the image. In this way binary drive signals for instructing discharge/non-discharge are generated for each row of recording elements (Steps 120 to 123).

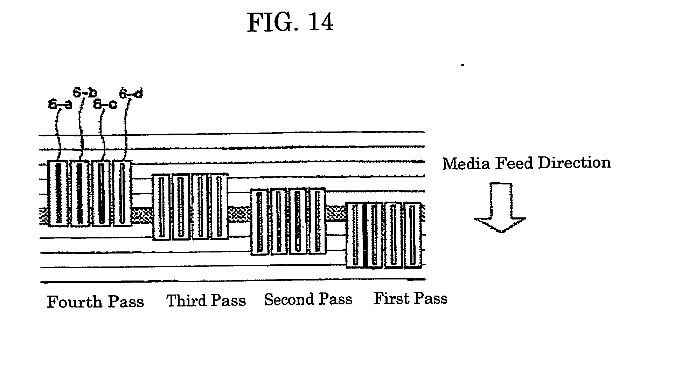

FIG. 14 illustrates a multi-pass (4-pass) recording method, wherein recording is carried out for each pass using any of a recording head (6-a) provided with a row of recording elements for discharging Ink A, a recording head (6-b) provided with a row of recording elements for discharging Ink A, a recording head (6-c) provided with a row of recording elements for discharging Ink B, and a recording head (6-d) provided with a row of recording elements for discharging Ink B.

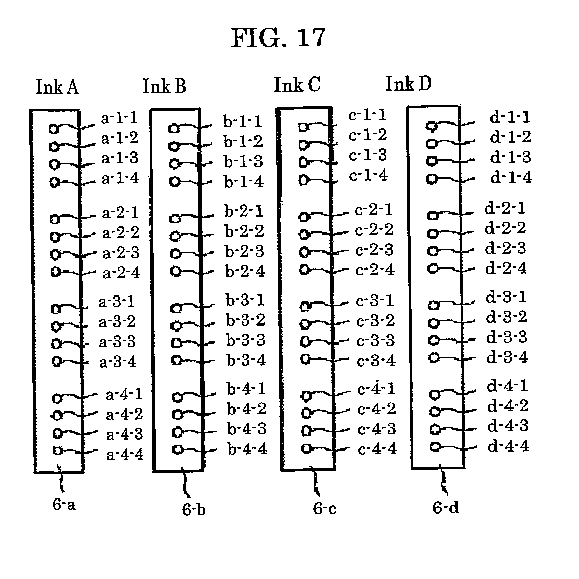

In the present example, all of the image pixels are sequentially processed in the manner described above, followed by 4-pass recording with an inkjet recording apparatus provided with rows of recording elements shown FIGS. 15 to 17.

As described above, sets of nearby pixels of the input image are viewed as recording pixels, and a predetermined gray scale pattern corresponding to the input image is selected for each recording pixel. Thus, according to the present example, it is possible to reduce the amount of image data approximately by a factor of 4 without reducing the resolution of the print of the input image, to speed up image recording operation, and to reduce a load on the control unit (CPU).

In addition, an inkjet recording method of applying at least two ink droplets within a unit pixel, applying unequally sized ink droplets to produce at least two different dot diameters, or applying ink droplets of at least two different inks (light and deep inks) for each color, wherein one or more ink droplets are discharged on an as-needed basis for several unit pixels that constitute a recording pixel which is a unit of image to be recorded, is effective because it handles control data for patterned drive signals that instruct to discharge or non-discharge without having to performing complex image processing.

Furthermore, by preparing a plurality of combinations of recording elements for the same gray scale level and by using them randomly or sequentially for image recording, it is possible to reduce the occurrence of a situation where certain recording elements fail to discharge ink droplets for a while, and at the same time to avoid a situation where an ink dot area of certain size or more is formed by the same recording element. In addition, even when the recording heads have been replaced, it is possible to suppress changes in their characteristics and to actively and effectively avoid variations in characteristics among recording elements.

Moreover, with a simple signal processing algorithm and faster, simpler processing, it is also possible to obtain an image that has many levels of gray scale and that is not degraded by "misdirection" or the like, and to obtain an image with many levels of gray scale even when a low-definition image data is used.

The method of regulating total ink amount is not specifically limited; when it is determined that the total amount of CMYK inks exceeds a predetermined level upon conversion of the input RGB signals into CMYK, the total ink amount can be regulated by correcting the CMYK value so that the total ink amount falls within that predetermined level, followed by y conversion using a y table. The order in which the total amount regulation processing unit and y table are operated may be reversed.

### (Ink Recorded Matter)

The ink recorded matter obtained by the inkjet recording method of the present invention has an image recorded on the recording media of the ink-media set, which the image formed using the ink of the ink-media set.

The recorded matter is of high quality, has no ink smear, excels in storage stability and, therefore, can be suitably used in a wide range of applications as written material or the like having various types of recorded print or image.

### Examples

Hereinafter, Examples of the present invention will be described, which however shall not be construed as limiting the invention thereto. Note also that "part(s)" means "part(s) by mass" unless otherwise indicated.

### <Preparation of Pigment Inks>

### (Preparation Example 1)

### -Preparation of Copper Phthalocyanine Pigment-Containing Fine Polymer Particle Dispersion-

A 1L-flask equipped with a mechanical stirrer, a thermometer, a nitrogen gas inlet tube, a reflux tube and a dropping funnel was thoroughly purged with nitrogen gas. Thereafter 11.2g of styrene, 2.8g of acrylic acid, 12.0g of lauryl methacrylate, 4.0g of polyethylene glycol methacrylate, 4.0g of styrene macromer (brand name: AS-6 supplied from Toagosei Co., Ltd.) and 0.4g of mercaptoethanol were placed in the flask, and heated to 65°C. Subsequently, a mixed solution containing 100.8g of styrene, 25.2g of acrylic acid, 108.0g of lauryl methacrylate, 36.0g of polyethylene glycol methacrylate, 60.0g of hydroxyethyl methacrylate, 36.0g of styrene macromer (brand name: AS-6 supplied from Toagosei Co., Ltd.), 3.6g of mercaptoethanol, 2.4g of azobismethyl valeronitrile and 18g of methyl ethyl ketone was added dropwise to the flask over 2.5 hours.

After addition, a mixed solution of 0.8g of azobismethyl valeronitrile and 18g of methyl ethyl ketone was added dropwise to the flask over 0.5 hours. After the resultant mixture was held at 65°C for 1 hour, 0.8g of azobismethyl valeronitrile was added, and the mixture was left to stand for a further 1 hour. After completion of the reaction, 364g of methyl ethyl ketone was added into the flask to yield 800g of a solution containing 50% by mass of polymer. An aliquot of the resulting polymer solution was dried and subjected to gel permeation chromatography (standard: polystyrene, solvent: tetrahydrofuran); the weight-average molecular weight (Mw) was 15,000.

Subsequently, 28g of the resulting polymer solution, 26g of the copper phthalocyanine pigment, 13.6g of a 1 mol/L aqueous solution of potassium hydroxide, 20g of methyl ethyl ketone and 30g of ion-exchange water were thoroughly mixed. Then, the mixture was kneaded 20 times using a three roll mill (brand name: NR-84A supplied from Noritake Co., Limited). The resulting paste was added into 200g of ion-exchange water, and after stirred thoroughly, methyl ethyl ketone and water were distilled off using an evaporator to yield 160g of a blue fine polymer particle dispersion with a solid content of 20.0% by mass. The average particle diameter (D50%) of the resulting fine polymer particles measured by a particle size distribution analyzer (Microtrack UPA supplied from Nikkiso Co., Ltd.) was 93nm.

### (Preparation Example 2)

### -Preparation of Dimethyl Quinacridone Pigment-Containing Fine Polymer Particle Dispersion-

A magenta fine polymer particle dispersion was prepared as in Preparation Example 1 except that the copper phthalocyanine pigment was changed to Pigment Red 122. The average particle diameter (D50%) of the resulting polymer fine particles measured using the particle size distribution analyzer (Microtrack UPA supplied from Nikkiso Co., Ltd.) was 127nm.

### (Preparation Example 3)

### -Preparation of Monoazo Yellow Pigment-Containing Fine Polymer Particle Dispersion-

A yellow fine polymer particle dispersion was prepared as in Preparation Example 1, except that the copper phthalocyanine pigment was changed to Pigment Yellow 74. The average particle diameter (D50%) of the resulting polymer fine particles measured using the particle size distribution analyzer (Microtrack UPA supplied from Nikkiso Co., Ltd.) was 76nm.

### (Preparation Example 4)

### -Preparation of Carbon Black Dispersion Solution-

To 1,000ml of water was added 300g of commercially available acidic carbon black with a pH value of 2.5 (brand name: Monarch 1300 supplied from Cabot Corporation) and thoroughly mixed. Then, 450g of sodium hypochlorite (effective chlorine concentration: 12%) was added dropwise to the mixture, and the mixture was stirred at 100°C to 105°C for 8 hours. To this solution, 100g of sodium hypochlorite (effective chlorine concentration: 12%) was further added and dispersed for 3 hours using a transverse dispersing machine. The resulting slurry was diluted 10 fold with water, pH was adjusted by addition of lithium hydroxide, and the slurry was salted out and concentrated up to an electric conductivity of 0.2 mS/cm by ultrafiltration to yield a carbon black dispersion solution with a pigment concentration of 15% by mass. Coarse and large particles were removed by centrifugation and the solution was further filtrated through a nylon filter of 1µm pore size to yield a carbon black dispersion solution. The average particle diameter (D50%) of the resulting fine polymer particles measured by the particle size distribution analyzer (Microtrack UPA supplied from Nikkiso Co., Ltd.) was 95nm.

### (Preparation Example 5)

### -Preparation of Carbon Black Fine Polymer Particle Dispersion-

A black fine polymer particle dispersion was prepared as in Preparation Example 1, except that the copper phthalocyanine pigment was changed to carbon black (FW100 supplied from Degussa). The average particle diameter (D50%) of the resulting fine polymer particles measured by the particle size distribution analyzer (Microtrack UPA supplied from Nikkiso Co., Ltd.) was 104nm.

### (Preparation Example 6)

### -Preparation of Carbon Black Dispersion Treated with Diazo Compound-

One hundred grams of carbon black having a specific surface area of 230 m²/g and a DBP oil absorption of 70 mL/100 g and 34 g of p-amino-N-benzoic acid were mixed and dispersed in 750g of water, and 16g of nitric acid was added thereto, followed by stirring at 70°C. After 5 minutes, a solution containing 11g of sodium nitrite dissolved in 50g of water was added thereto and stirred for a further 1 hour. The resulting slurry was diluted 10 fold, course and large particles were removed by centrifuge, and the pH was adjusted to 8-9 by the addition of diethanolamine. The solution was salted out and concentrated by ultrafiltration to yield the carbon black dispersion with a pigment concentration of 15% by mass, which was then filtrated through a polypropylene film of 0.5 µm pore size to yield a carbon black dispersion. The average particle diameter (D50%) of the resulting carbon black dispersion measured by the particle size distribution analyzer (Microtrack UPA supplied from Nikkiso Co., Ltd.) was 99nm.

### (Preparation Example 7)

### -Preparation of Carbon Black Dispersion Treated with Sulfonating Agent-

One hundred and fifty grams of commercially available carbon black (Printex#85 supplied from Degussa) was thoroughly mixed in 400mL of sulfolane, and after finely dispersed using a bead mill, 15g of amide sulfuric acid was added thereto followed by stirring at 140°C to 150°C for 10 hours. The resulting slurry was added into 1,000mL of ion-exchange water, which was then centrifuged at 12,000rpm to yield a surface-treated carbon black wet cake. This carbon black wet cake was again dispersed in 2,000mL of ion-exchange water, and the pH of the resultant mixture was adjusted by addition of lithium hydroxide. The dispersion was salted out and concentrated by ultrafiltration to yield a carbon black dispersion with a pigment concentration of 10% by mass. The carbon black dispersion was then filtrated through a nylon filter of 1 µm pore size to yield a carbon black. The average particle diameter (D50%) of the resulting carbon black measured by the particle size distribution analyzer (Microtrack UPA supplied from Nikkiso Co., Ltd.) was 80nm.

Ink compositions were then produced using the fine polymer particle dispersions and carbon black dispersions obtained in Preparation Examples described above.

### (Preparation Example 8)

### -Preparation of Cyan Ink Composition 1-

A solution was prepared that contains 20% by mass of the copper phthalocyanine pigment-containing fine polymer particle dispersion prepared in Preparation Example 1, 23.0% by mass of 3-methyl-1,3-butanediol, 8.0% by mass of glycerine, 2.0% by mass of 2-ethyl-1,3-hexanediol, 2.5% by mass of FS-300 (supplied from DuPont), 0.2% by mass of Proxel LV (supplied from Avecia), 0.5% by mass of 2-amino-2-ethyl-1,3-propanediol, and an appropriate amount of ion-exchange water added to bring the total to 100%. Subsequently, the mixture was filtrated through a membrane filter with an average pore diameter of 0.8µm, and the resultant solid was dissolved in ion-exchanged water to a content of 12wt%. In this way, an ink composition was prepared. The viscosity of the resulting composition measured at 25°C was 9 mPa·s, and the surface tension was 25 mN/m. The viscosity was measured at 25°C using a viscosity analyzer (R500 rotation viscometer supplied from Toki Sangyo Co., Ltd.).

### (Preparation Example 9)

### -Preparation of Magenta Ink Composition 1-

A solution was prepared that contains 20% by mass of the dimethyl quinacridone pigment-containing fine polymer particle dispersion prepared in Preparation Example 2, 22.5% by mass of 3-methyl-1,3-butanediol, 9.0% by mass of glycerine, 2.0% by mass of 2-ethyl-1,3-hexanediol, 2.5% by mass of FS-300 (supplied from DuPont), 0.2% by mass of Proxel LV (supplied from Avecia), 0.5% by mass of 2-amino-2-ethyl-1,3-propanediol, and an appropriate amount of ion-exchange water added to bring the total to 100%. Subsequently, the mixture was filtrated through a membrane filter with an average pore diameter of 0.8µm, and the resultant solid was dissolved in ion-exchanged water to a content of 12wt%. In this way, an ink composition was prepared. The viscosity of the resulting composition measured at 25°C was 9 mPa·s, and the surface tension was 25 mN/m.

### (Preparation Example 10)

### -Preparation of Yellow Ink Composition 1-

A solution was prepared that contains 20.0% by mass of the monoazo yellow pigment-containing polymer fine particle dispersion prepared in Preparation Example 3, 24.5% by mass of 3-methyl-1,3-butanediol, 8.0% by mass of glycerine, 2.0% by mass of 2-ethyl-1,3-hexanediol, 2.5% by mass of FS-300 (supplied from DuPont), 0.2% by mass of Proxel LV (supplied from Avecia), 0.5% by mass of 2-amino-2-ethyl-1,3-propanediol, and an appropriate amount of ion-exchange water added to bring the total to 100%. Subsequently, the mixture was filtrated through a membrane filter with an average pore diameter of 0.8µm, and the resultant solid was dissolved in ion-exchanged water to a content of 12wt%. In this way, an ink composition was prepared. The viscosity of the resulting composition measured at 25°C was 9 mPa·s, and the surface tension was 25 mN/m.

### (Preparation Example 11)

### -Preparation of Black Ink Composition-

A solution was prepared that contains 20.0% by mass of the carbon black dispersion in Preparation Example 7, 22.5% by mass of 3-methyl-1,3-butanediol, 7.5% by mass of glycerine, 2.0% by mass of 2-pyrrolidone, 2.0% by mass of 2-ethyl-1,3-hexanediol, 2.0% by mass of R-(OCH₂CH₂)ₙOH (wherein, R is an alkyl group having 12 carbon atoms, and n=9), 0.2% by mass of Proxel LV (supplied from Avecia), 0.5% by mass of 2-amino-2-ethyl-1,3-propanediol were mixed, and an appropriate amount of ion-exchange water added to bring the total to 100%. Subsequently, the mixture was filtrated through a membrane filter with an average pore diameter of 0.8µm, and the resultant solid was dissolved in ion-exchanged water to a content of 12wt%. In this way, an ink composition was prepared. The viscosity of the resulting composition measured at 25°C was 9 mPa·s, and the surface tension was 25 mN/m.

### -Preparation of Dye Ink-

### (Preparation Example 12)

The ingredients shown below were mixed, thoroughly stirred and dissolved, and then filtrated by pressure through Floropore Filter of 0.45µm in pore diameter (brand name, supplied from Sumitomo Electric Industries, Ltd.) to prepare a dye ink set.

### (Ingredients of Dye Ink)

| Dye Species | |
|---|---|
| Yellow: | C.I. Direct Yellow 86 |
| Cyan: | C.I. Direct Blue 199 |
| Magenta: | C.I. Acid Red 285 |
| Black: | C.I. Direct Black 154 |
| Formulation | |
| Dye | 4 parts |
| Glycerine | 7 parts |
| Thioglycol | 7 parts |
| Urea | 7 parts |
| Acetylene glycol | 1.5 parts |
| Water | 73.5 parts |

The viscosity of the resulting ink composition measured at 25°C was 4 mPa·s and the surface tension was 35 dyne/cm.

### <Production of Base Paper>

### (Preparation Example 13)

### -Preparation of Substrate 1-

| | |
|---|---|
| LBKP | 80 parts |
| NBKP | 20 parts |
| Light calcium carbonate (brand name: TP-121 supplied from Okutama Kogyo Co., Ltd.) | 10 parts |
| Aluminum sulfate | 1.0 parts |
| Amphoteric starch (brand name: Cato 3210 supplied from Nippon NSC Ltd.) | 1.0 parts |
| Neutral rosin sizing agent (brand name: NeuSize M-10 supplied from Harima Chemicals Inc.) | 0.3 parts |
| Yield improver (brand name: NR-11LS supplied from Hymo Co., Ltd.) | 0.02 parts |

Substrate 1 with a basis weight of 79 g/m² was fabricated by papermaking a slurry containing 0.3% by mass of the above formulation using a fourdrinier papermaking machine and finished with a machine calendar. In a size press step of the papermaking process, an aqueous solution of oxidized starch was applied to a surface of Substrate 1 so that each side has a deposited solid amount 1.0 g/m².

### <Example 1>

As a pigment 70 parts by mass of kaolin containing 97 wt% of particles with a particle diameter of 2µm or less, 30 parts by mass of heavy calcium carbonate with an average particle diameter of 1.1µm, as an adhesive 8 parts by mass of styrene-butadiene copolymer emulsion having a glass transition temperature (Tg) of -5°C, 1 part by mass of phosphated starch, as an auxiliary agent 0.5 parts by mass of calcium stearate, and water were mixed together to prepare a coating solution containing 60 wt% of solid component.

This coating solution thus prepared was applied on both sides of Substrate 1 using a blade coater so that each side has a coating of 1µm thickness, dried with hot air, and supercalendered to fabricate Recording Sheet 1 of the present invention.

Subsequently, Ink Set 1 containing black, yellow, magenta and cyan inks composed of the compositions produced in Preparation Examples 1 to 11 was prepared, and a 600 dpi image was printed onto Recording Sheet 1 with Ink Set 1 by using a pilot drop-on-demand printer having 384 nozzles that offer resolution of 300 dpi. The maximum droplet volume was set to 18 pl, and the deposited ink amount was regulated by setting the total amount of secondary color to 140%. A solid image and characters were printed so that the total ink amount for printing of a solid image of 300 dot square did not exceed 15 g/m².

Word2000 (9.0.6926 SP-3), from Microsoft Corporation, was used for the preparation of print patterns for evaluation. Images used for evaluation of glossiness and show-through were prepared in the following manner: Using a drawing tool of Word2000, seven 5cm x 5cm squares were drawn that are connected to one another, filling each square with different colors (Y, M, C, K, R, G, and B) and correspondingly changing the color of the line defining the square. The color setting of the fills and lines are shown below.
Yellow: (Red 0, Green 255, Blue 255)
Cyan: (Red 255, Green 255, Blue 0)
Magenta: (Red 255, Green 0, Blue 255)
Red: (Red 255, Green 0, Blue 0)
Green: (Red 0, Green 255, Blue 0)
Blue: (Red.0, Green 255, Blue 255)
Black: (Red 0, Green 255, Blue 0)

Similarly, Word2000 was used for the preparation of images for evaluation of blurring: 2cm x 2 cm squares of different colors were prepared onto which a 15-point black character "A" was printed.

The obtained images were evaluated for their image quality and image fidelity. Results are shown in Tables 1-1, 1-2, 1-3, and 2, where those ranked "D" or "Poor" in any evaluation item are considered unsatisfactory as an inkjet image.

### (Example 2)

Inkjet recording was carried out as in Example 1 except that the maximum total ink amount was set to 20 g/m².

### (Example 3)

Inkjet recording was carried out as in Example 1 except that the content of solid component was set to 3 wt% by diluting ink with ion-exchanged water.

### (Example 4)

Inkjet recording was carried out as in Example 1 except that as a recording media U-Lite (basis weight = 127.9 g/m²; from Nippon Paper Industries Co., Ltd.) was used.

### (Example 5)

Inkjet recording was carried out as in Example 1 except that as a recording media Esprit Coat C (basis weight = 157 g/m²; from Nippon Paper Industries Co., Ltd.) was used.

### (Example 6)

Inkjet recording was carried out as in Example 1 except that as a recording media OK Astro Gloss (basis weight = 60.2 g/m²; from Oji Paper Co., Ltd.) was used.

### (Example 7)

Inkjet recording was carried out as in Example 1 except that as a recording media OKAstro Dull (basis weight = 60.2 g/m²; from Oji Paper Co., Ltd.) was used.

### (Example 8)

Inkjet recording was carried out as in Example 1 except that as a recording media OK Astro Mat (basis weight = 72.3 g/m²; from Oji Paper Co., Ltd.) was used.

### (Example 9)

Inkjet recording was carried out as in Example 1 except that as a recording media OK Opt Gloss (basis weight = 72.3 g/m²; from Oji Paper Co., Ltd.) was used.

### (Example 10)

Inkjet recording was carried out as in Example 1 except that as a recording media OK Casablanca (basis weight = 100 g/m²; from Oji Paper Co., Ltd.) was used.

### (Example 11)

Inkjet recording was carried out as in Example 1 except that as a recording media OK Coat L (basis weight = 69.9 g/m²; from Oji Paper Co., Ltd.) was used.

### (Example 12)

Inkjet recording was carried out as in Example 1 except that as a recording media OK Coat V (basis weight = 127.9 g/m²; from Oji Paper Co., Ltd.) was used.

### (Example 13)

Inkjet recording was carried out as in Example 1 except that as a recording media OK Top Coat + (basis weight = 104.7 g/m²; from Oji Paper Co., Ltd.) was used.

### (Example 14)

Inkjet recording was carried out as in Example 1 except that as a recording media OK Top Coat S (basis weight = 127.9 g/m²; from Oji Paper Co., Ltd.) was used.

### (Example 15)

Inkjet recording was carried out as in Example 1 except that as a recording media OK Top Coat Dull (basis weight = 104.7 g/m²; from Oji Paper Co., Ltd.) was used.

### (Example 16)

Inkjet recording was carried out as in Example 1 except that as a recording media OK Top Coat Mat N (basis weight = 81.4 g/m²; from Oji Paper Co., Ltd.) was used.

### (Example 17)

Inkjet recording was carried out as in Example 1 except that as a recording media OK Trinity (basis weight = 104.7 g/m²; from Oji Paper Co., Ltd.) was used.

### (Example 18)

Inkjet recording was carried out as in Example 1 except that as a recording media OK Trinity NaVi-V (basis weight = 104.7 g/m²; from Oji Paper Co., Ltd.) was used.

### (Example 19)

Inkjet recording was carried out as in Example 1 except that as a recording media OK Non-wrinkle DL (basis weight = 72.3 g/m²; from Oji Paper Co., Ltd.) was used.

### (Example 20)

Inkjet recording was carried out as in Example 1 except that as a recording media OK Kanefuji+ (basis weight = 127.9 g/m²; from Oji Paper Co., Ltd.) was used.

### (Example 21)

Inkjet recording was carried out as in Example 1 except that as a recording media SA Kanefuji+ (basis weight = 127.9 g/m²; from Oji Paper Co., Ltd.) was used.

### (Example 22)

Inkjet recording was carried out as in Example 1 except that as a recording media POD Gloss (basis weight = 100 g/m²; from Oji Paper Co., Ltd.) was used.

### (Example 23)

Inkjet recording was carried out as in Example 1 except that as a recording media New Age (basis weight = 104.7 g/m²; from Oji Paper Co., Ltd.) was used.

### (Example 24)

Inkjet recording was carried out as in Example 1 except that as a recording media Mirror Coat Platinum (basis weight = 157 g/m²; from Oji Paper Co., Ltd.) was used.

### (Example 25)

Inkjet recording was carried out as in Example 1 except that as a recording media Glorious Peria S (basis weight = 127.9 g/m²; from Gojo Paper Mfg. Co., Ltd.) was used.

### (Example 26)

Inkjet recording was carried out as in Example 1 except that as a recording media S Utrillo Coat (basis weight =127.9 g/m²; from Daio Paper Corporation) was used.

### (Example 27)

Inkjet recording was carried out as in Example 1 except that as a recording media Excel Super B (basis weight = 60.2 g/m²; from Daio Paper Corporation) was used.

### (Example 28)

Inkjet recording was carried out as in Example 1 except that as a recording media Excel Super B (basis weight = 60.2 g/m²; from Daio Paper Corporation) was used.

### (Example 29)

Inkjet recording was carried out as in Example 1 except that as a recording media Excel Super CA (basis weight = 51.2 g/m²; from Daio Paper Corporation) was used.

### (Example 30)

Inkjet recording was carried out as in Example 1 except that as a recording media Excel Super TC (basis weight = 60.2 g/m²; from Daio Paper Corporation) was used.

### (Example 31)

Inkjet recording was carried out as in Example 1 except that as a recording media Audrey (basis weight = 99.6 g/m²; from Daio Paper Corporation)
was used.

### (Example 32)

Inkjet recording was carried out as in Example 1 except that as a recording media Kant Excel (basis weight = 64 g/m²; from Daio Paper Corporation) was used.

### (Example 33)

Inkjet recording was carried out as in Example 1 except that as a recording media Green Excel B100 (basis weight = 60.2 g/m²; from Daio Paper Corporation) was used.

### (Example 34)

Inkjet recording was carried out as in Example 1 except that as a recording media High-quality White Utrillo (basis weight = 127.9 g/m²; from Daio Paper Corporation) was used.

### (Example 35)

Inkjet recording was carried out as in Example 1 except that as a recording media Piccaso Coat C (basis weight = 157 g/m²; from Daio Paper Corporation) was used.

### (Example 36)

Inkjet recording was carried out as in Example 1 except that as a recording media Utrillo Gloss Mat (basis weight = 157 g/m²; from Daio Paper Corporation) was used.

### (Example 37)

Inkjet recording was carried out as in Example 1 except that as a recording media Utrillo Coat L (basis weight = 98.8 *g*/*m²;* from Daio Paper Corporation) was used.

### (Example 38)

Inkjet recording was carried out as in Example 1 except that as a recording media Utrillo Coat Atsumono (basis weight = 186.1 g/m²; from Daio Paper Corporation) was used.

### (Example 39)

Inkjet recording was carried out as in Example 1 except that as a recording media Utrillo Next (basis weight = 108 g/m²; from Daio Paper Corporation) was used.

### (Example 40)

Inkjet recording was carried out as in Example 1 except that as a recording media Utrillo Plus (basis weight =104.7 g/m²; from Daio Paper Corporation) was used.

### (Example 41)

Inkjet recording was carried out as in Example 1 except that as a recording media New Mariest W (basis weight =157 g/m²; from Hokuetsu Paper Mills, Ltd.) was used.

### (Example 42)

Inkjet recording was carried out as in Example 1 except that as a recording media Dignity (basis weight = 104.7 g/m²; from Mitsubishi Paper Mills Limited) was used.

### (Example 43)

Inkjet recording was carried out as in Example 1 except that as a recording media New V Mat (basis weight = 104.7 g/m²; from Mitsubishi Paper Mills Limited) was used.

### (Example 44)

Inkjet recording was carried out as in Example 1 except that as a recording media Pearl Coat (basis weight = 104.7 g/m²; from Mitsubishi Paper Mills Limited) was used.

### (Example 45)

Inkjet recording was carried out as in Example 1 except that as a recording media Vista Gloss (basis weight = 64 g/m²; from Mitsubishi Paper Mills Limited) was used.

### (Example 46)

Inkjet recording was carried out as in Example 1 except that as a recording media Broad Gloss A (basis weight = 115 g/m²; from Mitsubishi Paper Mills Limited) was used.

### (Example 47)

Inkjet recording was carried out as in Example 1 except that as a recording media Broad Mat A (basis weight = 90 g/m²; from Mitsubishi Paper Mills Limited) was used.

### (Example 48)

Inkjet recording was carried out as in Example 1 except that as a recording media White New V Mat (basis weight = 104.7 g/m²; from Mitsubishi Paper Mills Limited) was used.

### (Example 49)

Inkjet recording was carried out as in Example 1 except that as a recording media White Pearl Coat N (basis weight = 84.9 g/m²; from Mitsubishi Paper Mills Limited) was used.

### (Example 50)

Inkjet recording was carried out as in Example 1 except that as a recording media SA Kanefuji+ (basis weight = 127.9 g/m²; from Oji Paper Co., Ltd.) was used, that the maximum ink droplet volume was set to 25 pl, and that image density was set to 72% entirely.

### (Example 51)

Inkjet recording was carried out as in Example 13 except that as a recording media OK Top Coat+ (from Oji Paper Co., Ltd.) was used in which 0.3µm of each of the coat layers provided on opposite sides of the media was ablated by polishing.

### (Example 52)

Inkjet recording was carried out as in Example 51 except that ablation amount of each coat layer was set to 0.5µm.

### (Example 53)

Inkjet recording was carried out as in Example 51 except that ablation amount of each coat layer was set to 0.8µm.

### (Example 54)

Inkjet recording was carried out as in Example 51 except that ablation amount of each coat layer was set to 1µm.

### (Example 55)

Inkjet recording was carried out as in Example 51 except that ablation amount of each coat layer was set to 1.5µm.

### (Example 56)

Inkjet recording was carried out as in Example 51 except that ablation amount of each coat layer was set to 1.9µm.

### (Example 57)

Inkjet recording was carried out as in Example 51 except that ablation amount of each coat layer was set to 2.3µm.

### (Example 58)

Inkjet recording was carried out as in Example 51 except that ablation amount of each coat layer was set to 2.5µm.

### (Example 59)

Inkjet recording was carried out as in Example 51 except that ablation amount of each coat layer was set to 3.1µm.

### (Example 60)

Inkjet recording was carried out as in Example 51 except that ablation amount of each coat layer was set to 3.8µm.

### (Example 61)

Inkjet recording was carried out as in Example 51 except that ablation amount of each coat layer was set to 4.4µm.

### (Example 62)

Inkjet recording was carried out as in Example 51 except that ablation amount of each coat layer was set to 5µm.

### (Example 63)

Inkjet recording was carried out as in Example 51 except that ablation amount of each coat layer was set to 5.6µm.

### (Example 64)

Inkjet recording was carried out as in Example 51 except that ablation amount of each coat layer was set to 6.3µm.

### (Example 65)

Inkjet recording was carried out as in Example 51 except that ablation amount of each coat layer was set to 7.5µm.

### (Example 66)

Inkjet recording was carried out as in Example 51 except that ablation amount of each coat layer was set to 8.8µm.

### (Example 67)

Inkjet recording was carried out as in Example 51 except that ablation amount of each coat layer was set to 10µm.

### (Example 68)

Inkjet recording was carried out as in Example 51 except that ablation amount of each coat layer was set to 10.3µm.

### (Example 69) not according to the invention

Inkjet recording was carried out as in Example 51 except that ablation amount of each coat layer was set to 10.5µm.

### (Example 70) not according to the invention

Inkjet recording was carried out as in Example 1 except that maximum ink deposit amount is set to 18 g/m².

### (Example 71) not according to the invention

Inkjet recording was carried out as in Example 1 except that maximum ink deposit amount is set to 22 g/m².

### (Example 72)

Inkjet recording was carried out as in Example 1 except that maximum ink deposit amount is set to 13 g/m².

### (Example 73)

Inkjet recording was carried out as in Example 13 except that maximum ink deposit amount is set to 13 g/m².

### (Example 74) not according to the invention

Inkjet recording was carried out as in Example 13 except that maximum ink deposit amount is set to 18 g/m².

### (Comparative Example 1)

Inkjet recording was carried out as in Example 1 except that as a recording media Kant Excelbal TL (basis weight = 72.3 g/m²; from Daio Paper Corporation) was used.

### (Comparative Example 2)

Inkjet recording was carried out as in Example 1 except that as a recording media Platon Bulky (basis weight = 79.1 g/m²; from Daio Paper Corporation) was used.

### (Comparative Example 3)

Inkjet recording was carried out as in Example 1 except that as a recording media Dante Comic (basis weight = 64 g/m²; from Daio Paper Corporation) was used.

### (Comparative Example 4)

Inkjet recording was carried out as in Example 1 except that as a recording media Comic Paper Sheet D (basis weight = 64 g/m²; from Daio Paper Corporation) was used.

### (Comparative Example 5)

Inkjet recording was carried out as in Example 1 except that as a recording media Comic Paper Sheet S (basis weight = 64 g/m²; from Daio Paper Corporation) was used.

### (Comparative Example 6)

Inkjet recording was carried out as in Example 1 except that as a recording media rough paper for paperback books (basis weight = 60.2 g/m²; from Daio Paper Corporation) was used.

### (Comparative Example 7)

Inkjet recording was carried out as in Example 1 except that as a recording media a test media (basis weight = 104.7 g/m²; from Ricoh Company, Ltd.) was used and that the ink set was changed to the dye-based ink set of Preparation Example 12.

### (Comparative Example 8)

Inkjet recording was carried out as in Example 1 except that as a recording media Aurora Coat (basis weight = 79.1 g/m²; supplied from Nippon Paper Industries Co., Ltd.) was used and that the ink set was changed to the dye-based ink set of Preparation Example 12.

### (Comparative Example 9)

Inkjet recording was carried out as in Example 1 except that as a recording media Neptune (basis weight = 127.9 g/m²; supplied from Nippon Paper Industries Co., Ltd.) was used and that the ink set was changed to the dye-based ink set of Preparation Example 12.

### (Comparative Example 10)

Inkjet recording was carried out as in Example 1 except that as a recording media U-Lite (basis weight = 127.9 g/m²; supplied from Nippon Paper Industries Co., Ltd.) was used and that the ink set was changed to the dye-based ink set of Preparation Example 12.

### (Comparative Example 11)

Inkjet recording was carried out as in Example 1 except that as a recording media Espri Coat C (basis weight = 157 g/m²; supplied from Nippon Paper Industries Co., Ltd.) was used and that the ink set was changed to the dye-based ink set of Preparation Example 12.

### (Comparative Example 12)

Inkjet recording was carried out as in Example 1 except that as a recording media OK Top Coat+ (basis weight = 104.7 g/m²; from Oji Paper Co., Ltd.) was used and that the ink set was changed to the dye-based ink set of Preparation Example 12.

### (Comparative Example 13)

Inkjet recording was carried out as in Example 1 except that as a recording media OK Kanefuji+ (basis weight = 127.9 g/m²; from Oji Paper Co., Ltd.) was used and that the ink set was changed to the dye-based ink set of Preparation Example 12.

### (Comparative Example 14)

Inkjet recording was carried out as in Example 1 except that as a recording media POD Gloss (basis weight = 100 g/m²; from Oji Paper Co., Ltd.) was used and that the ink set was changed to the dye-based ink set of Preparation Example 12.

### (Comparative Example 15)

Inkjet recording was carried out as in Example 1 except that as a recording media New Age (basis weight = 104.7 g/m²; from Oji Paper Co., Ltd.) was used and that the ink set was changed to the dye-based ink set of Preparation Example 12.

### (Comparative Example 16)

Inkjet recording was carried out as in Example 1 except that as a recording media Mirror Coat Platinum (basis weight = 157 g/m²; from Oji Paper Co., Ltd.) was used and that the ink set was changed to the dye-based ink set of Preparation Example 12.

### (Evaluation Items and Evaluation Methods)

### (1) Image Quality

### <Image Blurring>

Boundaries between different colors and fine lines in the images printed in Examples and Comparative Examples were checked by visual inspection for the amount of blurring and evaluated on the criteria below.

### (Evaluation Criteria)

A: Sharp print without any blurring
B: Negligible amount of blurring
C: Blurring occurred, but image quality was not impaired
D: Distinct blurring occurred, degrading the image to an unacceptable level

### <Evaluation of Glossiness>

The 60° glossiness of the images of Examples and Comparative Examples was measured using a handy glossimeter (Micro-gloss 60°, BYK Gardner) and evaluated on the evaluation criteria below.

### <Evaluation Criteria>

A: High glossiness
B: Moderate glossiness
D: No glossiness.

### <Show-through>

The image density of the backside of media, corresponding to the printed green solid image, of Examples and Comparative Examples was measured, and the show-through density was obtained by subtracting the background area density from the measured value. Evaluation was made using the show-through density in view of visual inspection based on the following criteria.

### (Evaluation criteria)

A: Show-through density was not greater than 0.1 and uniform print was obtained that offered no fine show-through
B: Show-through density was not greater than 0.15 and uniform print was obtained that offered with no fine show-through
C: Show through-density was not greater than 0.1 but fine show-through was observed
D: Remarkable show-through was observed.

### <Ink Dry Property>

The ink dry time is defined as the time at which no coloring material particles are observed on a paper filter pressed against a printed image that has been dried for a certain period of time immediately after printing.

### (Evaluation Criteria)

Good: Ink dry time was less than 2 minutes - excellent ink dry property
Poor: Ink dry time was 2 minutes or more - poor ink dry property

### <Smear Resistance>

After each image was dried for 24 hours, a cotton cloth was placed onto the media surface and moved back and forth 5 times with a pressure of 5 kgf/cm² (distance of a single back-and-forth movement = 5 cm), followed by measurement of the density of coloring material transferred onto the cloth with a reffection-type color densitometer (manufactured by X-Rite). The background density was then subtracted from the measured density, and the obtained value was considered "smear density."

### (Evaluation Criteria)

Good: Smear density was less than 0.05 - excellent smear resistance
Poor: Smear density was 0.05 or greater - poor smear resistance.

### <Air Permeability>

PERKERPRINT-SURF (Ver=1.8C), from MESSMER INSTRUMENT, was used for the measurement of air permeability. In the instrument measurement probes and backing were changed to those designed for air permeability measurement, and the clamp pressure was set to 2,000 CP. Measurement was made three times for each sample, and the resulting values were averaged to obtain a measured value.

**Table 1-1**

| | Maker | Bland | Basis Weight (g/m²) | Air Permeability (ml/min) | Coloring Material | Maximum Total Ink Amount | Image Blurring Rank | Glossiness (60°) | Glossiness Rank | Show-through Rank |
|---|---|---|---|---|---|---|---|---|---|---|
| Ex. 1 | Ricoh | Test Paper | 104.7 | 3.00 | Pigment | 15.00 | A | 20 | B | A |
| Ex. 2 | Ricoh | Test Paper | 104.7 | 3.00 | Pigment | 20.00 | C | 22 | B | C |
| Ex. 3 | Ricoh | Test Paper | 104.7 | 3.00 | Pigment (3wt%) | 15.00 | A | 15 | B | A |
| Ex. 4 | Nippon Paper | U-Lite | 127.9 | 4.31 | Pigment | 15.00 | A | 10.2 | B | A |
| Ex. 5 | Nippon Paper | Esprit Coat A | 157 | 2.74 | Pigment | 15.00 | A | 46.4 | B | A |
| Ex. 6 | Oji Paper | OK Astro Gloss | 60.2 | 2.72 | Pigment | 15.00 | A | 21.7 | B | A |
| Ex. 7 | Oji Paper | OK Astro Dull | 60.2 | 2.97 | Pigment | 15.00 | A | 14.8 | B | A |
| Ex. 8 | Oji Paper | - OK Astro Mat | 72.3 | 4.56 | Pigment | 15.00 | A | 8.7 | B | A |
| Ex.9 | Oji Paper | OK Opto Gloss | 72.3 | 1.74 | Pigment | 15.00 | A | 35.3 | B | A |
| Ex. 10 | Oji Paper | OK Casablanca | 100 | 1.02 | Pigment | 15.00 | A | 40.9 | B | A |
| Ex.11 | Oji Paper | OK Coat L | 69.9 | 1.73 | Pigment | 15.00 | A | 23.1 | B | A |
| Ex. 12 | Oji Paper | OK Coat V | 127.9 | 2.99 | Pigment | 15.00 | A | 32.2 | B | A |
| Ex. 13 | Oji Paper | Ok Top Coat+ | 104.7 | 1.60 | Pigment | 15.00 | A | 45.8 | B | A |
| Ex.14 | Oji Paper | OK Top Ooat S | 127.9 | 1.03 | Pigment | 15.00 | A | 46.8 | B | A |
| Ex. 15 | Oji Paper | OK Top Coat Dull | 104.7 | 2.43 | Pigment | 15.00 | A | 16.7 | B | A |
| Ex. 16 | Oji Paper | OK Top Coat Mat N | 81.4 | 4.23 | Pigment | 15.00 | A | 15.1 | B | A |
| Ex. 17 | Oji Paper | OK Trinity | 104.7 | 1.44 | Pigment | 15.00 | A | 36.4 | B | A |
| Ex. 18 | Oji Paper | OK Trinity Navi-V | 104.7 | 1.67 | Pigment | 15.00 | A | 24.0 | B | A |
| Ex. 19 | Oji Paper | OK Non-wrinkle DL | 72.3 | 1.64 | Pigment | 15.00 | A | 23.6 | B | A |
| Ex. 20 | Oji Paper | OK Kanefuji+ | 127.9 | 1.38 | Pigment | 15.00 | A | 44.7 | B | A |
| Ex. 21 | Oji Paper | SA Kanefuji+ | 127.9 | 1.00 | Pigment | 15.00 | A | 41.5 | B | A |
| Ex. 22 | Oji Paper | POD Gloss | 100 | 7.07 | Pigment | 15.00 | A | 26.4 | B | A |
| Ex. 23 | Oji Paper | New Age | 104.7 | 4.34 | Pigment | 15.00 | A | 9.9 | B | A |
| Ex. 24 | Oji Paper | Mirror Coat Platinum | 157 | 1.08 | Pigment | 15.00 | A | 60.0 | B | A |
| Ex. 25 | Gojo Paper | Glorious Peria S | 157 | 0.22 | Pigment | 15.00 | A | 54.7 | B | A |
| Ex. 26 | Daio Paper | S Utrillo Coat | 127.9 | 0.82 | Pigment | 15.00 | A | 34.7 | B | A |
| Ex. 27 | Daio Paper | Excel Super B | 60.2 | 7.05 | Pigment | 15.00 | A | 11.6 | B | B |
| Ex. 28 | Daio Paper | Excel Super B | 60.2 | 8.28 | Pigment | 15.00 | A | 9.6 | B | B |
| Ex. 29 | Daio Paper | Excel Super CA | 51.2 | 9.24 | Pigment | 15.00 | A | 10.0 | B | A |
| Ex. 30 | Daio Paper | Excel Super TC | 60.2 | 14.01 | Pigment | 15.00 | A | 9.2 | B | A |
| Ex. 31 | Daio Paper | Audrey | 99.6 | 0.98 | Pigment | 15.00 | A | 33.9 | B | A |
| Ex. 32 | Daio Paper | Kant Excel | 64 | 21.65 | Pigment | 15.00 | A | 5.9 | B | A |

**Table 1-2**

| | Maker | Bland | Basis Weight (g/m²) | Air Permeability (ml/min) | Coloring Material | Maximum Total Ink Amount | Image Blurring Rank | Glossiness (60°) | Glossiness Rank | Show-through Rank |
|---|---|---|---|---|---|---|---|---|---|---|
| Ex. 33 | Daio Paper | Green Excel B100 | 60.2 | 6.67 | Pigment | 15.00 | A | 13.4 | B | B |
| Ex. 34 | Daio Paper | High-quality White Utrillo | 127.9 | 1.51 | Pigment | 15.00 | A | 34.3 | B | A |
| Ex. 35 | Daio Paper | Picasso Coat C | 157 | 1.09 | Pigment | 15.00 | A | 59.7 | B | A |
| Ex. 36 | Daio Paper | Utrillo Gloss Mat | 157 | 4.51 | Pigment | 15.00 | A | 11.4 | B | A |
| Ex. 37 | Daio Paper | Utrillo Coat L | 98.8 | 2.46 | Pigment | 15.00 | A | 28.9 | B | A |
| Ex. 38 | Daio Paper | Utrillo Coat Atsumono | 186.1 | 2.48 | Pigment | 15.00 | A | 38.4 | B | A |
| Ex. 39 | Daio Paper | Utrillo Next | 108 | 4.41 | Pigment | 15.00 | A | 12.0 | B | A |
| Ex. 40 | Daio Paper | Utrillo Plus | 104.7 | 1.87 | Pigment | 15.00 | A | 26.1 | B | A |
| Ex. 41 | Hokuetsu Paper | New Mariest W | 157 | 0.50 | Pigment | 15.00 | A | 42.1 | B | A |
| Ex. 42 | Mitsubishi Paper | Dignity | 104.7 | 1.00 | Pigment | 15.00 | A | 37.7 | B | A |
| Ex. 43 | Mitsubishi Paper | New V Mat | 104.7 | 3.29 | Pigment | 15.00 | A | 16.0 | B | A |
| Ex. 44 | Mitsubishi Paper | Pearl Coat | 104.7 | 1.44 | Pigment | 15.00 | A | 36.6 | B | A |
| Ex. 45 | Mitsubishi Paper | Bista Gloss | 64 | 1.86 | Pigment | 15.00 | A | 23.7 | B | B |
| Ex. 46 | Mitsubishi Paper | Broad Gloss A | 115 | 2.47 | Pigment | 15.00 | A | 31.8 | B | A |
| Ex. 47 | Mitsubishi Paper | Broad Mat A | 90 | 5.37 | Pigment | 15.00 | A | 9.5 | B | A |
| Ex. 48 | Mitsubishi Paper | White New V Mat | 104.7 | 4.54 | Pigment | 15.00 | A | 15.7 | B | A |
| Ex. 49 | Mitsubishi Paper | White Pearl Coat N | 84.9 | 0.68 | Pigment | 15.00 | A | 39.1 | B | A |
| Ex. 50 | Oji Paper | SA Kanefuji+ | 127.9 | 1.00 | Pigment | 15.00 | B | 35.0 | B | A |
| Compara. Ex. 1 | Oji Paper | Kant Excelbal TL | 72.3 | 93.02 | Pigment | 15.00 | B | 2.6 | D | D |
| Compara. Ex. 2 | Oji Paper | Platon Bulky | 79.1 | 918.55 | Pigment | 15.00 | B | 1.6 | D | D |
| Compara. Ex. 3 | Oji Paper | Dante Comic | 64 | 218.80 | Pigment | 15.00 | B | 1.9 | D | D |
| Compara. Ex. 4 | Oji Paper | Comic Paper Sheet D | 64 | 260.10 | Pigment | 15.00 | B | 1.9 | D | D |
| Compara. Ex. 5 | Oji Paper | Comic Paper Sheet S | 64 | 394.60 | Pigment | 15.00 | B | 1.9 | D | D |
| Compara. Ex. 6 | Oji Paper | Rough paper for paperback books | 60.2 | 367.70 | Pigment | 15.00 | B | 1.9 | D | D |
| Compara. Ex. 7 | Ricoh | Test paper | 104.7 | 3.00 | Dye | 25.00 | D | 20.0 | B | D |
| Compara. Ex. 8 | Nippon Paper | Aurora Coat | 79.1 | 1.17 | Dye | 15.00 | D | 18.0 | B | D |
| Compara. Ex. 9 | Nippon Paper | Neptune | 127.9 | 2.04 | Dye | 15.00 | D | 4.0 | B | B |
| Compara. Ex. 10 | Nippon Paper | U-Lite | 127.9 | 4.31 | Dye | 15.00 | D | 1.0 | D | B |
| Compara. Ex. 11 | Daio Paper | Esprit Coat C | 157 | 2.74 | Dye | 15.00 | D | 50.7 | B | B |
| Compara. Ex. 12 | Daio Paper | OK Top Coat+ | 104.7 | 1.60 | Dye | 15.00 | D | 31.5 | B | D |
| Compara. Ex. 13 | Daio Paper | OK Kanefuii+ | 127.9 | 1.38 | Dye | 15.00 | D | 34.0 | B | B |
| Compara. Ex. 14 | Daio Paper | POD Gloss | 100 | 7.07 | Dye | 15.00 | D | 22.5 | B | B |
| Compara. Ex. 15 | Daio Paper | New Age | 104.7 | 4.34 | Dye | 15.00 | D | 5.0 | B | B |
| Compara. Ex. 16 | Daio Paper | Mirror Coat Platinum | 157 | 1.08 | Dye | 15.00 | D | 60.0 | B | B |

**Table 1-3**

| | Maker | Bland | Coat layer ablation amount (µm) | Basis Weight (g/m²) | Air Permeability (ml/min) | Coloring Material | Maximum Total Ink Amount | Image Blurring Rank | Glossiness (60°) | Glossiness Rank | Show-through Rank |
|---|---|---|---|---|---|---|---|---|---|---|---|
| Ex. 61 | Oji Paper | OK Top Coat+ | 0.3 | - | 2.57 | Pigment | 15.00 | A | 20.7 | B | A |
| Ex. 52 | Oji Paper | OK Top Coat+ | 0.5 | - | 2.86 | Pigment | 15.00 | A | 16.0 | B | A |
| Ex. 53 | Oji Paper | OK Top Coat+ | 0.8 | - | 3.81 | Pigment | 15.00 | A | 10.7 | B | A |
| Ex. 54 | Oji Paper | OK Top Coat+ | 1.0 | - | 4.17 | Pigment | 15.00 | A | 9.5 | B | A |
| Ex. 55 | Oji Paper | OK Top Coat+ | 1.5 | - | 4.02 | Pigment | 15.00 | A | 13.1 | B | A |
| Ex. 56 | Oji Paper | OK Top Coat+ | 1.9 | - | 4.16 | Pigment | 15.00 | A | 10.9 | B | A |
| Ex. 57 | Oji Paper | OK Top Coat+ | 2.3 | - | 4.65 | Pigment | 15.00 | A | 12.5 | B | A |
| Ex. 58 | Oji Paper | OK Top Coat+ | 2.5 | - | 4.75 | Pigment | 15.00 | A | 10.2 | B | A |
| Ex. 59 | Oji Paper | OK Top Coat+ | 3.1 | - | 4.8 | Pigment | 15.00 | A | 9.5 | B | A |
| Ex. 60 | Oji Paper | OK Top Coat+ | 3.8 | - | 4.75 | Pigment | 15.00 | A | 7.5 | B | A |
| Ex. 61 | Oji Paper | OK Top Coat+ | 4.4 | - | 5.83 | Pigment | 15.00 | A | 10.1 | B | A |
| Ex. 62 | Oji Paper | OK Top Coat+ | 5.0 | - | 6.68 | Pigment | 15.00 | A | 7.8 | B | A |
| Ex. 63 | Oji Paper | OK Top Coat+ | 5.6 | - | 6.92 | Pigment | 15.00 | A | 8.7 | B | B |
| Ex. 64 | Oji Paper | OK Top Coat+ | 6.3 | - | 8.33 | Pigment | 15.00 | A | 7.6 | B | A |
| Ex. 65 | Oji Paper | OK Top Coat+ | 7.5 | - | 11.51 | Pigment | 15.00 | A | 7.7 | B | A |
| Ex. 66 | Oji Paper | OK Top Coat+ | 8.8 | - | 21.43 | Pigment | 15.00 | A | 5.8 | B | A |
| Ex. 67 | Oji Paper | OK Top Coat+ | 10.0 | - | 25 | Pigment | 15.00 | A | 5.5 | B | B |
| Ex. 68 | Oji Paper | OK Top Coat+ | 10.3 | - | 30 | Pigment | 15.00 | A | 5.1 | B | B |
| Ex. 69 * | Oji Paper | OK Top Coat+ | 10.5 | - | 32 | Pigment | 15.00 | A | 4.7 | B | C |
| Ex. 70 * | Ricoh | Test Paper | | 104.7 | 3.00 | Pigment | 18.00 | D | 21.0 | D | B |
| Ex. 71 * | Ricoh | Test Paper | | 104.7 | 3.00 | Pigment | 22.00 | D | 24.0 | D | C |
| Ex. 72 | Ricoh | Test Paper | | 104.7 | 3.00 | Pigment | 13.00 | A | 17.0 | B | A |
| Ex. 73 | Oji Paper | OK Top Coat+ | | 104.7 | 3.00 | Pigment | 13.00 | A | 38.0 | B | A |
| Ex. 74 * | Oji Paper | OK Top Coat+ | | 104.7 | 3.00 | Pigment | 18.00 | D | 50.0 | D | A |

| | | | | | | | | | | | |
|---|---|---|---|---|---|---|---|---|---|---|---|
| * not according to the invention | | | | | | | | | | | |

**Table 2**

| | Maker | Bland | Basis Weight (g/m²) | Air Permeability (ml/mm) | Coloring Material | Maximum Total Ink Amount | Maximum Coloring Material Thickness | Ink Dry Time | Ink Dry Property | Smear Density | Smear Resistance Rank |
|---|---|---|---|---|---|---|---|---|---|---|---|
| Ex. 21 | Oji Paper | SA Kanefuji+ | 127.9 | 1.00 | Pigment | 15.00 | 2µm | 45 sec | Good | 0.03 | Good |
| Ex. 50 | *Oji Paper | SA Kanefuji+ | 127.9 | 1.00 | Pigment | 15.00 | 5µm | 180 sec | Poor | 0.13 | Poor |

| | | | | | | | | | | | |
|---|---|---|---|---|---|---|---|---|---|---|---|
| *not according to the invention | | | | | | | | | | | |

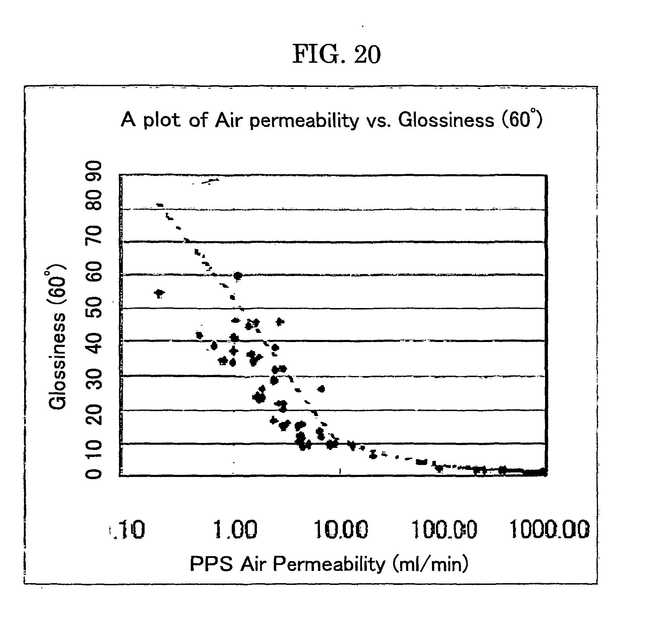

FIG. 20 is a plot of glossiness vs. air permeability described in the present invention with respect to Examples 4 to 50 and Comparative Examples 1 to 6; glossy images can be obtained when the air permeability is not greater than 100 ml/min.

### Industrial Applicability

The recording method of the present invention is capable of providing a so-called a "sharp image" - a high-quality, glossy image or character that is free from blurring, feathering and bleeding around its periphery - onto either a recording media with a texture similar to those of paper sheets for commercial printing or a paper sheet for commercial and publication printing that satisfies the requirement of the present invention. The recording method of the present invention can be suitably applied to an inkjet recording apparatus, inkjet recording method, and ink recorded matter.

The inkjet recording method of the present invention can be applied to various inkjet recording schemes, and can be suitably applied for instance to inkjet printers, facsimile machines, copying machines, and multi-use machines equipped with a printer, a facsimile and a copier.

## Claims

1. An inkjet recording method comprising:
printing an image onto a recording media using an ink containing a particulate coloring material,
wherein the recording media comprises a substrate and one or more coated layers formed on at least one surface of the substrate, the substrate being composed primarily of cellulose pulp,
wherein the recording media has an air permeability of 0.1 ml/min to 30 ml/min as measured using a Packer Print-Suif,
wherein printing is carried out at a deposited ink amount of 15 g/m² or less, and
wherein the thickness of coloring material deposited onto the recording media is 4µm or less.

2. The inkjet recording method according to claim 1, wherein the ink contains one of a resin emulsion and an energy-curable resin.

3. The inkjet recording method according to one of claims 1 and 2, wherein the ink has a surface tension of 25 mN/m or less

4. The inkjet recording method according to any one of claims 1 to 3, wherein the content of solid component in the ink is 4 wt% or more

5. The inkjet recording method according to any one of claims 1 to 4, wherein the content of silica or alumina hydrate contained in the outermost coated layer of the recording media is 30 wt% or less.

6. The inkjet recording method according to any one of claims 1 to 5, wherein the particulate coloring material contains pigment or colored fine particles, and the pigment or colored fine particles have a volume-average particle diameter of 0.01 µm to 0.16µm.

7. The inkjet recording method according to any one of claims 1 to 6, wherein the ink has a viscosity of 3 mPas(cps) or more at 25°C.

8. The inkjet recording method according to any one of claims 1 to 7, wherein the ink contains a water-soluble organic solvent, and the water-soluble organic solvent is one of a polyol compound (A) having 8 or more carbon atoms and a glycol ether

9. The inkjet recording method according to claim 8, wherein the polyol compound (A) is at least one selected from 2-ethyl-1,3-hexanediol and 2,2,4-trimethyl-1,3-pentanediol

10. The inkjet recording method According to any one of claims 1 to 9, wherein the ink contains a surfactant, and the surfactant is at least one selected from compounds of the following General Formula (I), (II), (III), (IV), (V), and (VI):
R¹-O-(CH₂CH₂O)hCH₂COOM General Formula (I)
where R¹ is an alkyl group, "h" is an integer of 3 to 12, and "M" is at least one selected from an alkali metal ion, a quaternary ammonium, a quaternary phosphonium and an alkanolamine; 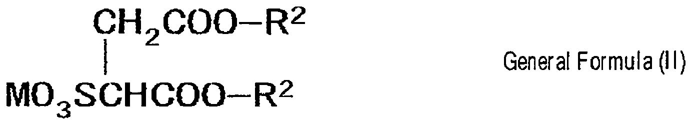 where R² is an alkyl group, and "M" is at least one selected from an alkali metal ion, a quaternary ammonium, a quaternary phosphonium and an alkanolamine; 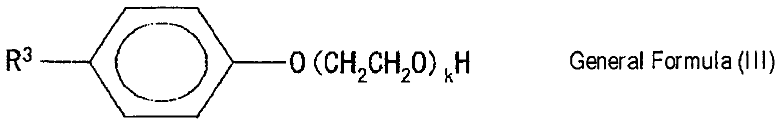 where R³ is a hydrocarbon group and "k" is an integer of 5 to 20;
R⁴-(C)CH₂CH₂) jOH General Formula (IV)
where R⁴ is a hydrocarbon group and "j" is an integer of 5 to 20; 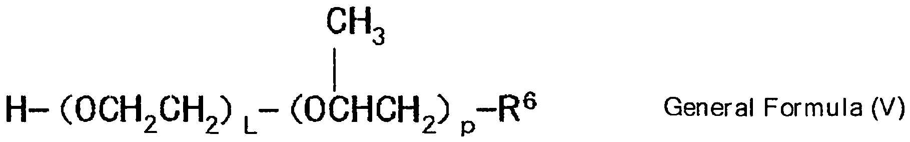 where R⁶ is a hydrocarbon group, and "L" and "p" are an integer of 1 to 20; and 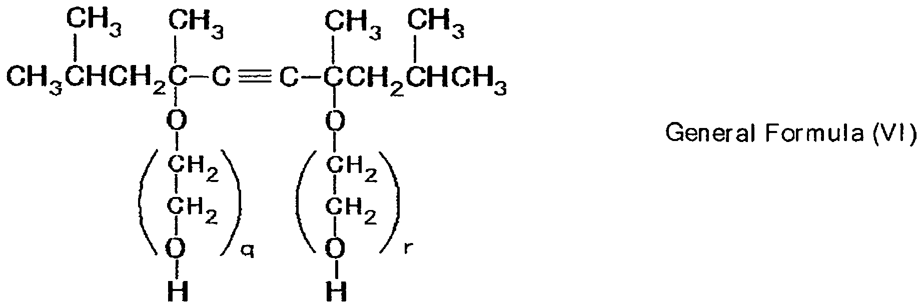 where "q" and "r" are an integer of 0 to 40,

11. The inkjet recording method according to any one of claims 1 to 10, wherein the ink contains a wetting agent, and the wetting agent is at least one selected from a polyol compound (B), a lactam compound, a urea compound, and a saccharide

## Patentansprüche

1. Tintenstrahl-Aufzeichnungsverfahren, umfassend:
Drucken eines Bildes auf einem Aufzeichnungsmedium unter Verwendung einer Tinte, die ein teilchenförmiges farbgebendes Material enthält,
wobei das Aufzeichnungsmedium ein Substrat und eine oder mehrere Beschichtungsschichten, die auf mindestens einer Oberfläche des Substrats gebildet sind, umfasst, wobei das Substrat hauptsächlich aus Zellstoff zusammengesetzt ist,
wobei das Aufzeichnungsmedium eine Luftdurchlässigkeit von 0,1 ml/min bis 30 ml/min, gemessen unter Verwendung eines Parker Print-Surf, aufweist,
wobei das Drucken mit einer abgeschiedenen Tintenmenge von 15 g/m² oder weniger durchgeführt wird, und
wobei die Dicke des farbgebenden Materials, das auf dem Aufzeichnungsmedium abgeschieden wird, 4 µm oder weniger beträgt.

2. Das Tintenstrahl-Aufzeichnungsverfahren nach Anspruch 1, wobei die Tinte eine Harzemulsion oder ein energiehärtbares Harz enthält.

3. Tintenstrahl-Aufzeichnungsverfahren nach einem der Ansprüche 1 und 2, wobei die Tinte eine Oberflächenspannung von 25 mN/m oder weniger aufweist.

4. Tintenstrahl-Aufzeichnungsverfahren nach irgendeinem der Ansprüche 1 bis 3, wobei der Gehalt an Feststoffkomponente in der Tinte 4 Gew.-% oder mehr beträgt.

5. Tintenstrahl-Aufzeichnungsverfahren nach irgendeinem der Ansprüche 1 bis 4, wobei der Gehalt an Siliciumdioxid oder Aluminiumoxidhydrat, der in der äußersten Beschichtungsschicht des Aufzeichnungsmediums enthalten ist, 30 Gew.-% oder weniger ist.

6. Tintenstrahlaufzeichnungsverfahren nach irgendeinem der Ansprüche 1 bis 5, wobei das teilchenförmige farbgebende Material Pigmente oder gefärbte feine Teilchen enthält, und das Pigment oder die gefärbten feinen Teilchen ein Volumenmittel des Teilchendurchmessers von 0,01 µm bis 0,16 µm aufweisen.

7. Tintenstrahl-Aufzeichnungsverfahren nach irgendeinem der Ansprüche 1 bis 6, wobei die Tinte eine Viskosität von 3 mPas (cps) oder mehr bei 25 °C aufweist.

8. Tintenstrahl-Aufzeichnungsverfahren nach irgendeinem der Ansprüche 1 bis 7, wobei die Tinte ein wasserlösliches organisches Lösungsmittel enthält und das wasserlösliche organische Lösungsmittel eines von einer Polyolverbindung (A) mit 8 oder mehr Kohlenstoffatomen und einem Glycolether ist.

9. Tintenstrahl-Aufzeichnungsverfahren nach Anspruch 8, wobei die Polyolverbindung (A) mindestens eine ausgewählt aus 2-Ethyl-1,3-hexandiol und 2,2,4-Trimethyl-1,3-pentandiol ist.

10. Tintenstrahl-Aufzeichnungsverfahren nach irgendeinem der Ansprüche 1 bis 9, wobei die Tinte einen oberflächenaktiven Stoff enthält und der oberflächenaktive Stoff mindestens einer ausgewählt aus Verbindungen der folgenden allgemeinen Formeln (I), (II), (III), (IV), (V) und (VI) ist:
R¹-O-(CH₂CH₂O) h CH₂COOM allgemeine Formel (I)
worin R¹ eine Alkylgruppe ist, "h" eine ganze Zahl von 3 bis 12 ist und "M" mindestens eines ausgewählt aus einem Alkalimetallion, einem quaternären Ammonium, einem quaternären Phosphonium und einem Alkanolamin ist; 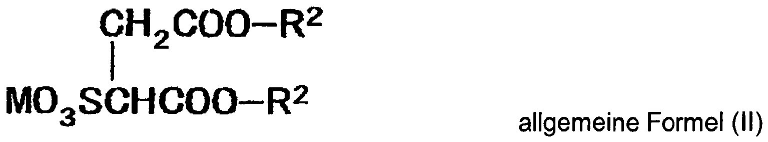 worin R² eine Alkylgruppe ist und "M" mindestens eines ausgewählt aus einem Alkalimetallion, einem quaternären Ammonium, einem quaternären Phosphonium und einem Alkanolamin ist; 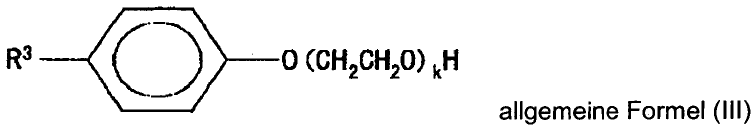 worin R³ eine Kohlenwasserstoffgruppe ist und "k" eine ganze Zahl von 5 bis 20 ist;
R⁴-(OCH₂CH₂)jOH allgemeine Formel (IV)
worin R⁴ eine Kohlenwasserstoffgruppe ist und "j" eine ganze Zahl von 5 bis 20 ist; 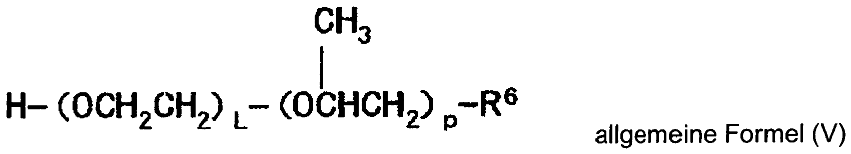 worin R⁶ eine Kohlenwasserstoffgruppe ist und "L" und "p" eine ganze Zahl von 1 bis 20 sind; und 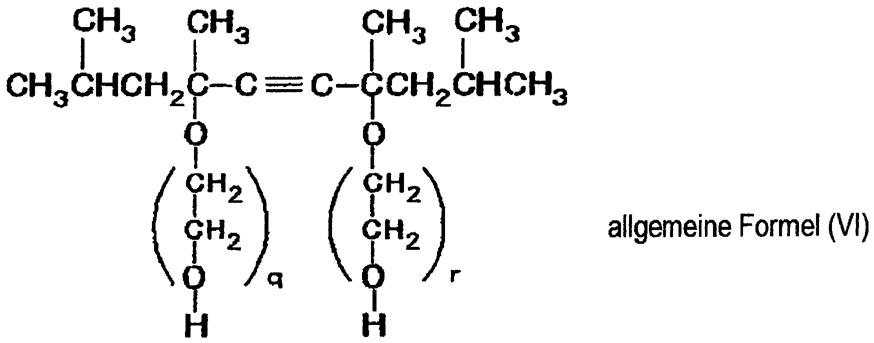 worin "q" und "r" eine ganze Zahl von 0 bis 40 sind.

11. Tintenstrahl-Aufzeichnungsverfahren nach irgendeinem der Ansprüche 1 bis 10, wobei die Tinte ein Benetzungsmittel enthält und das Benetzungsmittel mindestens eines ausgewählt aus einer Polyolverbindung (B), einer Lactamverbindung, einer Harnstoffverbindung und einem Saccharid ist.

## Revendications

1. Procédé d'enregistrement par jet d'encre comprenant :
l'impression d'une image sur un support d'enregistrement au moyen d'une encre contenant une matière colorante particulaire,
où le support d'enregistrement comprend un substrat et une ou plusieurs couches appliquées en revêtement formées sur au moins une surface du substrat, le substrat étant composé principalement de pâte de cellulose,
où le support d'enregistrement a une perméabilité à l'air de 0,1 ml/min à 30 ml/min telle qu'elle est mesurée au moyen d'un Parker Print-Surf,
où l'impression est réalisée à une quantité d'encre déposée de 15 g/m² ou moins, et
où l'épaisseur de matière colorante déposée sur le support d'enregistrement est 4 µm ou moins.

2. Procédé d'enregistrement par jet d'encre selon la revendication 1, où l'encre contient l'une d'une émulsion de résine et d'une résine durcissable avec de l'énergie.

3. Procédé d'enregistrement par jet d'encre selon l'une des revendications 1 et 2, où l'encre a une tension superficielle de 25 mN/m ou moins.

4. Procédé d'enregistrement par jet d'encre selon l'une quelconque des revendications 1 à 3, où la teneur de composant solide dans l'encre est 4 % en poids ou plus.

5. Procédé d'enregistrement par jet d'encre selon l'une quelconque des revendications 1 à 4, où la teneur de silice ou d'hydrate d'alumine contenue dans la couche appliquée en revêtement la plus externe du support d'enregistrement est 30 % en poids ou moins.

6. Procédé d'enregistrement par jet d'encre selon l'une quelconque des revendications 1 à 5, où la matière colorante particulaire contient un pigment ou de fines particules colorées, et le pigment ou les fines particules colorées ont un diamètre de particule moyen en volume de 0,01 µm à 0,16 µm.

7. Procédé d'enregistrement par jet d'encre selon l'une quelconque des revendications 1 à 6, où l'encre a une viscosité de 3 mPas (cps) ou plus à 25°C.

8. Procédé d'enregistrement par jet d'encre selon l'une quelconque des revendications 1 à 7, où l'encre contient un solvant organique soluble dans l'eau, et le solvant organique soluble dans l'eau est l'un d'un composé polyol (A) ayant 8 ou plus atomes de carbone et d'un éther de glycol.

9. Procédé d'enregistrement par jet d'encre selon la revendication 8, où le composé polyol (A) est au moins un choisi parmi le 2-éthyl-1,3-hexanediol et le 2,2,4-triméthyl-1,3-pentanediol.

10. Procédé d'enregistrement par jet d'encre selon l'une quelconque des revendications 1 à 9 où l'encre contient un tensioactif, et le tensioactif est au moins un choisi parmi les composés des formules générales (I), (II), (III), (IV), (V) et (VI) suivantes :
R¹-O-(CH₂CH₂O)hCH₂COOM Formule générale (I)
où R¹ est un groupe alkyle, "h" est un entier de 3 à 12, et "M" est au moins un choisi parmi un ion de métal alcalin, un ammonium quaternaire, un phosphonium quaternaire et une alcanolamine ; 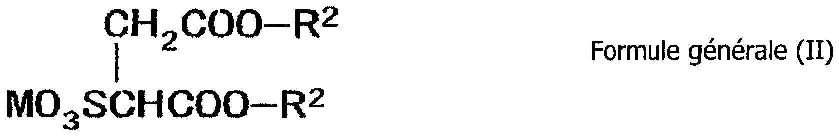 où R² est un groupe alkyle et "M" est au moins un choisi parmi un ion de métal alcalin, un ammonium quaternaire, un phosphonium quaternaire et une alcanolamine ; 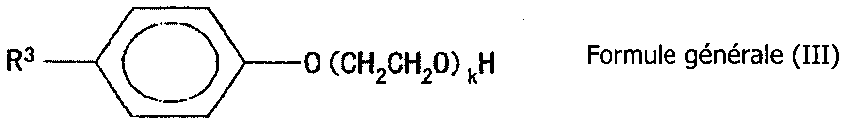 où R³ est un groupe hydrocarboné et "k" est un entier de 5 à 20 ;
R⁴-(OCH₂CH₂)jOH Formule générale (IV)
où R⁴ est un groupe hydrocarboné et "j" est un entier de 5 à 20 ; 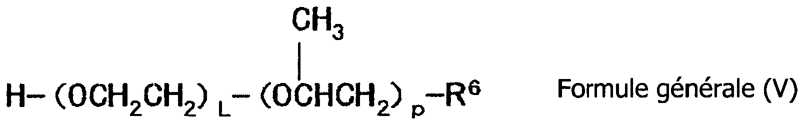 où R⁶ est un groupe hydrocarboné et "L" et "p" sont un entier de 1 à 20 ; et 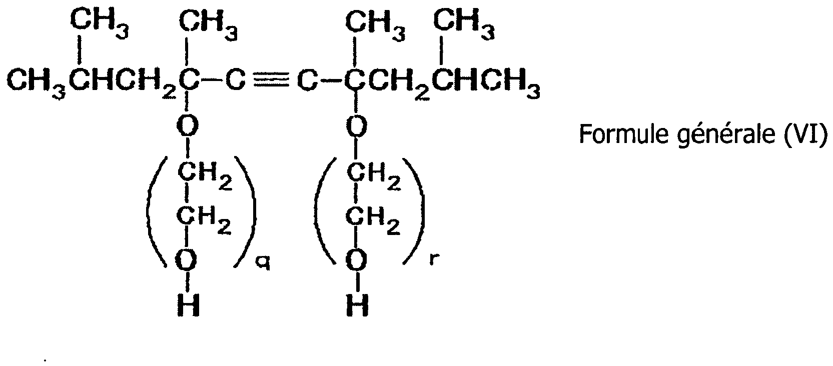 où "q" et "r" sont un entier de 0 à 40.

11. Procédé d'enregistrement par jet d'encre selon l'une quelconque des revendications 1 à 10 où l'encre contient un agent mouillant, et l'agent mouillant est au moins un choisi parmi un composé polyol (B), un composé lactame, un composé urée et un saccharide.
